(19) Europäisches Patentamt
European Patent Office
Office européen des brevets

(11) **EP 3 363 576 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **17207229.0**

(22) Anmeldetag: **14.12.2017**

(51) Internationale Patentklassifikation (IPC):
*B23K 26/361* (2014.01)    *B23K 101/34* (2006.01)
*B23K 103/04* (2006.01)    *B41M 5/26* (2006.01)
*B44C 1/22* (2006.01)    *B23K 26/12* (2014.01)
*B23K 26/322* (2014.01)    *B23K 26/14* (2014.01)
*B23K 26/082* (2014.01)    *B23K 26/0622* (2014.01)
*B23K 26/60* (2014.01)    *B23K 26/352* (2014.01)

(52) Gemeinsame Patentklassifikation (CPC):
**B23K 26/60; B23K 26/0624; B23K 26/082;
B23K 26/126; B23K 26/14; B23K 26/322;
B23K 26/355; B23K 26/361; B41M 5/262;**
B23K 2101/34; B23K 2103/04; B44C 1/22

(54) **VERFAHREN UND ANLAGE ZUR KENNZEICHNUNG UND/ODER MARKIERUNG FEUERVERZINKTER BAUTEILE UND DAMIT HERGESTELLTE BAUTEILE**

METHOD AND SYSTEM FOR IDENTIFICATION AND/OR MARKING OF HOT-DIP GALVANIZED COMPONENTS AND COMPONENTS MANUFACTURED WITH THEM

PROCEDE ET SYSTEME D'IDENTIFICATION ET/OU DE MARQUAGE DE COMPOSANTS GALVANISES A CHAUD ET DE COMPOSANTS FABRIQUÉS AVEC EUX

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD TN**

(30) Priorität: **17.01.2017   DE 102017000347
28.03.2017   DE 102017106672**

(43) Veröffentlichungstag der Anmeldung:
**22.08.2018   Patentblatt 2018/34**

(73) Patentinhaber: **Fontaine Holdings NV
3530 Houthalen (BE)**

(72) Erfinder:
• **PINGER, Thomas
45721 Haltern am See (DE)**
• **BAUMGÜRTEL, Lars
48301 Nottuln (DE)**

(74) Vertreter: **Von Rohr Patentanwälte Partnerschaft mbB
Rüttenscheider Straße 62
45130 Essen (DE)**

(56) Entgegenhaltungen:
EP-A1- 1 209 245        EP-A1- 2 829 757
EP-A2- 1 975 340        CA-A1- 2 379 397
DE-U1-202014 101 805    US-A- 5 860 204
US-A1- 2015 049 593    US-A1- 2016 201 184

**Beschreibung**

Die vorliegende betrifft das technische Gebiet der Kennzeichnung und/oder Markierung von verzinkten, insbesondere feuerverzinkten (d. h. schmelztauchverzinkten) (Metall-)Bauteilen (d. h. eisenbasierten bzw. eisenhaltigen Bauteilen, insbesondere stahlbasierten bzw. stahlhaltigen Bauteilen, vorzugsweise Stahlbauteilen), vorzugsweise für die Bauindustrie sowie die Automobil- bzw. Kraftfahrzeugindustrie, aber auch für andere technische Anwendungsgebiete (z. B. für die Bauindustrie, den Bereich des allgemeinen Maschinenbaus, die Elektroindustrie etc.).

Insbesondere betrifft die vorliegende Erfindung ein Verfahren zur Kennzeichnung und/oder Markierung eines verzinkten, insbesondere feuerverzinkten (d. h. schmelztauchverzinkten) (Metall-)Bauteils, insbesondere Stahlbauteils, sowie ein auf diese Weise erhältliches Produkt, d. h. also ein mit einer Kennzeichnung und/oder Markierung versehenes verzinktes, insbesondere feuerverzinktes (d. h. schmelztauchverzinktes) (Metall-)Bauteil, insbesondere Stahlbauteil.

Schließlich betrifft die vorliegende Erfindung eine Anlage zur Herstellung eines mit einer Kennzeichnung und/oder Markierung versehenen verzinkten, insbesondere feuerverzinkten (d. h. schmelztauchverzinkten) (Metall-)Bauteils, insbesondere Stahlbauteils, insbesondere eine Anlage zur Herstellung eines erfindungsgemäßen mit einer Kennzeichnung und/oder Markierung versehenen verzinkten, insbesondere feuerverzinkten (d. h. schmelztauchverzinkten) (Metall-)Bauteils.

Die Kennzeichnung bzw. Markierung von Bauteilen hat in den letzten Jahren eine zunehmende Bedeutung erhalten. Hierbei spielen unterschiedliche Überlegungen eine besondere Rolle: Zum einen geht es um die Rückverfolgbarkeit, d. h. das Nachhalten von produktionsrelevanten Informationen entlang der Fertigungskette im Rahmen der Qualitätssicherung für den Produzenten; zum anderen geht es um die Bereitstellung von produktspezifischen Informationen für den Anwender der Produkte. Beispielsweise ist Ziel des sogenannten Upstream-Tracing die aufwärts gerichtete Rückverfolgbarkeit vom Verbraucher zum Erzeuger, insbesondere die aufwärts gerichtete Verfolgung von Produktionsprozessparametern vom Verbraucher zum Erzeuger; bei Problemen in nachfolgenden Prozessen oder in der Anwendung von Produkten können Ursachen bzw. Verursacher schnell und gezielt ermittelt werden.

Darüber hinaus kann über das Einlesen des Produktstatus eine vollständige Verfolgung und Überwachung des Fertigungsprozesses und des Materialflusses innerhalb der Fertigung in Echtzeit erfolgen. Dies ist insbesondere in Anbetracht der fortschreitenden Digitalisierung der Fertigungskette oftmals unumgänglich.

Die Art der geforderten Markierungen reicht vom einfachen Schriftbild über Barcodes, 2D-Codes, QR-Codes bis hin zu Data-Matrix-Codes. Für die Markierung von Produkten gibt es eine Vielzahl von verschiedenen Systemen, z. B. mittels Typenschildern, Aufklebern, Aufdrucken (z. B. Tintendruck), Prägungen (z. B. Schlagzahlen oder Lasertechnik) oder Anlassfarben (z. B. laserinduziert bei Kunststoffen oder Metallen). Um die Flexibilität bei verschiedenen Kundenanforderungen erreichen zu können, insbesondere im Bereich von Großserien mit hohen Stückzahlen und/oder hoher Teilevarianz, müssen die Markierungssysteme zudem programmierbar sein, um die entsprechende Markierung fokussiert bzw. kunden- und/oder produktspezifisch aufbringen zu können. Vor diesem Hintergrund sind analoge Markierungselemente, wie Schilder, Aufkleber oder Schlagzahlen, nur noch sehr bedingt oder gar nicht mehr einsetzbar.

Im Bereich von rauheren Umgebungsbedingungen, wie z. B. im Bauwesen oder auch im Nutzfahrzeugbau, d. h. in Umgebungen mit erhöhter korrosiver und/oder mechanischer Belastung, werden besondere Anforderungen an die Markierungen gestellt. So müssen die Markierungen beispielsweise, um den gewünschten Nutzen zu bringen, über die Lebensdauer der Bauteile und unter den gegebenen Randbedingungen in hohem Maße beständig gegenüber den vorherrschenden Belastungen sein. Als Korrosionsschutzsystem für Werkstücke unter derartigen Randbedingungen kommt sehr häufig eine Feuerverzinkung (Schmelztauchverzinkung) zum Einsatz, welche aufgrund der metallurgischen Verbindung des Zinküberzugs mit dem Grundwerkstoff sowie der hohen Schutzwirkung von Zink insbesondere in besonderem Maße geeignet ist und einen Korrosionsschutz über viele Jahrzehnte gewährleistet. Nochmals erhöhte Anforderungen werden an die Markierungstechnologie gestellt, wenn die Kennzeichnungen nicht auf bzw. in Vollmaterial appliziert werden, sondern auf bzw. in Korrosionsschutzschichten, welche als Beschichtungen oder Überzüge auf das Vollmaterial aufgebracht sind, um dieses vor Korrosion zu schützen. Im Gegensatz zu Vollmaterialien, bei welchen das Auf- bzw. Einbringen einer Markierung mittels Kennzeichnung lediglich einen relativ geringen thermischen und/oder mechanischen Einfluss bis in eine Tiefe von wenigen Zehntel Millimeter und somit keinen nennenswerten Einfluss auf die Funktion des entsprechenden Bauteils hat, muss die Markierungstechnologie im Fall von Korrosionsschutzschichten insbesondere berücksichtigen, dass derartige Schichten im Allgemeinen nur sehr dünn ausgebildet sind und entsprechend sensibel auf thermische und oder mechanische Beeinflussungen reagieren und gegebenenfalls negativen Einfluss auf die Funktion der Beschichtung bzw. des Überzuges nehmen können.

Für alle mittels einer Drucktechnik applizierten Markierungen stellt hier insbesondere die Haftfestigkeit der Markierungstinte auf dem Untergrund, im Allgemeinen insbesondere eine organische Beschichtung oder eine verzinkte Oberfläche, die größte Herausforderung dar. Aufgrund der allein auf Adhäsionskräften basierenden Verbindung der Druckfarbe mit dem Untergrund sind derartige Systeme prinzipiell anfällig gegenüber mechanischen Belastungen, wie sie z. B. bei der Montage von Bauteilen oder infolge von Abrasion, Steinschlag etc. während der Nutzungsphase auftreten können. Durch derartige Schädigungen wird dann der Unterwanderung der aufgedruckten Markierungsbeschichtung Vorschub geleistet, welche mittel- und langfristig oftmals in einem Abblättern der Markierung endet, so dass der Nutzen derartiger Systeme nicht dauerhaft gewährleistet werden kann.

Bei den üblichen Markierungen unter Materialabtrag (z. B. Markierung mittels Laserablation) tritt systembedingt eine Schwächung des Korrosionsschutzes auf, da die Markierung in die Korrosionsschutzschicht eingearbeitet wird, d. h. der Abtrag (z. B. mittels Laserablation) zerstört lokal im Bereich der Markierung zumindest einen Teil des Korrosionsschutzsystems. Da der Korrosionsschutz eines gesamten Bauteils nur so gut sein kann wie an seiner schwächsten Ausführungsstelle, wird durch eine derartige mittels Materialabtrag (z. B. Laserablation) erzeugte Markierung die Korrosionsschutzleistung am Bauteil signifikant reduziert. Um das Niveau der ungestörten Korrosionsschutzschicht wieder zu erreichen, ist daher eine Nachbearbeitung des Markierungsbereichs erforderlich. Hierfür ist es denkbar, eine zusätzliche Beschichtung mit Korrosionsschutzwirkung auf den Bereich der Markierung zu applizieren. Nachteilig an dieser Methode ist, dass der zusätzliche Beschichtungsprozess sowohl aufwendig ist als auch in nur bedingtem Maße eine dauerhafte Lösung darstellen kann, da auch hier die Haftfestigkeit der Beschichtung der dauerhaftigkeitsbeschränkende Faktor ist. Es gelten daher die gleichen Einschränkungen, wie zuvor bei der Druckmethode beschrieben.

Markierungen, welche mittels Anlassen des Grundwerkstoffs einen farblichen Kontrast und somit eine lesbare Kennzeichnung erzeugen, sind vornehmlich auf Stahl, insbesondere Edelstahl, Titan sowie Kunststoffen zu finden. Aufgrund der Wärmemenge, welche durch den Laser sehr lokal aufgebracht werden muss, um die notwendige Oberflächenreaktion und damit die Kontrasterzeugung zu generieren, ist diese Methode jedoch nicht für dünne Materialien oder Schichten (wie z. B. Korrosionsschutzschichten) anwendbar, und zwar unabhängig davon, ob es sich um Vollmaterial oder Beschichtungen handelt (siehe hierzu auch den Internetlink "http://www.caliberengraving.com/marking_options.html").

Die EP 2 829 757 A1 betrifft einen beschrifteten Lagerring, welcher einen Ringkörper und eine auf den Ringkörper wenigstens bereichsweise aufgebrachte Beschichtung aus einem Material aufweist, welches sich vom Material des Ringkörpers unterscheidet und Zink oder Zink und Eisen oder Zink und Nickel enthält, wobei in der Beschichtung des Lagerrings eine mittels eines Laserstrahls erzeugte Beschriftung derart ausgebildet ist, dass die Beschichtung am Ort der Beschriftung durchgehend eine Restdicke aufweist, und weiterhin betrifft dieses Dokument ein Lager mit dem beschrifteten Lagerring und ein entsprechendes Verfahren zur Beschriftung des Lagerrings.

Weiterhin betrifft die EP 1 975 340 A2, welche die Basis für die Oberbegriffe der Ansprüche 1 und 6 bildet, eine verzinkte längenverstellbare Stahlrohrstütze mit einem hohen Außenprofil und einem Innenprofil, welches an der Außenwand optisch wirkende, durch Laserbeschriftung erzeugte Markierungen aufweist, sowie ein Verfahren zur Herstellung einer solchen Stahlrohrstütze.

Die CA 2 379 397 A1 betrifft ein Verfahren und eine Vorrichtung zur Aufbringung einer permanenten Markierung auf einem transparenten Träger (wie z. B. Glas, Plexiglas, Plastik oder deren Kombinationen) unter Verwendung von laserinduzierter Gasphasenabscheidung, wobei hierzu Material aus einem Markierungsmedium (nämlich ein Metall aus der Gruppe von Aluminium, Chrom, Gold, Blei, Molybdän, Nickel, Silber, Zinn, Titan, Wolfram oder deren Legierungen) mit Hilfe eines Lasers verdampft und dann auf dem transparenten Träger abgeschieden wird, wobei die Markierungen unter Verwendung eines optischen Lesegeräts oder eines Sensors auslesbar sein sollen.

Die US 2016/201184 A1 betrifft eine Anlage und ein Verfahren zur Modifizierung der Oberflächenchemie und des Oberflächenprofils eines Materials unter Verwendung eines gepulsten Lasers, wobei ganze Materialbereiche in gleicher Weise modifiziert werden sollen.

Die EP 1 209 245 A1 betrifft ein spezielles Flussmittel für die Feuerverzinkung und dessen Verwendung in Feuerverzinkungsprozessen.

Weiterhin betrifft die DE 20 2014 101 805 U1 eine Vorrichtung zur Farbmarkierung von Metalloberflächen.

Die US 2015/049593 A1 betrifft ein Verfahren zum Gravieren eines Bauteils durch Anwendung eines Laserstrahls, dessen Pulse weniger als 1 Pikosekunde andauern, so dass Material des Bauteils bearbeitet oder entfernt wird und eine Farbgebung der Oberfläche des Bodens des Bearbeitungsbereichs erhalten wird.

Schließlich betrifft die US 5,860,204 A ein kontinuierliches Verfahren zum Formen eines gefalzten Metallrohrs aus einem sich kontinuierlich bewegenden Metallband, wobei das Rohr eine äußere Oberfläche aufweist, welche mit einer schützenden Metallbeschichtung beschichtet ist, welche eine Schmelztemperatur aufweist, die wesentlich niedriger ist als die Schmelztemperatur des Metallrohrs, umfassend die folgenden Schritte: kontinuierliches Walzen und Formen des Metallbandes zu einem rohrförmigen Band mit beabstandeten benachbarten Seitenkanten; Erwärmen, Schmelzen und kontinuierliches integrales Verbinden der Kanten des rohrförmigen Bandes, wodurch ein kontinuierliches Metallrohr mit einer durchgehenden Längsnaht gebildet wird, welche durch die verbundenen Kanten gebildet ist; Anordnen der Naht in einem unteren Abschnitt des Rohres; kontinuierliches Eintauchen des Rohrs in geschmolzenes Beschichtungsmetall, wobei die Naht in dem unteren Abschnitt des Rohrs angeordnet ist; Entfernen des Rohrs aus dem geschmolzenen Beschichtungsmetall, wobei das geschmolzene Beschichtungsmetall nach unten über die Naht fließt und die Naht vollständig beschichtet; und Abkühlen des geschmolzenen Beschichtungsmetalls unter die Schmelztemperatur des geschmolzenen Beschichtungsmetalls, wodurch ein gefalztes Metallrohr gebildet wird, dessen Außenfläche mit dem die Naht bedeckenden Beschichtungsmetall beschichtet ist.

Somit wird ersichtlich, dass mit den bestehenden Technologien keine dauerhafte Markierung auf hochbelasteten, insbesondere verzinkten (z. B. feuer- bzw. schmelztauchverzinkten) Bauteilen gewährleistet werden kann und/oder die Hauptfunktion der Verzinkungsschicht dieser verzinkten Bauteile (d. h. nämlich der Korrosionsschutz) signifikant beeinträchtigt wird.

Folglich zielt die erfindungsgemäße Aufgaben- bzw. Problemstellung insbesondere darauf ab, eine dauerhafte Kennzeichnung bzw. Markierung an bzw. auf verzinkten Komponenten bzw. (Metall-)Bauteilen zu ermöglichen.

Das der vorliegenden Erfindung zugrundeliegende Problem besteht daher insbesondere in der Bereitstellung eines Verfahrens zur Erzeugung einer vorzugsweise dauerhaften Kennzeichnung und/oder Markierung von verzinkten, insbesondere feuerverzinkten (Metall-)Bauteilen (wie insbesondere Stahlbauteilen), sowie einer betreffenden Anlage zur Durchführung eines solchen Verfahrens, wobei die zuvor geschilderten Nachteile des Standes der Technik zumindest weitestgehend vermieden oder aber wenigstens abgeschwächt werden sollen.

Insbesondere soll ein solches Verfahren bzw. eine solche Anlage bereitgestellt werden, welche(s) gegenüber herkömmlich betriebenen Kennzeichnung-/ Markierungsverfahren bzw. -vorrichtungen und -anlagen eine verbesserte Prozessökonomie und/oder einen effizienteren, insbesondere flexibleren und/oder zuverlässigeren, insbesondere weniger fehleranfälligen Prozessablauf ermöglichen soll(en).

Insbesondere soll ein solches Verfahren bzw. eine solche Anlage eine zuverlässige wie gleichzeitig effiziente Möglichkeit bieten, eine insbesondere dauerhafte (d. h. permanente) Kennzeichnung und/oder Markierung an bzw. auf bzw. in verzinkten, insbesondere feuerzinkten Metallbauteilen (z. B. Stahlbauteilen) zu erzeugen, ohne die gewünschten Eigenschaften der Verzinkungsschicht, wie insbesondere deren Korrosionsbeständigkeit, deren mechanische Beständigkeit etc., zumindest im Wesentlichen zu beeinträchtigen; vor allem sollen die protektiven Eigenschaften der Verzinkungsschicht nicht verringert werden, insbesondere keine Schwächung der Verzinkungsschicht (z. B. durch Ablation bzw. Abtrag im Rahmen der Markierung) eintreten. Gleichzeitig aber soll eine Kennzeichnung und/oder Markierung mit hoher Dauerhaftigkeit erzeugt werden, welche auch gegenüber extremen Einflüssen (wie z. B. korrosiven oder mechanisch anspruchsvollen, insbesondere abrasiven Bedingungen, wie beispielsweise Bewitterung, Säureeinwirkung, mechanische Belastung etc.) beständig ist. Insbesondere soll ein solches Verfahren bzw. eine solche Anlage ohne aufwendige Nachbehandlung der Kennzeichnung bzw. Markierung auskommen.

Zur Lösung des zuvor geschilderten Problems schlägt die vorliegende Erfindung - gemäß einem **ersten** Aspekt der vorliegenden Erfindung - ein Verfahren zur Kennzeichnung und/oder Markierung eines feuerverzinkten (d. h. schmelztauchverzinkten) Metallbauteils, insbesondere Stahlbauteils, gemäß Anspruch 1 vor; weitere, insbesondere besondere und/oder vorteilhafte Ausgestaltungen des erfindungsgemäßen Verfahrens sind Gegenstand der diesbezüglichen Verfahrensunteransprüche.

Weiterhin betrifft die vorliegende Erfindung - gemäß einem **zweiten** Aspekt der vorliegenden Erfindung - ein nach dem erfindungsgemäßen Verfahren erhältliches, mit einer Kennzeichnung und/oder Markierung feuerverzinktes (d. h. schmelztauchverzinktes) Metallbauteils, insbesondere Stahlbauteil, gemäß dem diesbezüglichen unabhängigen Produktanspruch; weitere, insbesondere besondere und/oder vorteilhafte Ausgestaltungen dieses Erfindungsaspekts sind Gegenstand des diesbezüglichen Produktunteranspruchs.

Schließlich betrifft die vorliegende Erfindung - gemäß einem **dritten** Aspekt der vorliegenden Erfindung - eine Anlage zur Herstellung eines mit einer Kennzeichnung und/oder Markierung versehenen feuerverzinkten (d. h. schmelztauchverzinkten) Metallbauteils, insbesondere Stahlbauteils, gemäß dem unabhängigen Anlage-Anspruch; weitere, insbesondere besondere und/oder vorteilhafte Ausgestaltungen dieses Erfindungsaspekts sind Gegenstand der diesbezüglichen Anlage-Unteransprüche.

Es versteht sich bei den nachfolgenden Ausführungen von selbst, dass Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in Bezug auf die übrigen Erfindungsaspekte entsprechend gelten, ohne dass dies einer gesonderten Erwähnung bedarf.

Bei allen nachstehend genannten relativen bzw. prozentualen gewichtsbezogenen Angaben, insbesondere relativen Mengen- oder Gewichtsangaben, ist weiterhin zu beachten, dass diese im Rahmen der vorliegenden Erfindung vom Fachmann derart auszuwählen sind, dass sie sich in der Summe unter Einbeziehung aller Komponenten bzw. Inhaltsstoffe, insbesondere wie nachfolgend definiert, stets zu 100 % bzw. 100 Gew.-% ergänzen bzw. addieren; dies versteht sich aber für den Fachmann von selbst.

Im Übrigen gilt, dass der Fachmann - anwendungsbezogen oder aber einzelfallbedingt - von den nachfolgend angeführten Bereichsangaben erforderlichenfalls abweichen kann, ohne dass er den Rahmen der vorliegenden Erfindung verlässt.

Zudem gilt, dass alle im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten** Aspekt der vorliegenden Erfindung - ist somit ein Verfahren zur Kennzeichnung und/oder Markierung eines feuerverzinkten Metallbauteils, insbesondere Stahlbauteils, wobei das feuerverzinkte Metallbauteil ein eisenbasiertes Grundmaterial, vorzugsweise Stahl, und eine auf dem Grundmaterial aufgebrachte Verzinkungsschicht aufweist, wobei das verzinkte Metallbauteil mit einer dauerhaften Markierung versehen wird, wobei die Verzinkungsschicht selektiv nur in einem vorgegebenen Bereich der zu erzeugenden Markierung laserinduziert unter Einwirkung von Laserstrahlung einer chemischen Reaktion mit mindestens einem Reaktionsgas unterzogen wird, so dass selektiv nur im Bereich der Markierung eine Umsetzung der Verzinkungsschicht erfolgt und das resultierende Umsetzungsprodukt der Verzinkungsschicht die dauerhafte Markierung ausbildet,

wobei die Erzeugung der dauerhaften Markierung und die Umsetzung der Verzinkungsschicht zumindest im Wesentlichen ohne Materialabtrag der Verzinkungsschicht erfolgt,

wobei bei der Erzeugung der dauerhaften Markierung die Verzinkungsschicht selektiv nur in einem vorgegebenen Bereich der zu erzeugenden Markierung mit einem gepulsten Laserstrahl ein- oder mehrmals auf solche Weise abgetastet wird, dass benachbarte Lichtflecke des Laserstrahls lückenlos aneinanderstoßen oder sich überlappen,

wobei die Erzeugung der dauerhaften Markierung und die Umsetzung der Verzinkungsschicht derart erfolgt, dass die Verzinkungsschicht im Bereich der Markierung nicht bis zum unterliegenden Grundmaterial umgesetzt wird,

wobei das im Bereich der Markierung gebildete Umsetzungsprodukt der Verzinkungsschicht ausgewählt ist aus der Gruppe von Oxiden, Nitriden, Carbonaten und/oder Boriden des Zinks sowie gegebenenfalls weiterer in der Verzinkungsschicht vorhandener Metalle und

wobei die Reaktion der Verzinkungsschicht im Bereich der anzubringenden Markierung laserinduziert unter Einwirkung von Laserstrahlung erfolgt, insbesondere mit gepulster Laserstrahlung, wobei die folgende Bedingung eingehalten wird:

$$0{,}075 \leq \text{Epsilon} \leq 2.275$$

mit

$$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

worin:

$P_p$:    Impulsspitzenleistung der austretenden Laserstrahlung [kW]
$P_m$:    mittlere Leistung der austretenden Laserstrahlung [W]
t:     Impulslänge der Laserimpulse [ns],
f:     Repetitionsrate der Laserimpulse [kHz]
v:     Abtastgeschwindigkeit an der Oberfläche der Verzinkungsschicht [mm/s]
d:     Durchmesser des Laserstrahls am Werkstück [μm]
α:     Absorption der Laserstrahlung der bestrahlten Verzinkungsschicht [%] bei Normalbedingungen
λ:     Wellenlänge der Laserstrahlung [nm],
$T_v$:    Siedepunkt der Verzinkungsschicht [K] bei Normaldruck
$c_p$:    spezifische Wärmekapazität der Verzinkungsschicht [J/kg·K] bei Normalbedingungen
κ:     spezifische Wärmeleitfähigkeit der Verzinkungsschicht [W/m·K] bei Normalbedingungen.

Im Rahmen der vorliegenden Erfindung erfolgt die Erzeugung oder Anbringung der dauerhaften Markierung und/oder die Umsetzung der Verzinkungsschicht zumindest im Wesentlichen ohne Materialabtrag der Verzinkungsschicht. Auf diese Weise bleiben die protektiven Eigenschaften der Verzinkungsschicht vollumfänglich erhalten.

Im Rahmen der vorliegenden Erfindung erfolgt die Erzeugung oder Anbringung der dauerhaften Markierung und/oder die Umsetzung der Verzinkungsschicht derart, insbesondere mit einer solchen Laserenergie und/oder unter solchen Reaktionsbedingungen, dass die Verzinkungsschicht im Bereich der Markierung nicht bis zum unterliegenden Grundmaterial umgesetzt wird. Auf diese Weise bleiben nicht nur die protektiven Eigenschaften der Verzinkungsschicht erhalten, sondern es wird darüber hinaus auch gewährleistet, dass ein stabiler Verbund aus Verzinkungsschicht und unterliegendem Grundmaterial erhalten bleibt.

Gemäß einer besonderen Ausführungsform der vorliegenden Erfindung erfolgt die Erzeugung oder Anbringung der dauerhaften Markierung und/oder die Umsetzung der Verzinkungsschicht derart, insbesondere mit einer solchen Laserenergie, dass die Verzinkungsschicht im Bereich der Markierung zu höchstens 99 % ihrer Dicke, insbesondere zu höchstens 95 % ihrer Dicke, vorzugsweise zu höchstens 90 % ihrer Dicke, bevorzugt zu höchstens 80 % ihrer Dicke, besonders bevorzugt zu höchstens 70 % ihrer Dicke, ganz besonders bevorzugt zu höchstens 60 % ihrer Dicke, noch mehr bevorzugt zu höchstens 50 % ihrer Dicke, umgesetzt wird.

Wie zuvor ausgeführt, wird im Rahmen der Erzeugung der dauerhaften Markierung die Verzinkungsschicht selektiv nur in einem vorgegebenen Bereich der zu erzeugenden Markierung laserinduziert einer chemischen Reaktion mit mindestens einem Umgebungsgas (Reaktionsgas) unterzogen. Im Rahmen des vorliegenden Verfahrens kann das eingesetzte Umgebungsgas insbesondere ausgewählt sein aus der Gruppe von Sauerstoff, Stickstoff, Kohlenstoffoxiden und Boranen sowie deren Mischungen und Kombinationen, vorzugsweise aus der Gruppe von Sauerstoff, Stickstoff und Kohlenstoffoxiden sowie deren Mischungen und Kombinationen. Gemäß einer besonderen Ausführungsform kann dabei das Umgebungsgas in Kombination mit mindestens einem nichtreaktiven Gas, insbesondere mit mindestens einem Edelgas, eingesetzt werden.

Typischerweise wird im Rahmen des erfindungsgemäßen Verfahrens derart vorgegangen, dass die Umsetzung der Verzinkungsschicht zu Oxiden, Nitriden, Carbonaten und/oder Boriden, vorzugsweise Oxiden, Nitriden und/oder Carbonaten, führt, insbesondere des Zinks sowie gegebenenfalls weiterer in der Verzinkungsschicht vorhandener (Legierungs-)Metalle.

Gemäß der Erfindung ist das im Bereich der Markierung gebildete Umsetzungsprodukt der Verzinkungsschicht ausgewählt aus der Gruppe von Oxiden, Nitriden, Carbonaten und/oder Boriden, vorzugsweise Oxiden, Nitriden und/oder Carbonaten, des Zinks sowie gegebenenfalls weiterer in der Verzinkungsschicht vorhandener (Legierungs-) Metalle.

Gemäß einer Ausführungsform der vorliegenden Erfindung kann das im Bereich der Markierung gebildete Umsetzungsprodukt der Verzinkungsschicht andersfarbig als die Verzinkungsschicht ausgebildet sein. D. h. mit anderen Worten kann die Markierung in der Farbgebung verschieden von der Verzinkungsschicht ausgebildet sein und/oder farblich von der Verzinkungsschicht unterscheidbar sein.

Gemäß einer besonderen Ausführungsform des erfindungsgemäßen Verfahrens wird das Verfahren derart durchgeführt, dass die Reaktion der Verzinkungsschicht im Bereich der anzubringenden Markierung mittels und/oder in Abhängigkeit von der Menge der einwirkenden Laserenergie, insbesondere Laserimpulsleistung, Laserimpulslänge, Laserpulsdauer, Laserimpulsrepetitionsrate und/oder Laserwellenlänge, und/oder mittels und/oder in Abhängigkeit von den Reaktionsbedingungen, insbesondere Druck, Temperatur und/oder Zusammensetzung des Umgebungsgases (Reaktionsgases), gesteuert wird.

Gemäß einer besonderen Ausführungsform des erfindungsgemäßen Verfahrens wird derart vorgegangen, dass die Reaktion der Verzinkungsschicht bei einer Laserwellenlänge im Bereich von 100 nm bis 11.000 nm, insbesondere im Bereich von 200 nm bis 6.000 nm, vorzugsweise im Bereich von 400 nm bis 3.000 nm, besonders bevorzugt im Bereich von 500 nm bis 2.000 nm, erfolgt.

Gemäß einer weiteren Ausführungsform wird erfindungsgemäß derart vorgegangen, dass die Reaktion der Verzinkungsschicht bei einer Impulslänge der Laserimpulse im Bereich von 0,1 ns bis 2.000 ns, insbesondere im Bereich von 0,1 ns bis 1.000 ns, vorzugsweise im Bereich von 0,2 ns bis 295 ns, besonders bevorzugt im Bereich von 0,5 ns bis 195 ns, erfolgt.

Gemäß einer wiederum weiteren Ausführungsform der vorliegenden Erfindung wird derart vorgegangen, dass die Reaktion der Verzinkungsschicht bei einer mittleren Leistung der austretenden Laserstrahlung im Bereich von 5 Watt bis 30.000 Watt, insbesondere im Bereich von 7,5 Watt bis 1.000 Watt, vorzugsweise im Bereich von 10 Watt bis 1.000 Watt, besonders bevorzugt im Bereich von 10 Watt bis 500 Watt, erfolgt.

Gemäß einer wiederum weiteren Ausführungsform der vorliegenden Erfindung wird im Rahmen des erfindungsgemäßen Verfahrens derart vorgegangen, dass die Reaktion der Verzinkungsschicht bei einer Impulsspitzenleistung der austretenden Laserstrahlung im Bereich von 0,1 Kilowatt bis 3.000 Kilowatt, insbesondere im Bereich von 1 Kilowatt bis 2.000 Kilowatt, vorzugsweise im Bereich von 2 Kilowatt bis 1.800 Kilowatt, erfolgt.

Gemäß einer weiteren Ausführungsform der vorliegenden Erfindung wird im Rahmen des erfindungsgemäßen Verfahrens derart vorgegangen, dass die Reaktion der Verzinkungsschicht bei einer Repetitionsrate der Laserimpulse im Bereich von 1 kHz bis 5.000 kHz, insbesondere im Bereich von 5 kHz bis 4.000 kHz, vorzugsweise im Bereich von 10 kHz bis 3.000 kHz, erfolgt.

Gemäß einer wiederum weiteren Ausführungsform des erfindungsgemäßen Verfahrens wird derart vorgegangen, dass die Reaktion der Verzinkungsschicht mit einem Durchmesser der Laserstrahlung auf der Oberfläche der Verzinkungsschicht im Bereich von 1 $\mu$m bis 10.000 $\mu$m, insbesondere im Bereich von 5 $\mu$m bis 8.000 $\mu$m, vorzugsweise im Bereich von 10 $\mu$m bis 6.000 $\mu$m, besonders bevorzugt im Bereich von 25 $\mu$m bis 4.000 $\mu$m, erfolgt.

Gemäß einer weiteren Ausführungsform des erfindungsgemäßen Verfahrens wird derart vorgegangen, dass die Reaktion der Verzinkungsschicht mit einer Laserabtastgeschwindigkeit auf der Oberfläche der Verzinkungsschicht im Bereich von 10 mm/s bis 30.000 mm/s, insbesondere im Bereich von 20 mm/s bis 25.000 mm/s, vorzugsweise im Bereich von 25 mm/s bis 22.000 mm/s, besonders bevorzugt im Bereich von 30 mm/s bis 19.000 mm/s, erfolgt.

Gemäß einer wiederum weiteren Ausführungsform des erfindungsgemäßen Verfahrens wird derart vorgegangen, dass die Reaktion der Verzinkungsschicht bei einem Druck im Bereich von 0,001 mbar bis 15 bar, insbesondere im Bereich von 0,005 mbar bis 12 bar, vorzugsweise im Bereich von 0,01 mbar bis 11 bar, besonders bevorzugt im Bereich von 0,1 mbar bis 10 bar, erfolgt.

Schließlich wird gemäß einer wiederum weiteren Ausführungsform der vorliegenden Erfindung derart vorgegangen, dass die Reaktion der Verzinkungsschicht bei einer Temperatur des Umgebungsgases außerhalb des Laserstrahls im Bereich von -50 °C bis 350 °C, insbesondere im Bereich von -40 °C bis 325 °C, vorzugsweise im Bereich von -30 °C bis 300 °C, besonders bevorzugt im Bereich von -20 °C bis 200 °C, erfolgt.

Sofern nach den vorgenannten Ausführungsformen im Rahmen des erfindungsgemäßen Verfahrens vorgegangen wird, wir das zuvor genannte und erfindungsgemäß angestrebte Ergebnis erhalten, wonach die Verzinkungsschicht selektiv nur in einem vorgegebenen Bereich der zu erzeugenden Markierung laserinduziert einer chemischen Reaktion mit dem mindestens einem Umgebungs- bzw. Reaktionsgas unterzogen wird, so dass selektiv nur im Bereich der Markierung eine Umsetzung der Verzinkungsschicht erfolgt und das resultierende Umsetzungsprodukt der Verzinkungsschicht die dauerhafte Markierung ausbildet.

Gemäß der vorliegenden Erfindung wird im Rahmen des erfindungsgemäßen Verfahrens derart vorgegangen, dass bei der Erzeugung der dauerhaften Markierung (Permanentmarkierung) die Verzinkungsschicht selektiv nur in einem vorgegebenen Bereich der zu erzeugenden Markierung mit einem gepulsten Laserstrahl ein- oder mehrmals auf solche Weise abgetastet wird, dass benachbarte Lichtflecke des Laserstrahls lückenlos aneinanderstoßen oder sich überlappen.

Gemäß der vorliegenden Erfindung wird im Rahmen des erfindungsgemäßen Verfahrens derart vorgegangen, dass die Reaktion der Verzinkungsschicht im Bereich der anzubringenden Markierung laserinduziert unter Einwirkung von Laserstrahlung erfolgt, insbesondere mit gepulster Laserstrahlung, wobei die folgende Bedingung eingehalten wird:

$$0{,}075 \leq \text{Epsilon} \leq 2.275$$

mit

$$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

worin:

$P_p$:     Impulsspitzenleistung der austretenden Laserstrahlung [kW]
$P_m$:     mittlere Leistung der austretenden Laserstrahlung [W]
$t$:     Impulslänge der Laserimpulse [ns],
$f$:     Repetitionsrate der Laserimpulse [kHz]
$v$:     Abtastgeschwindigkeit an der Oberfläche der Verzinkungsschicht [mm/s]
$d$:     Durchmesser des Laserstrahls am Werkstück [μm]
$\alpha$:     Absorption der Laserstrahlung der bestrahlten Verzinkungsschicht [%] bei Normalbedingungen
$\lambda$:     Wellenlänge der Laserstrahlung [nm],
$T_v$:     Siedepunkt der Verzinkungsschicht [K] bei Normaldruck
$c_p$:     spezifische Wärmekapazität der Verzinkungsschicht [J/kg·K] bei Normalbedingungen
$\kappa$:     spezifische Wärmeleitfähigkeit der Verzinkungsschicht [W/m·K] bei Normalbedingungen.

Was das eingesetzte und zu markierende verzinkte Bauteil anbelangt, so weist die Verzinkungsschicht üblicherweise eine Dicke von 0,5 bis 300 μm, insbesondere 1 bis 200 μm, vorzugsweise 1,5 bis 100 μm, bevorzugt 2 bis 30 μm, auf.

Gemäß einer Ausführungsform der vorliegenden Erfindung kann die Verzinkungsschicht aus zumindest im Wesentlichen reinem Zink oder aber aus einer Zinklegierung, vorzugsweise aus einer Zinklegierung, gebildet sein.

Gemäß einer bevorzugten Ausführungsform ist die Verzinkungsschicht des Bauteils aus einer Zinklegierung gebildet. Insbesondere kann bei dieser Ausführungsform die Verzinkungsschicht Zink sowie als Legierungsmetall Aluminium in einer Menge von 0,0001 bis 25 Gew.-%, insbesondere in einer Menge von 0,001 bis 20 Gew.-%, vorzugsweise in einer Menge von 0,005 bis 17,5 Gew.-%, bevorzugt in einer Menge von 0,01 bis 15 Gew.-%, besonders bevorzugt in einer Menge von 0,02 bis 12,5 Gew.-%, ganz besonders bevorzugt in einer Menge von 0,05 bis 10 Gew.-%, noch mehr bevorzugt in einer Menge von 0,1 bis 8 Gew.-%, bezogen auf die Verzinkungsschicht, aufweisen (wobei die Zinkmenge, gegebenenfalls unter Berücksichtigung weiterer Legierungsmetalle, zu 100 Gew.-% zu dem vorgenannten Aluminiumanteil zu ergänzen ist).

Gemäß einer weiteren bevorzugten Ausführungsform der vorliegenden Erfindung, wonach die Verzinkungsschicht aus einer Zinklegierung gebildet ist, kann die Verzinkungsschicht eine aluminiumlegierte Verzinkungsschicht ("Zn/Al-Verzinkungsschicht") sein. Insbesondere kann bei dieser Ausführungsform die Verzinkungsschicht, bezogen auf die Verzinkungsschicht, eine Menge an Zink von mindestens 75 Gew.-%, insbesondere mindestens 80 Gew.-%, vorzugsweise mindestens 85 Gew.-%, bevorzugt mindestens 90 Gew.-%, und eine Menge an Aluminium von bis zu 25 Gew.-%, insbesondere bis zu 20 Gew.-%, vorzugsweise bis zu 15 Gew.-%, bevorzugt bis zu 10 Gew.-%, sowie gegebenenfalls mindestens ein weiteres Metall, insbesondere in Mengen von bis zu 5 Gew.-% und/oder insbesondere ausgewählt aus der Gruppe von Bismut (Bi), Blei (Pb), Zinn (Sn), Nickel (Ni), Silizium (Si), Magnesium (Mg) und deren Kombinationen, aufweisen, wobei alle vorstehend genannten Mengenangaben derart auszuwählen sind, dass insgesamt 100 Gew.-% resultieren.

Gemäß einer weiteren bevorzugten Ausführungsform der vorliegenden Erfindung ist die Verzinkungsschicht des Bauteils aus einer Zinklegierung gebildet. Bei dieser Ausführungsform kann die Verzinkungsschicht insbesondere die folgende Zusammensetzung aufweisen, wobei alle nachfolgend genannten Mengenangaben auf die Verzinkungsschicht bezogen sind und derart auszuwählen sind, dass insgesamt 100 Gew.-% resultieren:

(i) Zink (Zn), insbesondere in Mengen im Bereich von 75 bis 99,9999 Gew.-%, insbesondere im Bereich von 80 bis 99,999 Gew.-%, vorzugsweise im Bereich von 82,5 bis 99,995 Gew.-%, bevorzugt im Bereich von 85 bis 99,99 Gew.-%, besonders bevorzugt im Bereich von 87,5 bis 99,98 Gew.-%, ganz besonders bevorzugt im Bereich von 90 bis 99,95 Gew.-%, noch mehr bevorzugt im Bereich von 92 bis 99,9 Gew.-%,

(ii) Aluminium (Al), insbesondere in Mengen im Bereich von 0,0001 bis 25 Gew.-%, insbesondere im Bereich von 0,001 bis 20 Gew.-%, vorzugsweise im Bereich von 0,005 bis 17,5 Gew.-%, bevorzugt im Bereich von 0,01 bis 15 Gew.-%, besonders bevorzugt im Bereich von 0,02 bis 12,5 Gew.-%, ganz besonders bevorzugt im Bereich von 0,05 bis 10 Gew.-%, noch mehr bevorzugt im Bereich von 0,1 bis 8 Gew.-%,

(iii) gegebenenfalls Bismut (Bi), insbesondere in Mengen von bis zu 0,5 Gew.-%, vorzugsweise in Mengen von bis zu 0,3 Gew.-%, bevorzugt in Mengen von bis zu 0,1 Gew.-%,

(iv) gegebenenfalls Blei (Pb), insbesondere in Mengen von bis zu 0,5 Gew.-%, vorzugsweise in Mengen von bis zu 0,2 Gew.-%, bevorzugt in Mengen von bis zu 0,1 Gew.-%,

(v) gegebenenfalls Zinn (Sn), insbesondere in Mengen von bis zu 0,9 Gew.-%, vorzugsweise in Mengen von bis zu 0,6 Gew.-%, bevorzugt in Mengen von bis zu 0,3 Gew.-%,

(vi) gegebenenfalls Nickel (Ni), insbesondere in Mengen von bis zu 0,1 Gew.-%, vorzugsweise in Mengen von bis zu 0,08 Gew.-%, bevorzugt in Mengen von bis zu 0,06 Gew.-%,

(vii) gegebenenfalls Silizium (Si), insbesondere in Mengen von bis zu 0,1 Gew.-%, vorzugsweise in Mengen von bis zu 0,05 Gew.-%, bevorzugt in Mengen von bis zu 0,01 Gew.-%,

(viii) gegebenenfalls Magnesium (Mg), insbesondere in Mengen von bis zu 5 Gew.-%, vorzugsweise in Mengen von bis zu 2,5 Gew.-%, bevorzugt in Mengen von bis zu 0,8 Gew.-%.

Erfindungsgemäß weiterhin bevorzugt ist es, wenn die Verzinkungsschicht zumindest im Wesentlichen frei, vorzugsweise vollkommen frei, von Blei (Pb) und/oder Nickel (Ni) ausgebildet ist.

Ebenfalls erfindungsgemäß bevorzugt ist es, wenn die Verzinkungsschicht zumindest im Wesentlichen frei, vorzugsweise vollkommen frei, von Schwermetallen aus der Gruppe von Blei (Pb), Nickel (Ni), Cobalt (Co), Mangan (Mn), Zinn (Sn), Bismut (Bi) und Antimon (Sb) ausgebildet ist.

Gemäß einer besonders bevorzugten Ausführungsform der vorliegenden Erfindung ist die Verzinkungsschicht des Bauteils durch sogenannte Feuerverzinkung (synonym auch als Schmelztauchverzinkung bezeichnet) erzeugt worden.

Grundsätzlich ist die Erzeugung von Verzinkungsschichten (Zinkschichten) auf Metallbauteilen, insbesondere Stahlbauteilen, dem Fachmann hinlänglich bekannt. In diesem Zusammenhang ist es insbesondere bekannt, stahlbasierte Bauteile mittels Verzinkung (Verzinken) gegenüber Korrosion zu schützen. Beim Verzinken wird der Stahl mit einer im Allgemeinen sehr dünnen Zinkschicht versehen, um den Stahl vor Korrosion zu schützen. Dabei können verschiedene Verzinkungsverfahren eingesetzt werden, um Bauteile aus Stahl zu verzinken, d. h. mit einem metallischen Überzug aus Zink zu überziehen, wobei insbesondere die Feuerverzinkung (synonym auch als Schmelztauchverzinkung bezeichnet), die Spritzverzinkung (Flammspritzen mit Zinkdraht), die Diffusionsverzinkung (Sherard-Verzinkung), die galvanische Verzinkung (elektrolytische Verzinkung), die nichtelektrolytische Verzinkung mittels Zinklamellenüberzügen sowie die mechanische Verzinkung zu nennen sind. Zwischen den vorgenannten Verzinkungsverfahren bestehen große Unterschiede, insbesondere im Hinblick auf die Verfahrensdurchführung, aber auch im Hinblick auf die Beschaffenheit und Eigenschaften der erzeugten Zinkschichten bzw. Zinküberzüge.

Das wohl wichtigste Verfahren zum Korrosionsschutz von Stahl durch metallische Zinküberzüge ist die Feuerverzinkung (Schmelztauchverzinkung). Dabei wird Stahl kontinuierlich (z. B. Band und Draht) oder stückweise (z. B. Bauteile) bei Temperaturen von etwa 450 °C bis 600 °C in einen beheizten Kessel mit flüssigem Zink getaucht (Schmelzpunkt von Zink: 419,5 °C), so dass sich auf der Stahloberfläche eine widerstandsfähige Legierungsschicht aus Eisen und Zink und darüber eine sehr fest haftende reine Zinkschicht ausbilden. Die Feuerverzinkung ist somit eine seit vielen Jahren anerkannte und bewährte Methode, um Bauteile bzw. Komponenten aus Eisenwerkstoffen, insbesondere Stahlwerkstoffen, vor Korrosion zu schützen. Wie zuvor geschildert, wird hierbei das typischerweise vorgereinigte bzw. vorbehandelte Bauteil in ein flüssig-heißes Zinkbad eingetaucht, wobei es zur Reaktion mit der Zinkschmelze und, daraus resultierend, zur Ausbildung einer relativ dünnen, metallurgisch mit dem Grundwerkstoff verbundenen Zinkschicht kommt. Bei der Feuerverzinkung wird zwischen diskontinuierlicher Stückverzinkung (vgl. z. B. DIN EN ISO 1461) und kontinuierlicher Band- und Drahtverzinkung (vgl. z. B. DIN EN 10143 und DIN EN 10346) unterschieden. Sowohl das Stückverzinken als auch das Band- und Drahtverzinken sind genormte bzw. standardisierte Verfahren. Kontinuierlich verzinktes Stahlband und kontinuierlich verzinkter Draht sind jeweils ein Vor- bzw. Zwischenprodukt (Halbzeug), welches nach dem Verzinken, insbesondere durch Umformen, Stanzen, Zuschneiden etc., weiterverarbeitet wird, wohingegen durch Stückverzinken zu schützende Bauteile im Allgemeinen zuerst vollständig gefertigt und erst danach feuerverzinkt werden (wodurch die Bauteile rundum vor Korrosion geschützt werden). Stückverzinken und Band-/Drahtverzinken unterscheiden sich zudem hinsichtlich der Zinkschichtdicke, wodurch sich -auch in Abhängigkeit der Zinkschichtunterschiedliche Schutzdauern ergeben. Die Zinkschichtdicke von bandverzinkten Blechen liegt zumeist bei höchstens 20 bis 25 Mikrometern, wohingegen die Zinkschichtdicken von stückverzinkten Stahlteilen üblicherweise im Bereich von 50 bis 200 Mikrometern und sogar mehr liegen. Die Feuerverzinkung liefert sowohl einen aktiven als auch passiven Korrosionsschutz. Der passive Schutz erfolgt durch die Barrierewirkung des Zinküberzuges. Der aktive Korrosionsschutz entsteht aufgrund der kathodischen Wirkung des Zinküberzuges: Gegenüber edleren Metallen der elektrochemischen Spannungsreihe, wie z. B. Eisen, dient Zink als Opferanode, die das darunter liegende Eisen solange vor Korrosion schützt, bis sie selbst vollständig korrodiert ist. Bei der sogenannten Stückverzinkung nach DIN EN ISO 1461 erfolgt das Feuerverzinken von meist größeren Stahlbauteilen und -konstruktionen (welche im Allgemeinen zuerst vollständig gefertigt sind und erst danach feuerverzinkt werden). Dabei werden stahlbasierte Rohlinge oder fertige Werkstücke (Bauteile) nach einer Vorbehandlung in das Zinkschmelzbad eingetaucht. Durch das Tauchen können insbesondere auch Innenflächen, Schweißnähte und schwer zugängliche Stellen der zu verzinkenden Werkstücke bzw. Bauteile gut erreicht werden. Die mit einem Zinküberzug erreichbare Schutzdauer hängt maßgeblich von der Aggressivität der Einsatzbedingungen des Bauteils sowie von der Zinkschichtdicke in Kombination mit der Zinkschichtzusammensetzung ab. Die beim Stückverzinken und Band-/Drahtverzinken erreichte Zinkschichtdicke liegt -je nach verwendetem Verfahren, Zinklegierung und Konfiguration des zu schützenden Grundwerkstoffs - üblicherweise im Bereich von 10 bis 300 Mikrometern oder sogar mehr. Typischerweise werden verzinkte Bauteile für eine Lebensdauer von mehreren Jahrzehnten ausgelegt.

Die konventionelle Feuerverzinkung, insbesondere Tauchverzinkung, basiert verfahrensseitig insbesondere auf dem Tauchen von Eisen- bzw. Stahlbauteilen in eine Zinkschmelze unter Ausbildung einer Zinkbeschichtung bzw. eines Zinküberzugs auf der Oberfläche der Bauteile. Zur Sicherstellung des Haftvermögens, der Geschlossenheit und der Einheitlichkeit des Zinküberzuges ist vorab im Allgemeinen eine sorgfältige Oberflächenvorbereitung bzw. Oberflächenvorbehandlung der zu verzinkenden Bauteile erforderlich, welche beim Stückverzinkungsprozess üblicherweise eine Entfettung mit nachfolgendem Spülvorgang, eine sich anschließende saure Beizung mit nachfolgendem Spülvorgang und schließlich eine Flussmittelbehandlung (d. h. ein sogenanntes Fluxen) mit nachfolgendem Trocknungsvorgang umfasst. Aus Gründen der Prozessökonomie und der Wirtschaftlichkeit werden bei der Stückverzinkung identischer oder gleichartiger Bauteile (z. B. Serienproduktion von Kfz-Bauteilen) diese typischerweise für den gesamten Prozess zusammengeführt bzw. gruppiert (insbesondere mittels eines gemeinsamen, beispielsweise als Traverse oder Gestell ausgebildeten Warenträgers oder einer gemeinsamen Halte- bzw. Befestigungsvorrichtung für eine Vielzahl dieser identischen bzw. gleichartigen Bauteile). Hierzu werden eine Mehrzahl von Bauteilen am Warenträger über Haltemittel, wie z. B. Anschlagmittel, Anbindedrähte oder dergleichen befestigt. Anschließend werden die Bauteile im gruppierten Zustand über den Warenträger den einzelnen Behandlungsschritten bzw. -stufen der Feuerverzinkung zugeführt.

Der typische Verfahrensablauf beim konventionellen Stückverzinken mittels Feuerverzinkung gestaltet sich üblicherweise wie folgt: Zunächst werden die Bauteiloberflächen der betreffenden Bauteile einer Entfettung unterzogen, um Rückstände von Fetten und Ölen zu entfernen, wobei als Entfettungsmittel üblicherweise wässrige alkalische oder saure Entfettungsmittel zur Anwendung kommen können. Nach der Reinigung im Entfettungsbad schließt sich üblicherweise ein Spülvorgang an, typischerweise durch Eintauchen in ein Wasserbad, um ein Verschleppen von Entfettungsmitteln mit dem Verzinkungsgut in den nachfolgenden Prozessschritt des Beizens zu vermeiden, wobei dies insbesondere bei einem Wechsel von alkalischer Entfettung auf eine saure Beize von hoher Bedeutung ist. Anschließend erfolgt eine Beizbehandlung (Beizen), welche insbesondere zur Entfernung von arteigenen Verunreinigungen, wie z. B. Rost und Zunder, von der Stahloberfläche dient. Das Beizen erfolgt üblicherweise in verdünnter Salzsäure, wobei die Dauer des Beizvorgangs unter anderem vom Verunreinigungszustand (z. B. Verrostungsgrad) des Verzinkungsgutes und der Säurekonzentration und Temperatur des Beizbades abhängig ist. Zur Vermeidung bzw. Minimierung von Verschleppungen von Säure- und/oder Salzresten mit dem Verzinkungsgut erfolgt nach der Beizbehandlung üblicherweise ein Spülvorgang (Spülschritt). Nachfolgend erfolgt dann das sogenannte Fluxen (synonym auch als Flussmittelbehandlung bezeichnet), wobei die zuvor entfettete und gebeizte Stahloberfläche mit einem sogenannten Flussmittel, welches typischerweise eine wässrige Lösung von anorganischen Chloriden, am häufigsten mit einer Mischung aus Zinkchlorid ($ZnCl_2$) und Ammoniumchlorid ($NH_4Cl$), umfasst. Einerseits ist es Aufgabe des Flussmittels, vor der Reaktion der Stahloberfläche mit dem schmelzflüssigen Zink eine letzte intensive Feinstreinigung der Stahloberfläche vorzunehmen und die Oxidhaut der Zinkoberfläche aufzulösen sowie eine erneute Oxidation der Stahloberfläche bis zum Verzinkungsvorgang zu verhindern; andererseits soll das Flussmittel die Benetzungsfähigkeit zwischen der Stahloberfläche und dem schmelzflüssigen Zink erhöhen. Nach der Flussmittelbehandlung erfolgt dann üblicherweise eine Trocknung, um einen festen Flussmittelfilm auf der Stahloberfläche zu erzeugen und anhaftendes Wasser zu entfernen, so dass nachfolgend unerwünschte Reaktionen (insbesondere die Bildung von Wasserdampf) im flüssigen Zinktauchbad vermieden werden. Die auf die vorgenannte Weise vorbehandelten Bauteile werden dann durch Eintauchen in die flüssige Zinkschmelze feuerverzinkt. Bei der Feuerverzinkung mit reinem Zink liegt der Zinkgehalt der Schmelze gemäß DIN EN ISO 1461 bei mindestens 98,0 Gew.-%. Nach dem Eintauchen des Verzinkungsgutes in das geschmolzene Zink verbleibt dieses für eine ausreichende Zeitdauer im Zinkschmelzbad, insbesondere bis das Verzinkungsgut dessen Temperatur angenommen hat und mit einer Zinkschicht überzogen ist. Typischerweise wird die Oberfläche der Zinkschmelze insbesondere von Oxiden, Zinkasche, Flussmittelresten und dergleichen gereinigt, bevor dann das Verzinkungsgut wieder aus der Zinkschmelze herausgezogen wird. Das auf diese Weise feuerverzinkte Bauteil wird dann einem Abkühlvorgang (z. B. an der Luft oder in einem Wasserbad) unterzogen. Abschließend werden gegebenenfalls vorhandene Haltemittel für das Bauteil, wie z. B. Anschlagmittel, Anbindedrähte oder dergleichen, entfernt. Im Anschluss an den Verzinkungsprozess kann üblicherweise eine zum Teil aufwendige Nachbearbeitung oder Nachbehandlung erfolgen. Dabei werden z. B. überschüssige Zinkbadrückstände, insbesondere sogenannte Tropfnasen des an den Kanten erstarrenden Zinks sowie Oxid- oder Ascherückstände, welche an dem Bauteil anhaften, so weit wie möglich entfernt.

Die Verzinkung bei der konventionellen Feuerverzinkung erfolgt in einer Zinkschmelze mit einem Zinkgehalt von mindestens 98,0 Gew.-% gemäß DIN EN ISO 1461. Hierbei bildet sich als Folge einer wechselseitigen Diffusion des flüssigen Zinks mit der Stahloberfläche auf dem Stahlteil ein Überzug verschiedenartig zusammengesetzter Eisen/Zink-Legierungsschichten. Beim Herausziehen der feuerverzinkten Gegenstände bleibt auf der obersten Legierungsschicht noch eine - auch als Reinzinkschicht bezeichnete - Schicht aus Zink haften, welche in ihrer Zusammensetzung der Zinkschmelze entspricht. Das auf diese Weise feuerverzinkte Bauteil wird nach dem Ausziehen aus der Zinkschmelze einem Abkühlvorgang (z. B. an der Luft oder in einem Wasserbad) unterzogen. Gegebenenfalls kann alternativ oder zusätzlich eine Nachbehandlung in Form einer Passivierung und/oder Versiegelung der Zinkoberfläche erfolgen.

Ein Kriterium für die Güte einer Feuerverzinkung ist die Dicke des Zinküberzuges in $\mu m$ (Mikrometern). In der Norm DIN EN ISO 1461 sind die Mindestwerte der geforderten Überzugsdicken angegeben, wie sie je nach Materialdicke beim Stückverzinken zu liefern sind. In der Praxis liegen die Schichtdicken deutlich über den in der DIN EN ISO 1461 angegebenen Mindestschichtdicken. Im Allgemeinen haben durch Stückverzinken hergestellte Zinküberzüge eine Dicke im Bereich von 50 bis 300 Mikrometern und sogar mehr.

Beim Verzinkungsvorgang bildet sich als Folge einer wechselseitigen Diffusion des flüssigen Zinks mit der Stahloberfläche auf dem Stahlteil ein Überzug verschiedenartig zusammengesetzter Eisen/Zink-Legierungsschichten. Beim Herausziehen der feuerverzinkten Gegenstände bleibt auf der obersten Legierungsschicht noch eine - auch als Reinzinkschicht bezeichnete - Schicht aus Zink haften, welche in ihrer Zusammensetzung der Zinkschmelze entspricht.

Aus Gründen der Kosten- und Ressourceneffizienz ist man bestrebt, die bereits dünnen Zinküberzüge noch weiter zu optimieren. Um bei dann nochmals geringeren Schichtdicken gleichzeitig einen weiterhin hohen Korrosionsschutz bei der Verzinkung zu ermöglichen, ist es aus dem Stand der Technik bekannt, der Zinkschmelze bzw. dem flüssigen Zinkbad zusätzlich Aluminium zuzusetzen. Beispielsweise wird durch eine Zugabe von 5 Gew.-% Aluminium zu einer flüssigen Zinkschmelze eine Zink/Aluminium-Legierung mit einer niedrigeren Schmelztemperatur gegenüber reinem Zink erzeugt. Durch die Verwendung einer Zink/Aluminium-Schmelze (Zn/Al-Schmelze) bzw. eines flüssigen Zink/Aluminium-Bades (Zn/Al-Bad) lassen sich einerseits deutlich geringere Schichtdicken für einen verlässlichen Korrosionsschutz realisieren (im Allgemeinen unterhalb von 50 Mikrometern). Mit einer Zink/Aluminium-Schmelze feuerverzinkte Bauteile lassen sich daher problemlos umformen, weisen aber dennoch - trotz der signifikant geringeren Schichtdicke im Vergleich zu einer konventionellen Feuerverzinkung mit einer quasi aluminiumfreien Zinkschmelze - verbesserte Korrosionsschutzeigenschaften auf. Eine im Feuerverzinkungsbad eingesetzte Zink/Aluminium-Legierung weist gegenüber Reinzink auch verbesserte Fluiditätseigenschaften auf. Außerdem weisen Zinküberzüge, welche mittels unter Verwendung derartiger Zink/Aluminium-Legierungen durchgeführter Feuerverzinkungen erzeugt sind, eine größere Korrosionsbeständigkeit (welche zwei- bis sechsmal besser ist als die von Reinzink), eine bessere Optik, eine verbesserte Formbarkeit und eine bessere Lackierbarkeit auf als aus Reinzink gebildete Zinküberzüge. Überdies lassen sich mit dieser Technologie auch bleifreie Zinküberzüge herstellen. Ein solches Feuerverzinkungsverfahren unter Verwendung einer Zink/Aluminium-Schmelze bzw. unter Verwendung einer Zink/Aluminium-Feuerverzinkungsbades ist beispielsweise bekannt aus der WO 2002/042512 A1 und den betreffenden Druckschriftäquivalenten zu dieser Patentfamilie (z. B. EP 1 352 100 B1, DE 601 24 767 T2 und US 2003/0219543 A1). Dort werden auch geeignete Flussmittel für die Feuerverzinkung mittels Zink/Aluminium-Schmelzbädern offenbart, da Flussmittelzusammensetzungen für Zink/Aluminium-Feuerverzinkungsbäder anders beschaffen sein müssen als solche für die konventionelle Feuerverzinkung mit Reinzink. Mit dem dort offenbarten Verfahren lassen sich Korrosionsschutzüberzüge mit sehr geringen Schichtdicken (im Allgemeinen deutlich unterhalb von 50 Mikrometern und typischerweise im Bereich von 2 bis 20 Mikrometern) und mit sehr geringem Gewicht bei hoher Kosteneffizienz erzeugen, weshalb das dort beschriebene Verfahren kommerziell unter der Bezeichnung microZINQ®-Verfahren angewendet wird.

Im Hinblick auf die Ausbildung der Zinkschicht und deren Eigenschaften hat sich also gezeigt, dass diese über Legierungselemente in der Zinkschmelze maßgeblich beeinflusst werden können. Als eines der wichtigsten Elemente ist hierbei Aluminium zu nennen: So hat sich gezeigt, dass bereits mit einem Aluminiumgehalt in der Zinkschmelze von 100 ppm (gewichtsbasiert) die Optik der entstehenden Zinkschicht hin zu einem helleren, glänzenderen Aussehen verbessert werden kann. Mit zunehmendem Aluminiumgehalt in der Zinkschmelze bis 1.000 ppm (gewichtsbasiert) nimmt dieser Effekt stetig zu. Des Weiteren hat sich gezeigt, dass sich - wie zuvor bereits geschildert - ab einem Aluminiumgehalt in der Zinkschmelze von 0,12 Gew.-% eine intermetallische Fe/Al-Phase zwischen dem Eisenwerkstoff und der Zinkschicht bildet, welche dazu führt, dass die sonst üblichen Diffusionsprozesse zwischen Eisen und Zinkschmelze inhibiert werden und somit das Aufwachsen der Zn/Fe-Phasen signifikant verringert wird; als Folge hiervon resultieren deshalb ab diesem Aluminiumgehalt in der Zinkschmelze wesentlich dünnere Zinkschichten. Schließlich hat sich gezeigt, dass grundsätzlich mit zunehmendem Aluminiumgehalt in der Zinkschmelze die Korrosionsschutzwirkung der resultierenden Zinkschicht zunimmt; Grundlage hierfür ist, dass die Al/Zn-Verbindungen schneller deutlich stabilere Deckschichten bilden.

Bekannte Beispiele für die kommerzielle Verwendung von aluminiumhaltigen Zinkschmelzen sind das sogenannte Galfan®-Verfahren und das vorgenannte microZINQ®-Verfahren mit einem Aluminiumgehalt in der Zinkschmelze typischerweise im Bereich von 4,2 Gew.-% bis 6,2 Gew.-%. Der Vorteil dieser Legierung liegt unter anderem darin, dass um den Mittelwert von 5 Gew.-% eine eutektische Zusammensetzung des Al/Zn-Systems mit einem Schmelzpunkt von 382 °C vorliegt, wodurch eine Verringerung der Betriebstemperatur im Verzinkungsprozess ermöglicht wird.

Wie zuvor ausgeführt, ist in erfindungsgemäß bevorzugter Weise die Verzinkungsschicht durch Feuerverzinkung (Schmelztauchverzinkung) erzeugt worden. Bei dieser Ausführungsform kann die zur Erzeugung der Verzinkungsschicht eingesetzte Prozess der Feuerverzinkung insbesondere die folgenden Verfahrensschritte in der nachfolgend aufgeführten Reihenfolge umfassen:

(a) Entfettungsbehandlung, vorzugsweise alkalische Entfettungsbehandlung, des (Metall-)Bauteils, insbesondere in mindestens einem Entfettungsbad; dann

(b) gegebenenfalls Spülen des in Verfahrensschritt (a) entfetteten (Metall-)-Bauteils, insbesondere in mindestens einem Spülbad; dann

(c) Beizbehandlung, vorzugsweise saure Beizbehandlung, des in Verfahrensschritt (a) entfetteten und gegebenenfalls in Verfahrensschritt (b) gespülten (Metall-)Bauteils, insbesondere in mindestens einem Beizbad; dann

(d) gegebenenfalls Spülen des in Verfahrensschritt (c) gebeizten (Metall-)-Bauteils, insbesondere in mindestens einem Spülbad; dann

(e) Flussmittelbehandlung des in Verfahrensschritt (c) gebeizten und gegebenenfalls in Verfahrensschritt (d) gespülten (Metall-)Bauteils mittels einer Flussmittelzusammensetzung in einem Flussmittelbad; dann

(f) gegebenenfalls Trocknungsbehandlung des in Verfahrensschritt (e) der Flussmittelbehandlung unterzogenen (Metall-)Bauteils; dann

(g) Feuerverzinkung (Schmelztauchverzinkung) des in Verfahrensschritt (e) der Flussmittelbehandlung unterzogenen und gegebenenfalls in Verfahrensschritt (f) getrockneten (Metall-)Bauteils in einem eine gegebenenfalls mit mindestens einem weiteren Metall legierte Zinkschmelze enthaltenden Verzinkungsbad, vorzugsweise durch (Ein-)Tauchen des (Metall-)Bauteils in das Verzinkungsbad; dann

(h) gegebenenfalls Abkühlungsbehandlung des in Verfahrensschritt (g) feuerverzinkten (schmelztauchverzinkten) (Metall-)Bauteils, insbesondere mittels Luft und/oder in Gegenwart von Luft, vorzugsweise bis auf Umgebungstemperatur; dann

(i) gegebenenfalls Nachbearbeitung und/oder Nachbehandlung.

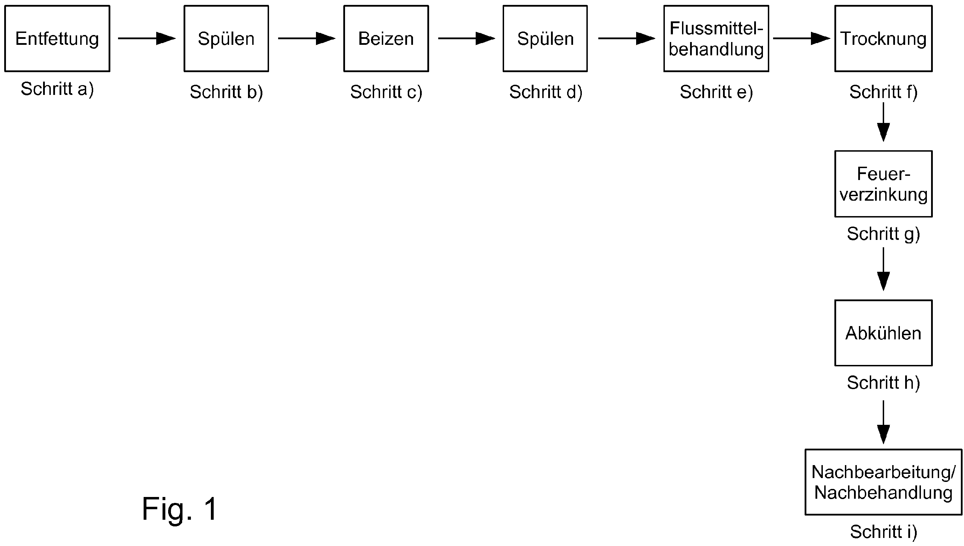

Eine typische Feuerverzinkungsprozessfolge ist auch in der nachfolgend noch diskutierten Fig. 1 dargestellt.

Im Fall der Ausführungsform, wonach die Verzinkungsschicht durch Feuerverzinkung (Schmelztauchverzinkung) erzeugt worden ist, kann die Feuerverzinkung (Schmelztauchverzinkung) grundsätzlich kontinuierlich oder aber diskontinuierlich betrieben werden.

Wie zuvor ebenfalls ausgeführt, kann im Rahmen der Feuerverzinkung das Bauteil ein einzelnes Erzeugnis darstellen oder aber eine Vielzahl einzelner Erzeugnisse sein.

Geeignete Feuerverzinkungsverfahren und -prozesse sind dem Fachmann hinlänglich bekannt, so dass es diesbezüglich keiner weitergehenden Ausführungen bedarf. In diesem Zusammenhang kann rein beispielhaft und nicht beschränkend insbesondere auf die EP 1 352 100 B1, die DE 601 24 767 T2 sowie die WO 2002/042512 A1 verwiesen werden.

Im Rahmen der vorliegenden Erfindung wird also ein effizientes wie ökonomisches Verfahren zur Kennzeichnung und/oder Markierung von verzinkten, insbesondere feuerverzinkten Metallbauteilen, insbesondere Stahlbauteilen, bereitgestellt, welches es ermöglicht, verzinkte Metallbauteile mit einer dauerhaften Markierung (Permanentmarkierung) zu versehen, ohne die positiven, insbesondere protektiven Eigenschaften der Verzinkungsschicht zu beeinträchtigen.

Insbesondere wird im Rahmen der vorliegenden Erfindung ein Verfahren bereitgestellt, mit welchem sich dauerhafte (d. h. permanente) Kennzeichnungen bzw. Markierungen an bzw. auf bzw. in feuerverzinkten Metallbauteilen (z. B. Stahlbauteilen) erzeugen lassen, ohne die gewünschten Eigenschaften der Verzinkungsschicht, wie insbesondere deren Korrosionsbeständigkeit, mechanische Beständigkeit etc., zumindest im Wesentlichen zu beeinträchtigen. Vor allem werden im Rahmen des erfindungsgemäßen Markierungsverfahrens die protektiven Eigenschaften der Verzinkungsschicht nicht verringert. Insbesondere erfolgt im Rahmen des erfindungsgemäßen Verfahrens keine Schwächung der per se dünnen Verzinkungsschicht (z. B. keine Ablation bzw. kein Abtrag von Material im Rahmen des erfindungsgemäßen Verfahrens).

Gleichzeitig aber wird im Rahmen des erfindungsgemäßen Verfahrens eine Kennzeichnung bzw. Markierung mit hoher Dauerhaftigkeit auf verzinkten Metallbauteilen erzeugt, welche auch gegenüber extremen Einflüssen (wie z. B. korrosiven oder mechanisch anspruchsvollen, insbesondere abrasiven Bedingungen, wie beispielsweise Bewitterung, Säureeinwirkung, mechanische Belastung etc.) beständig ist.

Insbesondere kommt das Verfahren nach der vorliegenden Erfindung ohne jedwede Nachbehandlung der erzeugten Kennzeichnung bzw. Markierung aus, da der Bereich der Markierung die Verzinkungsschicht in diesem Bereich unbeeinträchtigt lässt.

Das erfindungsgemäße Verfahren ist also mit einer Vielzahl von Vorteilen und Besonderheiten verbunden, welche als Beleg für den Fortschritt gegenüber herkömmlichen Verfahren des Standes der Technik heranzuziehen sind. Entsprechendes gilt auch für die nach dem erfindungsgemäßen Verfahren erhältlichen Produkte sowie für die zur Durchführung des erfindungsgemäßen Verfahrens eingesetzte Vorrichtung und Anlage, wie nachfolgend noch im Detail beschrieben.

Grundsätzlich stehen zur Durchführung des erfindungsgemäßen Verfahrens zur Kennzeichnung und/oder Markierung verzinkter (Metall-)Bauteile kommerziell erhältliche Vorrichtungen und Anlagen zur Verfügung, welche aber im Stand der Technik noch nicht für diesen Einsatzzweck vorgesehen wurden, so dass ihre Verwendung entsprechend an die erfindungsgemäße Verfahrensführung anzupassen ist, insbesondere im Rahmen der Programmierung und Ausführung (was aber im Rahmen des fachmännischen Handelns ohne Weiteres möglich ist), so z. B. sogenannte Lasermarkierungssysteme der Fa. Cajo Technologies Oy, Kempele, Finnland (z. B. vom Typ Cajo Stella, Cajo Sirius oder Cajo Mira). Derartige Lasermarkierungssysteme sind beispielsweise auch in der DE 20 2014 101 805 U1, der WO 2014/170551 A1 oder der US 2016/0144457 A1 beschrieben, allerdings für einen anders gearteten Lasermarkierungsprozess, welcher die Metalloberfläche für einen nachfolgenden Beschichtungsvorgang durch Materialabtrag vorbereitet (was erfindungsgemäß aber gerade vermieden werden soll). Auch beziehen sich die dort aufgeführten Anwendungen nur auf hochlegierte Stähle (Edelstähle); der Verweis auf weitere Anwendungsmöglichkeiten wird zwar allgemein in Bezug auf Metalle gegeben, wobei als konkrete Anwendungsbeispiele nur Titan, Titanlegierungen sowie Aluminium genannt sind, jedoch insbesondere nicht die Anwendung auf den speziellen Fall von dünnen Zinküberzügen, welche zum Zwecke des Korrosionsschutzes eingesetzt werden.

Der erfindungsgemäße Lösungsansatz verwendet also insgesamt eine zumindest im Wesentlichen ohne Materialabtrag bzw. Ablation auskommende Markierungstechnologie mittels Laserinduktion. Selektiv (nur) im Bereich der Markierung wird die Verzinkungsoberfläche beispielsweise den Pulsen eines Lasers im Femtosekundenbereich ausgesetzt, so dass ein Plasma auf der Oberfläche des Substrats entsteht und, bedingt hierdurch, eine chemische Modifikation derselben eintritt. Das Plasma wirkt hierbei nur in der obersten Randzone des Substrats, so dass das gesamte Bauteil kalt bleibt. Mittels dieser Technologie ist es möglich, durch Laserenergie bei einer geeigneten Umgebungsgas- bzw. Reaktionsgasatmosphäre, gegebenenfalls in Kombination mit einem Schutzgas (z. B. Edelgas), und bei einer gezielten Temperaturführung des Laserstrahls bzw. des Plasmas die Oberfläche (hier: Zink) derart zu beeinflussen, dass eine oder mehrere definierte, stabile Metallverbindung(en) generiert wird (werden).

Da diese erzeugten Verbindungen des Substratmaterials eine charakteristische Farbe besitzen, kann mit Hilfe des erfindungsgemäßen Verfahrens eine Markierung erzeugt werden. Im Fall von Zink sind bei geeigneter Gasatmosphäre in Kombination mit der Laserenergie beispielsweise folgende Verbindungen denkbar:

| | | Salz | Farbe | Name |
|---|---|---|---|---|
| $Zn + \frac{1}{2} O_2$ | $\rightarrow$ | $ZnO$ | weiß | Zinkoxid |
| $Zn + \frac{1}{2} O_2 + CO_2$ | $\rightarrow$ | $ZnCO_3$ | weiß | Zinkcarbonat |
| $3\,Zn + N_2$ | $\rightarrow$ | $Zn_3N_2$ | schwarzgrau | Zinknitrid |

Dies bedeutet, dass erfindungsgemäß weder ein Materialabtrag (wie z. B. bei der Laserstrahlablation) noch ein Materialauftrag stattfindet (wie z. B. beim Laserstrahlverdampfen, bei dem Material verdampft wird und sich auf dem Substrat abscheidet), sondern es erfolgt lediglich eine laserinduzierte chemische Umwandlung der Oberfläche selektiv nur im Bereich der Markierung.

Gegebenenfalls nach der eigentlichen Verzinkung aufgebrachte, sehr dünne Schichten (z. B. Versiegelungen oder Passivierungen) stören den erfindungsgemäßen Markierungsprozess nicht, da diese Schichten nicht temperaturstabil sind und sich unter dem Einfluss der Laserenergie bzw. des hierdurch erzeugten oberflächennahen Plasmas thermisch zersetzen, so dass die gewünschte Reaktion mit der Substratoberfläche erfolgen kann.

Das erfindungsgemäße Verfahren zur Kennzeichnung bzw. Markierung verzinkter Komponenten (Bauteile) kann beispielsweise derart ablaufen, dass die verzinkten Bauteile oder Halbzeuge während oder nach der Fertigung mittels der oben beschriebenen Technologie eine gezielte Oberflächenmanipulation erfahren, wodurch eine auslesbare Markierung mit individuell einstellbaren Informationen entsteht.

Der prinzipielle Ablauf im Verzinkungsbetrieb kann rein beispielhaft und nichtbeschränkend am Beispiel des Stückverzinkungsprozesses wie folgt beschrieben werden: Die zu verzinkenden Werkstücke werden an einem Warenträger befestigt und auf diese Weise durch den Verzinkungsprozess geführt. Dieser sieht zunächst eine Reinigung der Werkstückoberfläche in Form von Entfettungs-, Spül- und Beizprozessen vor, worauf sich dann ein Flussmittelauftrag, eine Trocknung und das Eintauchen in ein Zinkbad anschließen. Hierbei können sowohl reine Zinkschmelzen als auch Zinklegierungen (wie z. B. Zn/Al- oder Zn/Al/Mg-Legierungen) zum Einsatz kommen, welche dann zu metallischen Überzügen mit spezifischen Eigenschaften führen (d. h. Zinkschichtdicke, Ausbildung der Phasenstruktur in der Zinkschicht, Oberflächeneigenschaften etc.). Nach der Verzinkung wird das Bauteil gegebenenfalls in einem oder mehreren weiteren Prozessschritten nachbehandelt (z. B. Eintauchen in ein Wasserbad und/oder Sprüh- oder Tauchapplikation mit einem Versiegelungs- oder Passivierungsmittel). Im letzteren Fall wird eine sehr dünne Schicht (z. B. mehrere 100 nm bis wenige Mikrometer) auf die Zink- oder Zinklegierungsoberfläche aufgetragen, wodurch die Korrosionsschutzeigenschaften des Überzuges gezielt beeinflusst werden. Nach dem Verzinkungsschritt bzw. dem gegebenenfalls erfolgten Nachbehandlungsschritt ist der Verzinkungsvorgang des Werkstücks abgeschlossen. Im Folgenden können die verzinkten Teile, sobald sie eine geeignete Temperatur erreicht haben, von dem Warenträger abgenommen werden. In der Nacharbeit erfolgt dann die Kontrolle der Verzinkungsqualität, die Entfernung von restlichen Andrahtstücken sowie Ablaufverdickungen und, im Fall von aufgetretenen Oberflächendefekten, deren Ausbesserung. Das fertige Werkstück wird anschließend an den Kunden ausgeliefert oder bis zur Abholung eingelagert. In prinzipiell ähnlicher Weise erfolgt die Verzinkung von Lang- und Flachmaterial im Zuge des kontinuierlichen Durchlaufprozesses; die Anwendung der erfindungsgemäßen Markierungstechnik auf derartige Halbzeuge, sowohl auf dem verzinkten Coil als auch auf dem daraus verarbeitenden Bauteil, ist in gleicher Weise möglich.

In diesen Ablauf kann nun der erfindungsgemäße Markierungsprozess implementiert werden, wobei grundsätzlich verschiedene Varianten denkbar sind: Die verzinkten Bauteile können z. B. direkt am Warenträger hängend erfindungsgemäß markiert werden. Alternativ können die Bauteile zunächst von dem Warenträger abgenommen und im Bereich der Nacharbeit markiert werden; hierbei kann die Markierung zeitlich vor, während oder nach dem Nacharbeitsschritt erfolgen. Es ist auch denkbar, dass die Bauteile auf dem Weg vom Warenträger zur Nacharbeit bzw. von der Nacharbeit zum Lager markiert werden. Des Weiteren kann der Markierungsschritt alternativ aber auch nach Abschluss der Nacharbeit und Positionierung in Verpackungseinheiten durchgeführt werden. Abweichend von den vorgenannten Varianten kann der Markierungsprozess auch außerhalb des Verzinkungsbetriebes, z. B. im Rahmen der Fertigungslinie, erfolgen; in diesem Fall werden die fertig verzinkten Bauteile an den Hersteller oder Weiterverarbeitungsbetrieb ausgeliefert, und dort kann die Markierung an einer Verpackungseinheit oder an einem vereinzelten Bauteil an jeder Stelle des Fertigungsprozesses erfolgen. Für alle Varianten gilt, dass je nach den spezifischen Verhältnissen des zu markierenden Produktes (d. h. Geometrie, Anzahl, Varianz der Produkte etc.) sowie des Betriebs (z. B. Platzverhältnisse) entweder die Werkstücke an eine fest installierten Markierungseinheit geführt werden (z. B. per Hand, halb- oder vollautomatisiert etc.) oder eine mobile Markierungseinheit an das Werkstück herangeführt wird (z. B. per Hand, halb- oder vollautomatisiert etc.). Es ist auch eine Kombination beider Möglichkeiten denkbar.

Relevant bei der Markierung ist unter anderem auch die Positionierung des zu markierenden Produkts zu dem Laser - zum einen, um die Markierung gezielt an vordefinierter Stelle zu setzen. Denn die Kennzeichnungen auf definierten Bauteilpunkten sind z. B. gerade in der Reproduzierung von Abläufen in Montagelinien sinnvoll; so können die Produkte leichter ausgelesen und auch nach Einbau noch identifiziert werden. Zum anderen sollte für eine optimale Kennzeichnung eine definierte Relativbewegung zwischen Bauteil und Laser ermöglicht werden; andernfalls könnten Verzerrungen und undeutliche Barcodes bzw. Beschriftungen erzeugt werden. Um die exakte Positionierung für ein Laser/Bauteil-System zu erreichen, sollten die Bauteile vereinzelt positioniert werden. Anders kann sich dies aber bei der Arbeit mit einer mobilen Einheit von Hand aus gestalten: Hier wird die Positionierung manuell durchgeführt, und die Bewegung des Lasers erfolgt im Bedienteil. Bei teil- oder vollautomatischen Modulen erfolgt die Zuteilung über die entsprechende Peripherie. Dies ist stark von den zu markierenden Bauteilen (d. h. Größe, Form, Anzahl etc.) abhängig. Denkbar ist hier vor allem in Serienprozessen die Abnahme der Bauteile von Hand auf einer Förderstraße, gegebenenfalls mit Fixierung, um bereits die Orientierung der Bauteile in alle drei Raumrichtungen (d. h. x-, y- und z-Richtung) vorzugeben. Im Anschluss können die Bauteile einer Lasereinheit zugeführt werden. So können Position und kontinuierliche Geschwindigkeit des zu markierenden Produkts zum Laser gewährleistet werden. Bei Kleinteilen in großer Menge kann dies mit Hilfe von Vereinzelungs- und Sortiereinrichtungen erfolgen. Die Kombination von Nacharbeit bzw. Korrekturmaßnahmen und Kennzeichnung ist ebenfalls möglich. Hier kann z. B. eine Stanzmaschine die Zinkspitzen entfernen und im Anschluss direkt kennzeichnen, da die Bauteile schon in fixierter Lage und Orientierung im Prozess vorliegen und somit weitere Handhabungsvorgänge vermieden werden. Die vorstehenden Ausführungen verdeutlichen, dass das erfindungsgemäße Verfahren nicht nur äußerst effizient arbeitet, sondern auch extrem flexibel und variabel einsetzbar ist.

Weiterer Gegenstand der vorliegenden Erfindung - gemäß einem **zweiten** Aspekt der vorliegenden Erfindung - ist ein mit einer Kennzeichnung und/oder Markierung versehenes feuerverzinktes (schmelztauchverzinktes) Metallbauteil, insbesondere Stahlbauteil, welches erhältlich ist durch das zuvor beschriebene Verfahren nach der vorliegenden Erfindung.

Mit anderen Worten ist Gegenstand dieses Erfindungsaspekts ein mit einer Kennzeichnung und/oder Markierung versehenes feuerverzinktes Metallbauteil, insbesondere Stahlbauteil, wobei das verzinkte Metallbauteil ein eisenbasiertes Grundmaterial, vorzugsweise Stahl, und eine auf dem Grundmaterial aufgebrachte Verzinkungsschicht aufweist, wobei das verzinkte Metallbauteil mit einer dauerhaften Markierung versehen ist, wobei die Verzinkungsschicht selektiv nur in einem vorgegebenen Bereich der zu erzeugenden Markierung unter Einwirkung von Laserstrahlung einer chemischen Reaktion mit mindestens einem Reaktionsgas unterzogen worden ist, so dass selektiv nur im Bereich der Markierung eine Umsetzung der Verzinkungsschicht erfolgt ist und das resultierende Umsetzungsprodukt der Verzinkungsschicht die dauerhafte Markierung ausbildet,

wobei die Erzeugung oder Anbringung der dauerhaften Markierung und die Umsetzung der Verzinkungsschicht zumindest im Wesentlichen ohne Materialabtrag der Verzinkungsschicht erfolgt ist und wobei die Erzeugung oder Anbringung der dauerhaften Markierung und die Umsetzung der Verzinkungsschicht derart erfolgt ist, dass die Verzinkungsschicht im Bereich der Markierung nicht bis zum unterliegenden Grundmaterial umgesetzt ist,

wobei bei der Erzeugung der dauerhaften Markierung die Verzinkungsschicht selektiv nur in einem vorgegebenen Bereich der zu erzeugenden Markierung mit einem gepulsten Laserstrahl ein- oder mehrmals auf solche Weise abgetastet worden ist, dass benachbarte Lichtflecke des Laserstrahls lückenlos aneinanderstoßen oder sich überlappen und

wobei das im Bereich der Markierung gebildete Umsetzungsprodukt der Verzinkungsschicht ausgewählt ist aus der Gruppe von Oxiden, Nitriden, Carbonaten und/oder Boriden des Zinks sowie gegebenenfalls weiterer in der Verzinkungsschicht vorhandener Metalle.

Wie zuvor bereits im Hinblick auf das erfindungsgemäße Verfahren beschrieben, ist bei dem erfindungsgemäßen, mit einer Kennzeichnung und/oder Markierung versehenen feuerverzinkten Metallbauteil die Erzeugung oder Anbringung der dauerhaften Markierung und/oder die Umsetzung der Verzinkungsschicht zumindest im Wesentlichen ohne Materialabtrag der Verzinkungsschicht erfolgt.

Erfindungsgemäß ist bei dem erfindungsgemäßen Metallbauteil die Erzeugung oder Anbringung der dauerhaften Markierung und/oder die Umsetzung der Verzinkungsschicht derart erfolgt, insbesondere mit einer solchen Laserenergie und/oder unter solchen Reaktionsbedingungen, dass die Verzinkungsschicht im Bereich der Markierung nicht bis zum unterliegenden Grundmaterial umgesetzt ist, vorzugsweise ohne Materialabtrag.

Insbesondere ist das erfindungsgemäße Metallbauteil derart ausgebildet, dass die Erzeugung oder Anbringung der dauerhaften Markierung und/oder die Umsetzung der Verzinkungsschicht derart erfolgt ist, insbesondere mit einer solchen Laserenergie, dass die Verzinkungsschicht im Bereich der Markierung zu höchstens 99 % ihrer Dicke, insbesondere zu höchstens 95 % ihrer Dicke, vorzugsweise zu höchstens 90 % ihrer Dicke, bevorzugt zu höchstens 80 % ihrer Dicke, besonders bevorzugt zu höchstens 70 % ihrer Dicke, ganz besonders bevorzugt zu höchstens 60 % ihrer Dicke, noch mehr bevorzugt zu höchstens 50 % ihrer Dicke, umgesetzt ist.

Wie zuvor im Rahmen der vorliegenden Erfindung bereits beschrieben, ist bei dem erfindungsgemäßen Metallbauteil das im Bereich der Markierung gebildete Umsetzungsprodukt der Verzinkungsschicht ausgewählt aus der Gruppe von Oxiden, Nitriden, Carbonaten und/oder Boriden, vorzugsweise Oxiden, Nitriden und/oder Carbonaten, des Zinks sowie gegebenenfalls weiterer in der Verzinkungsschicht vorhandener (Legierungs-)Metalle.

Gemäß einer erfindungsgemäß bevorzugten Ausführungsform ist bei dem erfindungsgemäßen, mit einer Kennzeichnung und/oder Markierung versehenen verzinkten Metallbauteil das im Bereich der Markierung gebildete Umsetzungsprodukt der Verzinkungsschicht andersfarbig als die Verzinkungsschicht ausgebildet. Mit anderen Worten ist gemäß dieser bevorzugten Ausführungsform die Markierung in der Farbgebung verschieden von der Verzinkungsschicht ausgebildet und/oder farblich von der Verzinkungsschicht unterscheidbar.

Wie zuvor bereits ausgeführt, weist die Verzinkungsschicht des erfindungsgemäßen, mit einer Kennzeichnung und/oder Markierung versehenen verzinkten (Metall-)Bauteils üblicherweise eine Verzinkungsschicht mit einer Dicke von 0,5 bis 300 $\mu m$, insbesondere 1 bis 200 $\mu m$, vorzugsweise 1,5 bis 100 $\mu m$, bevorzugt 2 bis 30 $\mu m$, auf.

Die Verzinkungsschicht des erfindungsgemäßen Metallbauteils kann aus zumindest im Wesentlichen reinem Zink oder aber aus einer Zinklegierung, vorzugsweise aus einer Zinklegierung, gebildet sein.

Gemäß einer typischen Ausführungsform der vorliegenden Erfindung ist die Verzinkungsschicht des erfindungsgemäßen gekennzeichneten und/oder markierten Metallbauteils aus einer Zinklegierung gebildet. Dabei kann die Verzinkungsschicht Zink sowie als Legierungsmetall Aluminium in einer Menge von 0,0001 bis 25 Gew.-%, insbesondere in einer Menge von 0,001 bis 20 Gew.-%, vorzugsweise in einer Menge von 0,005 bis 17,5 Gew.-%, bevorzugt in einer Menge von 0,01 bis 15 Gew.-%, besonders bevorzugt in einer Menge von 0,02 bis 12,5 Gew.-%, ganz besonders bevorzugt in einer Menge von 0,05 bis 10 Gew.-%, noch mehr bevorzugt in einer Menge von 0,1 bis 8 Gew.-%, bezogen auf die Verzinkungsschicht, aufweisen.

Gemäß einer besonderen Ausführungsform der vorliegenden Erfindung kann die Verzinkungsschicht aus einer Zinklegierung gebildet sein. Dabei kann die Verzinkungsschicht eine aluminiumlegierte Verzinkungsschicht ("Zn/Al-Verzinkungsschicht") sein. Insbesondere kann die Verzinkungsschicht, bezogen auf die Verzinkungsschicht, eine Menge an Zink von mindestens 75 Gew.-%, insbesondere mindestens 80 Gew.-%, vorzugsweise mindestens 85 Gew.-%, bevorzugt mindestens 90 Gew.-%, und eine Menge an Aluminium von bis zu 25 Gew.-%, insbesondere bis zu 20 Gew.-%, vorzugsweise bis zu 15 Gew.-%, bevorzugt bis zu 10 Gew.-%, sowie gegebenenfalls mindestens ein weiteres Metall, insbesondere in Mengen von bis zu 5 Gew.-% und/oder insbesondere ausgewählt aus der Gruppe von Bismut (Bi), Blei (Pb), Zinn (Sn), Nickel (Ni), Silizium (Si), Magnesium (Mg) und deren Kombinationen, aufweisen, wobei alle vorstehend genannten Mengenangaben derart auszuwählen sind, dass insgesamt 100 Gew.-% resultieren.

Gemäß einer weiteren bevorzugten Ausführungsform der vorliegenden Erfindung ist die Verzinkungsschicht des erfindungsgemäßen Metallbauteils aus einer Zinklegierung ausgebildet. Insbesondere kann dabei die Verzinkungsschicht die folgenden Zusammensetzungen aufweisen, wobei alle nachfolgend genannten Mengenangaben auf die Verzinkungsschicht bezogen sind und derart auszuwählen sind, dass insgesamt 100 Gew.-% resultieren:

(i) Zink (Zn), insbesondere in Mengen im Bereich von 75 bis 99,9999 Gew.-%, insbesondere im Bereich von 80 bis 99,999 Gew.-%, vorzugsweise im Bereich von 82,5 bis 99,995 Gew.-%, bevorzugt im Bereich von 85 bis 99,99 Gew.-%, besonders bevorzugt im Bereich von 87,5 bis 99,98 Gew.-%, ganz besonders bevorzugt im Bereich von 90 bis 99,95 Gew.-%, noch mehr bevorzugt im Bereich von 92 bis 99,9 Gew.-%,

(ii) Aluminium (Al), insbesondere in Mengen im Bereich von 0,0001 bis 25 Gew.-%, insbesondere im Bereich von 0,001 bis 20 Gew.-%, vorzugsweise im Bereich von 0,005 bis 17,5 Gew.-%, bevorzugt im Bereich von 0,01 bis 15 Gew.-%, besonders bevorzugt im Bereich von 0,02 bis 12,5 Gew.-%, ganz besonders bevorzugt im Bereich von 0,05 bis 10 Gew.-%, noch mehr bevorzugt im Bereich von 0,1 bis 8 Gew.-%,

(iii) gegebenenfalls Bismut (Bi), insbesondere in Mengen von bis zu 0,5 Gew.-%, vorzugsweise in Mengen von bis zu 0,3 Gew.-%, bevorzugt in Mengen von bis zu 0,1 Gew.-%,

(iv) gegebenenfalls Blei (Pb), insbesondere in Mengen von bis zu 0,5 Gew.-%, vorzugsweise in Mengen von bis zu 0,2 Gew.-%, bevorzugt in Mengen von bis zu 0,1 Gew.-%,

(v) gegebenenfalls Zinn (Sn), insbesondere in Mengen von bis zu 0,9 Gew.-%, vorzugsweise in Mengen von bis zu 0,6 Gew.-%, bevorzugt in Mengen von bis zu 0,3 Gew.-%,

(vi) gegebenenfalls Nickel (Ni), insbesondere in Mengen von bis zu 0,1 Gew.-%, vorzugsweise in Mengen von bis zu 0,08 Gew.-%, bevorzugt in Mengen von bis zu 0,06 Gew.-%,

(vii) gegebenenfalls Silizium (Si), insbesondere in Mengen von bis zu 0,1 Gew.-%, vorzugsweise in Mengen von bis zu 0,05 Gew.-%, bevorzugt in Mengen von bis zu 0,01 Gew.-%,

(viii) gegebenenfalls Magnesium (Mg), insbesondere in Mengen von bis zu 5 Gew.-%, vorzugsweise in Mengen von bis zu 2,5 Gew.-%, bevorzugt in Mengen von bis zu 0,8 Gew.-%.

Gemäß einer erfindungsgemäß bevorzugten Ausführungsform ist die Verzinkungsschicht des erfindungsgemäßen Metallbauteils zumindest im Wesentlichen frei, vorzugsweise vollkommen frei, von Blei (Pb) und/oder Nickel (Ni) ausgebildet.

Gemäß einer wiederum weiteren bevorzugten Ausführungsform der vorliegenden Erfindung ist die Verzinkungsschicht des erfindungsgemäßen Metallbauteils zumindest im Wesentlichen frei, vorzugsweise vollkommen frei, von Schwermetallen aus der Gruppe von Blei (Pb), Nickel (Ni), Cobalt (Co), Mangan (Mn), Zinn (Sn), Bismut (Bi) und Antimon (Sb) ausgebildet.

Wie zuvor bereits im Zusammenhang mit dem erfindungsgemäßen Verfahren ausgeführt, ist die Verzinkungsschicht des erfindungsgemäßen Metallbauteils durch Feuerverzinkung (synonym auch als Schmelztauchverzinkung bezeichnet) erzeugt worden. Dies führt zu Verzinkungsschichten mit besonders hohem Korrosionsschutz und besonders guten mechanischen Eigenschaften.

Für weitergehende Einzelheiten zu dem erfindungsgemäßen, mit einer Kennzeichnung und/oder Markierung versehenen feuerverzinkten (schmelztauchverzinkten) Metallbauteil nach der vorliegenden Erfindung kann auf die oben stehenden Ausführungsformen zu dem erfindungsgemäßen Verfahren verwiesen werden, welche in Bezug auf das erfindungsgemäße Metallbauteil entsprechend gelten.

Ebenfalls beschrieben, jedoch nicht beansprucht, ist die Verwendung einer laserinduzierten Reaktion, insbesondere Laserstrahlung, zur Kennzeichnung und/oder Markierung eines verzinkten, insbesondere feuerverzinkten (schmelztauchverzinkten) (Metall-)Bauteils, insbesondere Stahlbauteils, wobei das verzinkte (Metall-)Bauteil ein metallisches, insbesondere eisenbasiertes Grundmaterial, vorzugsweise Stahl, und eine auf dem Grundmaterial aufgebrachte Verzinkungsschicht aufweist, wobei das verzinkte (Metall-)Bauteil mit einer dauerhaften Markierung (Permanentmarkierung) versehen wird, wobei die Verzinkungsschicht selektiv (nur) in einem vorgegebenen Bereich der zu erzeugenden Markierung laserinduziert, insbesondere unter Einwirkung von Laserenergie, insbesondere Laserstrahlung, einer chemischen Reaktion mit mindestens einem Umgebungsgas (Reaktionsgas) unterzogen wird, so dass selektiv (nur) im Bereich der Markierung eine Umsetzung der Verzinkungsschicht erfolgt und das resultierende Umsetzungsprodukt der Verzinkungsschicht die dauerhafte Markierung ausbildet.

Für weitergehende Einzelheiten zu der zuvor beschriebenen Verwendung kann zur Vermeidung unnötiger Wiederholungen auf die obigen Ausführungen zu dem erfindungsgemäßen Verfahren und zu den erfindungsgemäßen Produkten verwiesen werden, welche in Bezug auf die zuvor beschriebene Verwendung entsprechend gelten.

Ebenfalls beschrieben, jedoch nicht beansprucht, ist eine Vorrichtung zur Kennzeichnung und/oder Markierung eines verzinkten, insbesondere feuerverzinkten (schmelztauchverzinkten) (Metall-)Bauteils, insbesondere Stahlbauteils, wobei das verzinkte (Metall-)-Bauteil ein metallisches, insbesondere eisenbasiertes Grundmaterial, vorzugsweise Stahl, und eine auf dem Grundmaterial aufgebrachte Verzinkungsschicht aufweist, insbesondere eine Vorrichtung zur Durchführung des zuvor beschriebenen erfindungsgemäßen Verfahrens,

wobei die Vorrichtung, insbesondere mittels einer Steuereinrichtung, derart ausgebildet ist und/oder derart steuerbar ist, dass das verzinkte (Metall-)Bauteil mit einer dauerhaften Markierung (Permanentmarkierung) versehen wird, wobei die Vorrichtung die Verzinkungsschicht selektiv (nur) in einem vorgegebenen Bereich der zu erzeugenden Markierung laserinduziert, insbesondere unter Einwirkung von Laserenergie, insbesondere Laserstrahlung, einer chemischen Reaktion mit mindestens einem Umgebungsgas (Reaktionsgas) aussetzt, so dass selektiv (nur) im Bereich der Markierung eine Umsetzung der Verzinkungsschicht erfolgt und das resultierende Umsetzungsprodukt der Verzinkungsschicht die dauerhafte Markierung ausbildet.

Insbesondere ist die zuvor beschriebene Vorrichtung derart ausgebildet, dass die Vorrichtung und/oder die Steuereinrichtung zur Erzeugung oder Anbringung der dauerhaften Markierung und/oder zur Umsetzung der Verzinkungsschicht zumindest im Wesentlichen ohne Materialabtrag der Verzinkungsschicht ausgebildet und/oder vorgesehen und/oder steuerbar ist/sind.

Gemäß einer besonderen Ausführungsform ist die zuvor beschriebene Vorrichtung derart ausgestaltet, dass die Vorrichtung und/oder die Steuereinrichtung zur Erzeugung oder Anbringung der dauerhaften Markierung und/oder zur Umsetzung der Verzinkungsschicht ausgebildet und/oder vorgesehen und/oder steuerbar ist/sind derart, insbesondere in Abhängigkeit von der Laserenergie und/oder in Abhängigkeit von den Reaktionsbedingungen, dass die Verzinkungsschicht im Bereich der Markierung nicht bis zum unterliegenden Grundmaterial umgesetzt wird.

Gemäß einer wiederum weiteren Ausführungsform ist die zuvor beschriebene Vorrichtung derart betreibbar, dass die Vorrichtung und/oder die Steuereinrichtung zur Erzeugung oder Anbringung der dauerhaften Markierung und/oder zur Umsetzung der Verzinkungsschicht ausgebildet und/oder vorgesehen und/oder steuerbar ist/sind derart, insbesondere in Abhängigkeit von der Laserenergie und/oder in Abhängigkeit von den Reaktionsbedingungen, dass die Verzinkungsschicht im Bereich der Markierung zu höchstens 99 % ihrer Dicke, insbesondere zu höchstens 95 % ihrer Dicke, vorzugsweise zu höchstens 90 % ihrer Dicke, bevorzugt zu höchstens 80 % ihrer Dicke, besonders bevorzugt zu höchstens 70 % ihrer Dicke, ganz besonders bevorzugt zu höchstens 60 % ihrer Dicke, noch mehr bevorzugt zu höchstens 50 % ihrer Dicke, umgesetzt wird.

Gemäß einer weiteren besonderen Ausführungsform ist es vorgesehen, dass die zuvor beschriebene Vorrichtung und/oder die Steuereinrichtung ausgebildet und/oder vorgesehen und/oder steuerbar ist/sind derart, dass das eingesetzte Umgebungsgas ausgewählt werden kann aus der Gruppe von Sauerstoff, Stickstoff, Kohlenstoffoxiden und Boranen sowie deren Mischungen und Kombinationen, vorzugsweise aus der Gruppe von Sauerstoff, Stickstoff und Kohlenstoffoxiden sowie deren Mischungen und Kombinationen, gegebenenfalls in Kombination mit mindestens einem nichtreaktiven Gas, insbesondere mindestens einem Edelgas.

Gemäß einer wiederum weiteren Ausführungsform der zuvor beschriebenen Vorrichtung kann es vorgesehen sein, dass die Vorrichtung und/oder die Steuereinrichtung zur Umsetzung der Verzinkungsschicht zu Oxiden, Nitriden, Carbonaten und/oder Boriden, vorzugsweise Oxiden, Nitriden und/oder Carbonaten, insbesondere des Zinks sowie gegebenenfalls weiterer in der Verzinkungsschicht vorhandener (Legierungs-)Metalle, ausgebildet und/oder vorgesehen und/oder steuerbar ist/sind.

Gemäß einer wiederum weiteren Ausführungsform kann es vorgesehen sein, dass die zuvor beschriebene Vorrichtung und/oder die Steuereinrichtung ausgebildet und/oder vorgesehen und/oder steuerbar ist/sind derart, dass die Reaktion der Verzinkungsschicht im Bereich der anzubringenden Markierung mittels und/oder in Abhängigkeit von der Menge der einwirkenden Laserenergie, insbesondere Laserimpulsleistung, Laserimpulslänge, Laserpulsdauer, Laserimpulsrepetitionsrate und/oder Laserwellenlänge, und/oder mittels und/oder in Abhängigkeit von den Reaktionsbedingungen, insbesondere Druck, Temperatur und/oder Zusammensetzung des Umgebungsgases (Reaktionsgases), gesteuert werden kann.

Gemäß einer besonderen Ausführungsform kann es vorgesehen sein, dass die zuvor beschriebene Vorrichtung und/oder die Steuereinrichtung ausgebildet und/oder vorgesehen und/oder steuerbar ist/sind derart,

dass die Reaktion der Verzinkungsschicht bei einer Laserwellenlänge im Bereich von 100 nm bis 11.000 nm, insbesondere im Bereich von 200 nm bis 6.000 nm, vorzugsweise im Bereich von 400 nm bis 3.000 nm, besonders bevorzugt im Bereich von 500 nm bis 2.000 nm, erfolgt; und/oder

dass die Reaktion der Verzinkungsschicht bei einer Impulslänge der Laserimpulse im Bereich von 0,1 ns bis 2.000 ns, insbesondere im Bereich von 0,1 ns bis 1.000 ns, vorzugsweise im Bereich von 0,2 ns bis 295 ns, besonders bevorzugt im Bereich von 0,5 ns bis 195 ns, erfolgt; und/oder

dass die Reaktion der Verzinkungsschicht bei einer mittleren Leistung der austretenden Laserstrahlung im Bereich von 5 Watt bis 30.000 Watt, insbesondere im Bereich von 7,5 Watt bis 1.000 Watt, vorzugsweise im Bereich von 10 Watt bis 1.000 Watt, besonders bevorzugt im Bereich von 10 Watt bis 500 Watt, erfolgt; und/oder

dass die Reaktion der Verzinkungsschicht bei einer Impulsspitzenleistung der austretenden Laserstrahlung im Bereich von 0,1 Kilowatt bis 3.000 Kilowatt, insbesondere im Bereich von 1 Kilowatt bis 2.000 Kilowatt, vorzugsweise im Bereich von 2 Kilowatt bis 1.800 Kilowatt, erfolgt; und/oder

dass die Reaktion der Verzinkungsschicht bei einer Repetitionsrate der Laserimpulse im Bereich von 1 kHz bis 5.000 kHz, insbesondere im Bereich von 5 kHz bis 4.000 kHz, vorzugsweise im Bereich von 10 kHz bis 3.000 kHz, erfolgt; und/oder

dass die Reaktion der Verzinkungsschicht mit einem Durchmesser der Laserstrahlung auf der Oberfläche der Verzinkungsschicht im Bereich von 1 μm bis 10.000 μm, insbesondere im Bereich von 5 μm bis 8.000 μm, vorzugsweise im Bereich von 10 μm bis 6.000 μm, besonders bevorzugt im Bereich von 25 μm bis 4.000 μm, erfolgt; und/oder

dass die Reaktion der Verzinkungsschicht mit einer Laserabtastgeschwindigkeit auf der Oberfläche der Verzinkungsschicht im Bereich von 10 mm/s bis 30.000 mm/s, insbesondere im Bereich von 20 mm/s bis 25.000 mm/s, vorzugsweise im Bereich von 25 mm/s bis 22.000 mm/s, besonders bevorzugt im Bereich von 30 mm/s bis 19.000 mm/s, erfolgt; und/oder

dass die Reaktion der Verzinkungsschicht bei einem Druck im Bereich von 0,001 mbar bis 15 bar, insbesondere im Bereich von 0,005 mbar bis 12 bar, vorzugsweise im Bereich von 0,01 mbar bis 11 bar, besonders bevorzugt im Bereich von 0,1 mbar bis 10 bar, erfolgt; und/oder

dass die Reaktion der Verzinkungsschicht bei einer Temperatur des Umgebungsgases außerhalb des Laserstrahls im Bereich von -50 °C bis 350 °C, insbesondere im Bereich von -40 °C bis 325 °C, vorzugsweise im Bereich von -30 °C bis 300 °C, besonders bevorzugt im Bereich von -20 °C bis 200 °C, erfolgt.

Gemäß einer wiederum weiteren bevorzugten Ausführungsform ist die zuvor beschriebene Vorrichtung derart ausgebildet, dass die Vorrichtung und/oder die Steuereinrichtung ausgebildet und/oder vorgesehen und/oder steuerbar ist/sind derart,

dass bei der Erzeugung der dauerhaften Markierung (Permanentmarkierung) die Verzinkungsschicht selektiv (nur) in einem vorgegebenen Bereich der zu erzeugenden Markierung mit einem gepulsten Laserstrahl ein- oder mehrmals auf solche Weise abgetastet wird, dass benachbarte Lichtflecke des Laserstrahls lückenlos aneinanderstoßen oder sich überlappen; und/oder

dass die Reaktion der Verzinkungsschicht im Bereich der anzubringenden Markierung laserinduziert, insbesondere unter Einwirkung von Laserenergie, insbesondere Laserstrahlung, erfolgt, insbesondere mit gepulster Laserstrahlung, wobei die folgende Bedingung eingehalten wird:

$$0,075 \leq \text{Epsilon} \leq 2.275$$

mit

$$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

worin:

$P_p$: Impulsspitzenleistung der austretenden Laserstrahlung [kW]
$P_m$: mittlere Leistung der austretenden Laserstrahlung [W]
$t$: Impulslänge der Laserimpulse [ns],
$f$: Repetitionsrate der Laserimpulse [kHz]
$v$: Abtastgeschwindigkeit an der Oberfläche der Verzinkungsschicht [mm/s]
$d$: Durchmesser des Laserstrahls am Werkstück [μm]
$\alpha$: Absorption der Laserstrahlung der bestrahlten Verzinkungsschicht [%] bei Normalbedingungen
$\lambda$: Wellenlänge der Laserstrahlung [nm],
$T_v$: Siedepunkt der Verzinkungsschicht [K] bei Normaldruck
$c_p$: spezifische Wärmekapazität der Verzinkungsschicht [J/kg K] bei Normalbedingungen
$\kappa$: spezifische Wärmeleitfähigkeit der Verzinkungsschicht [W/m·K] bei Normalbedingungen.

Für weitergehende Einzelheiten zu der zuvor beschriebenen Vorrichtung kann zur Vermeidung unnötiger Wiederholungen auf die obigen Ausführungen zu den übrigen Erfindungsaspekten (d. h. erfindungsgemäßes Verfahren sowie erfindungsgemäße Produkte) verwiesen werden, welche in Bezug auf die zuvor beschriebene Vorrichtung entsprechend gelten.

Schließlich ist Gegenstand der vorliegenden Erfindung - gemäßen einem **dritten** Aspekt der vorliegenden Erfindung - eine Anlage zur Herstellung eines mit einer Kennzeichnung und/oder Markierung versehenen feuerverzinkten Metallbauteils, insbesondere Stahlbauteils, wobei das feuerverzinkte Metallbauteil ein eisenbasiertes Grundmaterial, vorzugsweise Stahl, und eine auf dem Grundmaterial aufgebrachte Verzinkungsschicht aufweist, wobei das verzinkte Metallbauteil mit einer dauerhaften Markierung versehen ist, wobei die Verzinkungsschicht selektiv nur in einem vorgegebenen Bereich der zu erzeugenden Markierung laserinduziert unter Einwirkung von Laserstrahlung einer chemischen Reaktion mit mindestens einem Reaktionsgas unterzogen worden ist, so dass selektiv nur im Bereich der Markierung eine Umsetzung der Verzinkungsschicht erfolgt ist und das resultierende Umsetzungsprodukt der Verzinkungsschicht die dauerhafte Markierung ausbildet,

wobei die Anlage einerseits eine Vorrichtung zur Kennzeichnung und/oder Markierung eines feuerverzinkten Metallbauteils, insbesondere Stahlbauteils, sowie andererseits, vorgeschaltet zur Vorrichtung und/oder in Prozessrichtung stromaufwärts zur Vorrichtung, eine Feuerverzinkungsvorrichtung zur Herstellung eines feuerverzinkten Metallbauteils, insbesondere Stahlbauteils, umfasst;

wobei die Vorrichtung zur Kennzeichnung und/oder Markierung mittels einer Steuereinrichtung derart ausgebildet ist, dass das verzinkte Metallbauteil mit einer dauerhaften Markierung versehen wird, wobei die Vorrichtung die Verzinkungsschicht selektiv nur in einem vorgegebenen Bereich der zu erzeugenden Markierung laserinduziert unter Einwirkung von Laserstrahlung, einer chemischen Reaktion mit mindestens einem Reaktionsgas aussetzt, so dass selektiv nur im Bereich der Markierung eine Umsetzung der Verzinkungsschicht erfolgt und das resultierende Umsetzungsprodukt der Verzinkungsschicht die dauerhafte Markierung ausbildet,

wobei die Steuereinrichtung zur Erzeugung oder Anbringung der dauerhaften Markierung und zur Umsetzung der Verzinkungsschicht zumindest im Wesentlichen ohne Materialabtrag der Verzinkungsschicht ausgebildet und/oder vorgesehen ist und wobei die Steuereinrichtung zur Erzeugung oder Anbringung der dauerhaften Markierung und/oder zur Umsetzung der Verzinkungsschicht ausgebildet und/oder vorgesehen ist derart, dass die Verzinkungsschicht im Bereich der Markierung nicht bis zum unterliegenden Grundmaterial umgesetzt wird,

wobei die Steuereinrichtung ausgebildet und/oder vorgesehen ist derart, dass bei der Erzeugung der dauerhaften Markierung die Verzinkungsschicht selektiv nur in einem vorgegebenen Bereich der zu erzeugenden Markierung mit einem gepulsten Laserstrahl ein- oder mehrmals auf solche Weise abgetastet wird, dass benachbarte Lichtflecke des Laserstrahls lückenlos aneinanderstoßen oder sich überlappen,

wobei die Steuereinrichtung zur Umsetzung der Verzinkungsschicht zu Oxiden, Nitriden, Carbonaten und/oder Boriden des Zinks sowie gegebenenfalls weiterer in der Verzinkungsschicht vorhandener Metalle ausgebildet und/oder vorgesehen ist und

wobei die Steuereinrichtung ausgebildet und/oder vorgesehen ist derart, dass die Reaktion der Verzinkungsschicht im Bereich der anzubringenden Markierung laserinduziert unter Einwirkung von Laserstrahlung, erfolgt, insbesondere mit gepulster Laserstrahlung, wobei die folgende Bedingung eingehalten wird:

$$0{,}075 \leq \text{Epsilon} \leq 2.275$$

mit

$$\text{Epsilon} = 10^3 \bullet \frac{[\, (P_p)^2 \bullet (\sqrt{P_m}) \bullet f \bullet \alpha \bullet (\sqrt{t}) \bullet (\sqrt{\kappa}) \,]}{[\, d^2 \bullet (\sqrt{v}) \bullet (\sqrt{T_v}) \bullet (\sqrt{c_p}) \bullet (\sqrt{\lambda}) \,]}$$

worin:

$P_p$:    Impulsspitzenleistung der austretenden Laserstrahlung [kW]
$P_m$:    mittlere Leistung der austretenden Laserstrahlung [W]
t:    Impulslänge der Laserimpulse [ns],
f:    Repetitionsrate der Laserimpulse [kHz]
v:    Abtastgeschwindigkeit an der Oberfläche der Verzinkungsschicht [mm/s]
d:    Durchmesser des Laserstrahls am Werkstück [μm]
$\alpha$:    Absorption der Laserstrahlung der bestrahlten Verzinkungsschicht [%] bei Normalbedingungen
$\lambda$:    Wellenlänge der Laserstrahlung [nm],
$T_v$:    Siedepunkt der Verzinkungsschicht [K] bei Normaldruck
$c_p$:    spezifische Wärmekapazität der Verzinkungsschicht [J/kg·K] bei Normalbedingungen
$\kappa$:    spezifische Wärmeleitfähigkeit der Verzinkungsschicht [W/m·K] bei Normalbedingungen.

Bei der erfindungsgemäßen Anlage ist die Verzinkungsvorrichtung der erfindungsgemäßen Anlage als Feuerverzinkungsvorrichtung ausgebildet.

Gemäß einer besonders bevorzugten Ausführungsform der erfindungsgemäßen Anlage ist die Verzinkungsvorrichtung als Feuerverzinkungsvorrichtung ausgebildet, wobei die Feuerverzinkungsvorrichtung die folgende Behandlungseinrichtungen in der nachfolgend aufgeführten Abfolge umfasst:

(A) mindestens eine Entfettungseinrichtung, insbesondere mindestens ein Entfettungsbad, zur vorzugsweise alkalischen Entfettungsbehandlung von (Metall-)Bauteilen; in Prozessrichtung nachgeschaltet oder stromabwärts zu (A)

(B) gegebenenfalls mindestens eine Spüleinrichtung, insbesondere mindestens ein Spülbad, zum Spülen von in der Entfettungseinrichtung (A) entfetteten (Metall-)Bauteilen; in Prozessrichtung nachgeschaltet oder stromabwärts zu (B)

(C) mindestens eine Beizeinrichtung, insbesondere mindestens ein Beizbad, zur vorzugsweise sauren Beizbehandlung von in der Entfettungseinrichtung (A) entfetteten und gegebenenfalls in der Spüleinrichtung (B) gespülten (Metall-)-Bauteilen; in Prozessrichtung nachgeschaltet oder stromabwärts zu (C)

(D) gegebenenfalls mindestens eine Spüleinrichtung, insbesondere mindestens ein Spülbad, zum Spülen von in der Beizeinrichtung (C) gebeizten (Metall-)-Bauteilen; in Prozessrichtung nachgeschaltet oder stromabwärts zu (D)

(E) mindestens eine Flussmittelbehandlungseinrichtung zur Flussmittelbehandlung von in der Beizeinrichtung (C) gebeizten und gegebenenfalls in der Spüleinrichtung (D) gespülten (Metall-)Bauteilen, wobei die Flussmittelbehandlungseinrichtung mindestens ein Flussmittelbad mit einer Flussmittelzusammensetzung aufweist; in Prozessrichtung nachgeschaltet oder stromabwärts zu (E)

(F) gegebenenfalls mindestens eine Trocknungseinrichtung zur Trocknung von in der Flussmittelbehandlungseinrichtung (E) einer Flussmittelbehandlung unterzogenen (Metall-)Bauteilen; in Prozessrichtung nachgeschaltet oder stromabwärts zu (F)

(G) mindestens eine Feuerverzinkungseinrichtung (Schmelztauchverzinkungseinrichtung) zur Feuerverzinkung (Schmelztauchverzinkung) von in der Flussmittelbehandlungseinrichtung (E) einer Flussmittelbehandlung unterzogenen und gegebenenfalls in der Trocknungseinrichtung (F) getrockneten (Metall-)Bauteilen, wobei die Feuerverzinkungseinrichtung (Schmelztauchverzinkungseinrichtung) mindestens ein eine gegebenenfalls mit mindestens einem weiteren Metall legierte Zinkschmelze enthaltendes Verzinkungsbad, vorzugsweise zum (Ein-)Tauchen von (Metall-)Bauteilen in das Verzinkungsbad, aufweist; in Prozessrichtung nachgeschaltet oder stromabwärts zu (G)

(H) gegebenenfalls mindestens Abkühleinrichtung zur Abkühlung der in der Feuerverzinkungseinrichtung (F) feuerverzinkten (Metall-)Bauteile, insbesondere in Gegenwart von Luft betreibbar ausgestaltet; in Prozessrichtung nachgeschaltet oder stromabwärts zu (H)

(I) gegebenenfalls mindestens eine Nachbearbeitungs- und/oder Nachbehandlungseinrichtung zur Nachbearbeitung und/oder Nachbehandlung der feuerverzinkten und gegebenenfalls abgekühlten (Metall-)Bauteile.

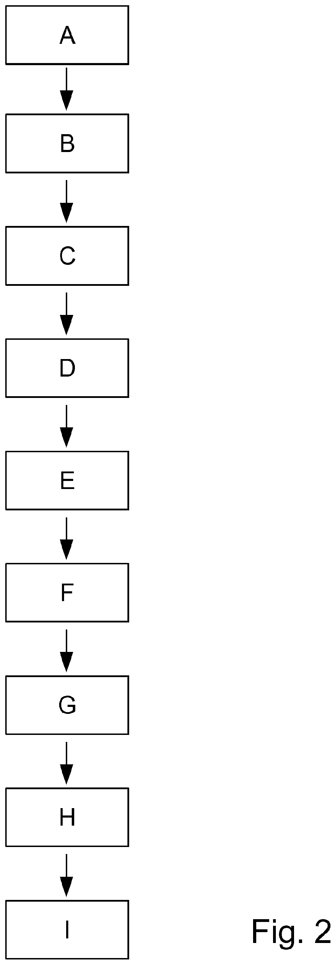

Eine entsprechende Feuerverzinkungsvorrichtung, wie sie im Rahmen der erfindungsgemäßen Anlage zum Einsatz kommen kann, ist exemplarisch und schematisch in der nachfolgend noch im Detail diskutierten Fig. 2 dargestellt, auf welche nachfolgend noch eingegangen wird.

Im Rahmen der erfindungsgemäßen Anlage kann die erfindungsgemäße Vorrichtung zur Kennzeichnung und/oder Markierung der verzinkten Metallbauteile in Prozessrichtung nachgeschaltet oder stromabwärts zur Abkühleinrichtung (H), aber vorgeschaltet zur Nachbearbeitungs- und/oder Nachbehandlungseinrichtung (I) angeordnet sein oder aber gemäß einer Alternative in Prozessrichtung nachgeschaltet oder stromabwärts zur Nachbearbeitungs- und/oder Nachbehandlungseinrichtung (I) angeordnet sein.

Für weitergehende Einzelheiten zu der erfindungsgemäßen Anlage kann zur Vermeidung unnötiger Wiederholungen auf die obigen Ausführungen zu den übrigen Erfindungsaspekten verwiesen werden, welche in Bezug auf die erfindungsgemäße Anlage entsprechend gelten.

Weitere Merkmale, Vorteile und Anwendungsmöglichkeiten der vorliegenden Erfindung ergeben sich aus der nachfolgenden Beschreibung von Ausführungsbeispielen anhand von Zeichnungen und den Zeichnungen selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen und deren Rückbeziehungen.

Es zeigt:

Fig. 1            eine schematische Darstellung des Ablaufs eines Verzinkungsverfahrens, insbesondere Feuerverzinkungsverfahrens, zur Erzeugung einer Verzinkungsschicht auf Metallbauteilen, welche im Rahmen des erfindungsgemäßen Verfahrens mit einer Kennzeichnung und/oder Markierung versehen werden, gemäß einer besonderen Ausführungsform der vorliegenden Erfindung,

Fig. 2     eine schematische Darstellung einer im Rahmen der erfindungsgemäßen Anlage einsetzbaren Verzinkungsvorrichtung, insbesondere Feuerverzinkungsvorrichtung, zur Erzeugung einer Verzinkungsschicht auf Metallbauteilen, welche im Rahmen des erfindungsgemäßen Verfahrens mit einer Kennzeichnung und/oder Markierung versehen werden, gemäß einer besonderen Ausführungsform der vorliegenden Erfindung,

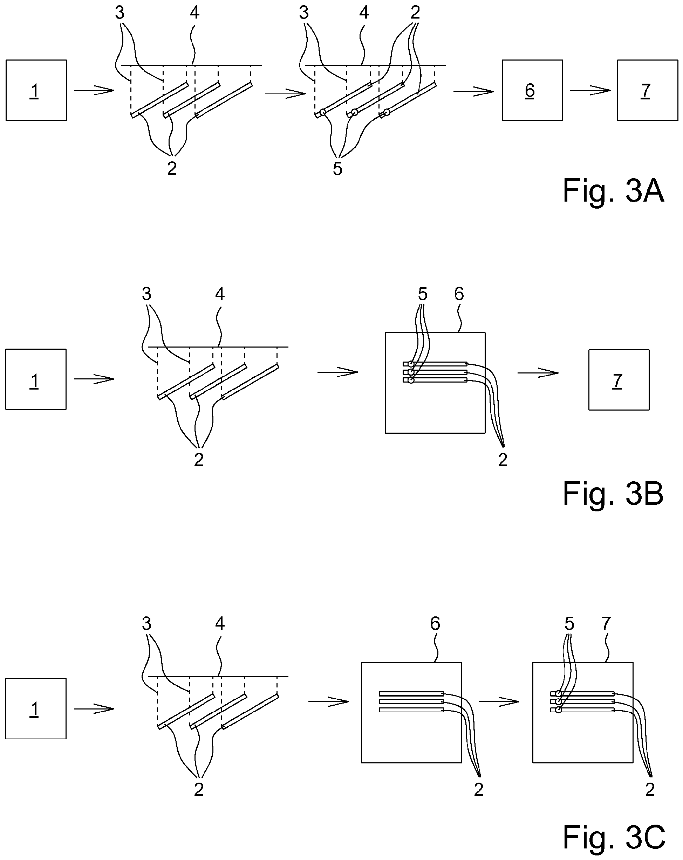

Fig. 3A, 3B, 3C     schematische Verfahrensabläufe des erfindungsgemäßen Verfahrens mit einzelnen Stufen bzw. Verfahrensschritten des erfindungsgemäßen Verfahrens gemäß drei unterschiedlichen Varianten jeweils nach einer besonderen Ausführungsform der vorliegenden Erfindung,

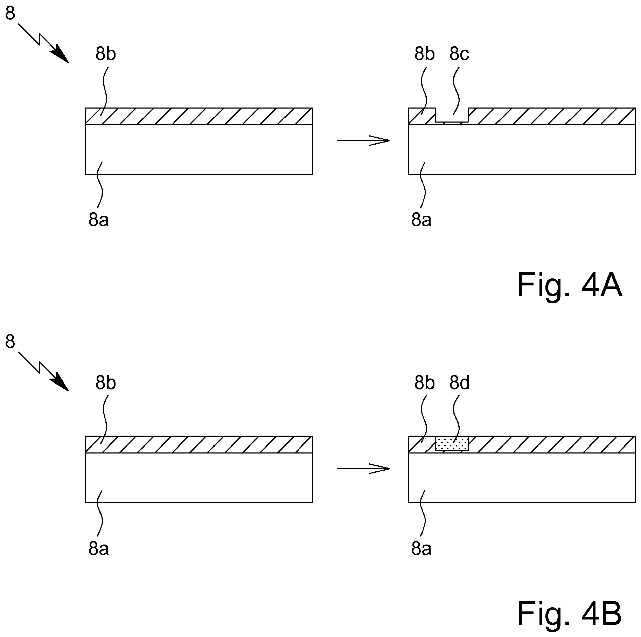

Fig. 4A     einen schematischen Verfahrensablauf eines herkömmlichen Kennzeichnungs- bzw. Markierungsverfahrens nach dem Stand der Technik zur Erzeugung einer Kennzeichnung bzw. Markierung auf einem verzinkten Metallbauteil unter Materialabtrag der Verzinkungsschicht,

Fig. 4B     einen schematischen Verfahrensablauf des erfindungsgemäßen Kennzeichnungs- bzw. Markierungsverfahrens nach einer besonderen Ausführungsform der vorliegenden Erfindung zur Erzeugung einer Kennzeichnung bzw. Markierung auf einem verzinkten Metallbauteil unter Erhalt eines erfindungsgemäßen Produkts (d. h. erfindungsgemäß gekennzeichnetes bzw. markiertes verzinktes Bauteil).

Fig. 1 zeigt eine schematische Darstellung des Ablaufs eines Verzinkungsverfahrens, insbesondere Feuerverzinkungsverfahrens, zur Erzeugung einer Verzinkungsschicht auf Metallbauteilen, welche im Rahmen des erfindungsgemäßen Verfahrens mit einer Kennzeichnung und/oder Markierung versehen werden, gemäß einer besonderen Ausführungsform der vorliegenden Erfindung. In dem in Fig. 1 dargestellten Ablaufschema für das Verzinkungsverfahren sind die sukzessiven Verfahrensstufen bzw. Verfahrensschritte a) bis i) des Verzinkungsverfahrens schematisch dargestellt, wobei die Verfahrensschritte b), d), f), h) und i), insbesondere die Verfahrensschritte h) und i), optional sind. Gemäß dem in Fig. 1 dargestellten Schema ist der Verfahrensablauf wie folgt, wobei das Verzinkungsverfahren die nachfolgend genannten Schritte sukzessiv gemäß dieser Reihenfolge umfasst: Entfettung (Schritt a)); Spülen (Schritt b), optional); Beizen (Schritt c)); Spülen (Schritt d), optional); Flussmittelbadbehandlung (Schritt e)); Trocknung (Schritt f), optional); Feuerverzinkung (Schritt g)); Abkühlung (Schritt h), optional); sowie Nachbearbeitung bzw. Nachbehandlung (Schritt i), optional). Für weitergehende Einzelheiten zu dem Verzinkungsverfahren kann auf die vorstehenden allgemeinen Ausführungen verwiesen werden.

Fig. 2 zeigt eine schematische Darstellung einer im Rahmen der erfindungsgemäßen Anlage einsetzbaren Verzinkungsvorrichtung, insbesondere Feuerverzinkungsvorrichtung, zur Erzeugung einer Verzinkungsschicht auf Metallbauteilen, welche im Rahmen des erfindungsgemäßen Verfahrens mit einer Kennzeichnung und/oder Markierung versehen werden, gemäß einer besonderen Ausführungsform der vorliegenden Erfindung. In Fig. 2 ist schematisch im Rahmen der vorliegenden Erfindung einsetzbare Verzinkungsvorrichtung mit den einzelnen Einrichtungen (A) bis (I) dargestellt, wobei die Einrichtungen (B), (D), (F), (H) und (I), insbesondere die Einrichtungen (H) und (I), optional sind. Gemäß dem in Fig. 2 dargestellten Schema der Verzinkungsvorrichtung umfasst diese in der nachfolgend aufgeführten Abfolge die folgenden Einrichtungen: Entfettungseinrichtung (A), gegebenenfalls Spüleinrichtung (B), Beizeinrichtung (C), gegebenenfalls Spüleinrichtung (D), Flussmittelbehandlungseinrichtung (E), gegebenenfalls Trocknungseinrichtung (F), Feuerverzinkungseinrichtung (G), gegebenenfalls Abkühleinrichtung (H) und gegebenenfalls Nachbearbeitungs- bzw. Nachbehandlungseinrichtung (I). Für weitergehende Einzelheiten zu der Verzinkungsvorrichtung kann auf die vorstehenden allgemeinen Ausführungen verwiesen werden.

Die Fig. 3A, 3B, 3C zeigen schematische Verfahrensabläufe des erfindungsgemäßen Verfahrens mit einzelnen Stufen bzw. Verfahrensschritten des erfindungsgemäßen Verfahrens gemäß drei unterschiedlichen Varianten jeweils nach einer besonderen Ausführungsform der vorliegenden Erfindung. Aus einem Verzinkungsprozess 1 stammende verzinkte, insbesondere feuerverzinkte Metallbauteile 2, welche über eine Aufhängung 3 (z. B. Drähte etc.) jeweils an einem Träger (Warenträger) 4 befestigt sind, werden mittels des erfindungsgemäßen Verfahrens jeweils mit einer dauerhaften Markierung 5 versehen. Die Fig. 3A, 3B, 3C zeigen rein beispielhaft und nichtbeschränkend unterschiedliche Ablaufvarianten: Beispielsweise können die verzinkten Bauteile 2 direkt bzw. unmittelbar am Warenträger 4 hängend markiert werden, d. h. unmittelbar nach der Verzinkung, bevor sich Nacharbeitung 6 und Lagerung 7 anschließen (vgl. Fig. 3A). Alternativ können die verzinkten Bauteile 2 aber auch zunächst von dem Warenträger 4 abgenommen und dann im Bereich der Nacharbeitung 6 markiert werden; hierbei kann die Markierung 5 zeitlich grundsätzlich vor, während oder nach dem Nacharbeitungsschritt erfolgen (vgl. Fig. 3B). Es ist aber auch denkbar, dass die Bauteile auf dem Weg vom Warenträger zur Nacharbeit bzw. von der Nacharbeit zum Lager markiert werden. Des Weiteren kann der Markierungsschritt auch nach Abschluss der Nacharbeitung 6 und Positionierung in Verpackungseinheiten bzw. Lagerung 7 durchgeführt werden (vgl. Fig. 3C). Abweichend von den vorgenannten Varianten kann der Markierungsprozess aber grundsätzlich auch außerhalb des Verzinkungsbetriebs, z. B. im Rahmen der Fertigungslinie, erfolgen (nicht dargestellt); in diesem Fall werden die fertig verzinkten Bauteile an den Hersteller oder Weiterverarbeitungsbetrieb ausgeliefert, und dort kann dann die Markierung an einer Verpackungseinheit oder an einem vereinzelten Bauteil an jeder Stelle des Fertigungsprozesses erfolgen.

Fig. 4A zeigt einen schematischen Verfahrensablauf eines herkömmlichen Kennzeichnungs- bzw. Markierungsverfahrens nach dem Stand der Technik zur Erzeugung einer Kennzeichnung bzw. Markierung auf einem verzinkten Metallbauteil unter Materialabtrag der Verzinkungsschicht. Nach dem Stand der Technik wird ein (Metall-)Bauteil 8, insbesondere Stahlbauteil, welches ein metallisches, insbesondere eisenbasiertes Grundmaterial 8a, vorzugsweise Stahl, und eine auf dem Grundmaterial 8a aufgebrachte Verzinkungsschicht 8b aufweist, einem Kennzeichnungs- oder Markierungsverfahren unter Materialabtrag der Verzinkungsschicht 8b (z. B. mittels Laserablation) unterzogen. Es entsteht ein herkömmliches, mit einer Kennzeichnung und/oder Markierung 8c versehenes verzinktes (Metall-)Bauteil nach dem Stand der Technik mit einer Defektstelle 8c als Kennzeichnung bzw. Markierung, welche nachfolgend einer Nachbearbeitung unterzogen werden muss, um die protektiven Eigenschaften der defekten Verzinkungsschicht wiederherzustellen.

Fig. 4B zeigt dagegen einen schematischen Verfahrensablauf des erfindungsgemäßen Kennzeichnungs- bzw. Markierungsverfahrens nach einer besonderen Ausführungsform der vorliegenden Erfindung zur Erzeugung einer Kennzeichnung bzw. Markierung auf einem verzinkten Metallbauteil unter Erhalt eines erfindungsgemäßen Produkts (d. h. erfindungsgemäß gekennzeichnetes bzw. markiertes verzinktes Bauteil). Erfindungsgemäß wird ein Metallbauteil 8, insbesondere Stahlbauteil, welches ein metallisches, insbesondere eisenbasiertes Grundmaterial 8a, vorzugsweise Stahl, und eine auf dem Grundmaterial 8a aufgebrachte Verzinkungsschicht 8b aufweist, einem erfindungsgemäßen Kennzeichnungs- oder Markierungsverfahren ohne Materialabtrag der Verzinkungsschicht 8b unterzogen. Dabei wird das verzinkte (Metall-)Bauteil 8 mit einer dauerhaften Markierung (Permantmarkierung) 8d versehen, wobei die Verzinkungsschicht 8b selektiv (nur) in einem vorgegebenen Bereich der zu erzeugenden Markierung laserinduziert, insbesondere unter Einwirkung von Laserenergie, insbesondere Laserstrahlung, einer chemischen Reaktion mit mindestens einem Umgebungsgas (Reaktionsgas) unterzogen wird, so dass selektiv (nur) im Bereich der Markierung eine Umsetzung der Verzinkungsschicht erfolgt und das resultierende Umsetzungsprodukt der Verzinkungsschicht die dauerhafte Markierung 8d ausbildet. Eine Nachbearbeitung der Markierung 8d ist folglich nicht erforderlich.

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt, der durch die angehängten Ansprüche definiert wird.

Die vorliegende Erfindung wird anhand der nachfolgenden Ausführungsbeispiele veranschaulicht, welche die vorliegende Erfindung jedoch keinesfalls beschränken sollen, sondern lediglich die beispielhafte und nicht limitierende Durchführungsweise und Ausgestaltung erläutern.

## AUSFÜHRUNGSBEISPIELE

### Herstellung verzinkter Stahlbleche

Musterbleche vom Typ S235 (Maße: 2 mm Dicke, 100 mm x 100 mm Breite) werden jeweils einer Feuerverzinkung nach dem Verfahrensablauf gemäß Fig. 1 und mit der Vorrichtung gemäß Fig. 2 unterzogen.

Das durchgeführte Feuerverzinkungsverfahren umfasst dabei die folgenden Verfahrensschritte in der nachfolgend aufgeführten Reihenfolge (wobei die erfindungsgemäß zum Einsatz kommende Vorrichtung entsprechend ausgebildet ist):

(a) alkalische Entfettungsbehandlung in einem Entfettungsbad (Zusammensetzung des Entfettungsbades gemäß Beispiel 1 von EP 1 352 100 B1),
(b) zweifaches Spülen in zwei aufeinander folgenden Spülbädern mit Wasser,
(c) saure Beizbehandlung (Zusammensetzung des Beizbades gemäß Beispiel 1 von EP 1 352 100 B1),
(d) zweifaches Spülen in zwei aufeinander folgenden Spülbädern mit Wasser,
(e) Flussmittelbehandlung in Flussmittelbad (Tauchbehandlung),
(f) Trocknungsbehandlung (260 °C heißer Luftstrom),
(g) Feuerverzinkung (Schmelztauchverzinkung) in einem Verzinkungsbad entweder mit reinem Zink oder mit einer aluminiumhaltigen bzw. aluminiumlegierten Zinkschmelze ("Zn/Al-Schmelze") (Tauchbehandlung der vorgewärmten und gefluxten Bleche im Verzinkungsbad),
(i) Abkühlung des aus dem Verzinkungsbad entnommenen und feuerverzinkten Blechs an der Luft und gegebenenfalls nachfolgende Behandlung (Passivierung oder Versiegelung).

Auf diese Weise werden verschiedene Blechserien hergestellt:

Serie 1:    Klassische Verzinkung gemäß DIN EN ISO 1461 mit reinem Zink (Zinkschichtdicke: ca. 65 $\mu$m), keine Nachbehandlung

Serie 2:    Klassische Verzinkung gemäß DIN EN ISO 1461 mit reinem Zink (Zinkschichtdicke: ca. 65 $\mu$m), Nachbehandlung mittels Passivierung mit Cr(III)

Serie 3:    Dünnschichtverzinkung gemäß ASTM 1072 mit Zn/Al-Schmelze (microZINQ®-Verfahren; Verzinkung gemäß EP 1 352 100 B1) (Zn/Al-Schichtdicke: ca. 10 $\mu$m), Nachbehandlung mittels Versiegelung mit Wasserglas

Serie 4:    Dünnschichtverzinkung gemäß ASTM 1072 mit Zn/Al-Schmelze (microZINQ®-Verfahren; Verzinkung gemäß EP 1 352 100 B1) (Zn/Al-Schichtdicke: ca. 10 $\mu$m), Nachbehandlung mittels Passivierung mit Cr(III)

**Erfindungsgemäße laserinduzierte Markierung/Kennzeichnung der verzinkten Stahlbleche**

Jeweils 4 Musterbleche der Serien 1 bis 4 werden nach dem erfindungsgemäßen Verfahren mit einer Kennzeichnung bzw. Markierung jeweils auf einer der beiden Flachseiten versehen (deutlich lesbarer Schriftzug als Markierung).

Hierzu werden die betreffenden verzinkten Musterbleche mit einer Lasermarkierungsvorrichtung der Fa. Cajo Technologies Oy, Kempele, Finnland, unter den zuvor im Detail beschriebenen Verfahrensbedingungen jeweils mit einer dauerhaften Markierung (Permanentmarkierung) versehen, wobei hierbei die Verzinkungsschicht selektiv nur in einem vorgegebenen Bereich der zu erzeugenden Markierung laserinduziert einer chemischen Reaktion mit einem betreffenden Reaktionsgas unterzogen wird, so dass selektiv nur im Bereich der Markierung eine Umsetzung der Verzinkungsschicht erfolgt und das resultierende Umsetzungsprodukt der Verzinkungsschicht die dauerhafte Markierung ausbildet.

Es entstehen vier Serien (Serien 1 bis 4) von jeweils vier erfindungsgemäß markierten verzinkten Stahlblechen, welche nachfolgend einem Korrosionstest (Salzsprühnebeltest gemäß DIN EN ISO 9227:2012) unterzogen werden. Der Zustand der Musterbleche wird jeweils nach 120 Stunden, 312 Stunden und 672 Stunden visuell bewertet und mit dem Ausgangszustand korreliert.

Keines der Musterbleche der Serien 1 bis 4 zeigt zu irgendeinem Zeitpunkt die Bildung von Rotrost (wobei die Bildung von Rotrost die Korrosion des Grundmaterials anzeigen würde). Nur bei den nicht nachbehandelten Blechen der Serie 1 treten bereits nach 120 Stunden erste, aber nur geringfügige Anzeichen von Weißrost auf, was eine Korrosion der Zinkschicht anzeigt; die Ausbildung des Weißrosts ist aber gleichmäßig oder stochastisch über die Oberfläche verteilt und tritt nicht verstärkt im Bereich der Markierung auf. Bei den Blechen der Serie 2 tritt Weißrost erst nach 312 Stunden auf. Bei den Blechen der Serien 3 und 4, welche die besten Ergebnisse zeigen, tritt geringfügige Weißrostbildung erst nach 672 Stunden auf. Bei den Blechen aller Serien ist die Weißrostbildung aber gleichmäßig oder stochastisch über die Oberfläche verteilt und tritt nicht verstärkt im Bereich der Markierung auf.

**Nichterfindungsgemäße laserinduzierte Markierung/Kennzeichnung der verzinkten Stahlbleche (Vergleich)**

Das vorangehende Beispiel wird wiederholt, jedoch mit der Abweichung, dass jeweils 4 Musterbleche der Serien 1 bis 4 nach einem herkömmlichen, mit Laserablation arbeitenden Verfahren mit einer Kennzeichnung bzw. Markierung jeweils auf einer der beiden Flachseiten versehen werden (deutlich lesbarer Schriftzug als Markierung).

Hierzu werden die betreffenden verzinkten Musterbleche mit einer Lasermarkierungsvorrichtung der Fa. Cajo Technologies Oy, Kempele, Finnland, jeweils mit einer dauerhaften Markierung (Permanentmarkierung) versehen, wobei hierbei die Verzinkungsschicht selektiv nur in einem vorgegebenen Bereich der zu erzeugenden Markierung laserinduziert abgetragen wird, so dass sich auf diese Weise eine dauerhafte Markierung ausbildet.

Es entstehen vier Serien (Serien 1 bis 4) von jeweils vier nichterfindungsgemäß unter Materialabtrag markierten verzinkten Stahlblechen, welche nachfolgend einem Korrosionstest (Salzsprühnebeltest gemäß DIN EN ISO 9227:2012) unterzogen werden. Der Zustand der Musterbleche wird jeweils nach 120 Stunden, 192 Stunden, 312 Stunden und 672 Stunden visuell bewertet und mit dem Ausgangszustand korreliert.

Alle Musterbleche der Serien 1 bis 4 zeigen bereits nach kurzer Zeitdauer (spätestens nach 192 Stunden) eine massive Bildung von Rotrost insbesondere in dem und um den Bereich der Markierung, was die Korrosion des Grundmaterials anzeigt. Auch tritt bereits zu diesem frühen Zeitpunkt eine deutliche Ausbildung von Weißrost auf, und zwar über weite Flächen der Bleche.

Der Test wird an Blechen der Serie 4 wiederholt, jedoch mit der Abweichung, dass die laserinduzierte Markierung vor dem Korrosionstest mit einer Versiegelung nachbehandelt wird; dennoch tritt auch in diesem Fall bereits nach 192 Stunden massive Rotrost- und Weißrostbildung auf.

**Patentansprüche**

1.  Verfahren zur Kennzeichnung und/oder Markierung eines feuerverzinkten Metallbauteils, insbesondere Stahlbauteils, wobei das feuerverzinkte Metallbauteil ein eisenbasiertes Grundmaterial, vorzugsweise Stahl, und eine auf dem Grundmaterial aufgebrachte Verzinkungsschicht aufweist, wobei das verzinkte Metallbauteil mit einer dauerhaften Markierung versehen wird, wobei die Verzinkungsschicht selektiv nur in einem vorgegebenen Bereich der zu erzeugenden Markierung laserinduziert unter Einwirkung von Laserstrahlung einer chemischen Reaktion mit mindestens einem Reaktionsgas unterzogen wird, so dass selektiv nur im Bereich der Markierung eine Umsetzung der Verzinkungsschicht erfolgt und das resultierende Umsetzungsprodukt der Verzinkungsschicht die dauerhafte Markierung ausbildet, **dadurch gekennzeichnet, dass**

    die Erzeugung der dauerhaften Markierung und die Umsetzung der Verzinkungsschicht zumindest im Wesentlichen ohne Materialabtrag der Verzinkungsschicht erfolgt,
    bei der Erzeugung der dauerhaften Markierung die Verzinkungsschicht selektiv nur in einem vorgegebenen Bereich der zu erzeugenden Markierung mit einem gepulsten Laserstrahl ein- oder mehrmals auf solche Weise abgetastet wird, dass benachbarte Lichtflecke des Laserstrahls lückenlos aneinanderstoßen oder sich überlappen,
    die Erzeugung der dauerhaften Markierung und die Umsetzung der Verzinkungsschicht derart erfolgt, dass die Verzinkungsschicht im Bereich der Markierung nicht bis zum unterliegenden Grundmaterial umgesetzt wird,
    das im Bereich der Markierung gebildete Umsetzungsprodukt der Verzinkungsschicht ausgewählt ist aus der Gruppe von Oxiden, Nitriden, Carbonaten und/oder Boriden des Zinks sowie gegebenenfalls weiterer in der Verzinkungsschicht vorhandener Metalle und
    die Reaktion der Verzinkungsschicht im Bereich der anzubringenden Markierung laserinduziert unter Einwirkung von Laserstrahlung erfolgt, mit gepulster Laserstrahlung, und die folgende Bedingung eingehalten wird:

    $$0{,}075 \leq \text{Epsilon} \leq 2.275$$

    mit

    $$\text{Epsilon} = 10^3 \cdot \frac{[\,(P_p)^2 \cdot (\sqrt{P_m}) \cdot f \cdot \alpha \cdot (\sqrt{t}) \cdot (\sqrt{\kappa})\,]}{[\,d^2 \cdot (\sqrt{v}) \cdot (\sqrt{T_v}) \cdot (\sqrt{c_p}) \cdot (\sqrt{\lambda})\,]}$$

    worin:

    $P_p$: Impulsspitzenleistung der austretenden Laserstrahlung [kW]
    $P_m$: mittlere Leistung der austretenden Laserstrahlung [W]
    $t$: Impulslänge der Laserimpulse [ns],
    $f$: Repetitionsrate der Laserimpulse [kHz]
    $v$: Abtastgeschwindigkeit an der Oberfläche der Verzinkungsschicht [mm/s]
    $d$: Durchmesser des Laserstrahls am Werkstück [μm]
    $\alpha$: Absorption der Laserstrahlung der bestrahlten Verzinkungsschicht [%] bei Normalbedingungen
    $\lambda$: Wellenlänge der Laserstrahlung [nm],
    $T_v$: Siedepunkt der Verzinkungsschicht [K] bei Normaldruck
    $c_p$: spezifische Wärmekapazität der Verzinkungsschicht [J/kg·K] bei Normalbedingungen
    $\kappa$: spezifische Wärmeleitfähigkeit der Verzinkungsschicht [W/m·K] bei Normalbedingungen.

2.  Verfahren nach Anspruch 1,

    wobei die Erzeugung oder Anbringung der dauerhaften Markierung und/oder die Umsetzung der Verzinkungsschicht mit einer solchen Laserenergie und/oder unter solchen Reaktionsbedingungen erfolgt, dass die Verzinkungsschicht im Bereich der Markierung nicht bis zum unterliegenden Grundmaterial umgesetzt wird; und/oder
    wobei die Erzeugung oder Anbringung der dauerhaften Markierung und/oder die Umsetzung der Verzinkungsschicht derart erfolgt, insbesondere mit einer solchen Laserenergie, dass die Verzinkungsschicht im Bereich der Markierung zu höchstens 99 % ihrer Dicke, insbesondere zu höchstens 95 % ihrer Dicke, vorzugsweise zu höchstens 90 % ihrer Dicke, bevorzugt zu höchstens 80 % ihrer Dicke, besonders bevorzugt zu höchstens 70 % ihrer Dicke, ganz besonders bevorzugt zu höchstens 60 % ihrer Dicke, noch mehr bevorzugt zu höchstens 50 % ihrer Dicke, umgesetzt wird; und/oder

wobei das eingesetzte Reaktionsgas ausgewählt ist aus der Gruppe von Sauerstoff, Stickstoff, Kohlenstoffoxiden und Boranen sowie deren Mischungen und Kombinationen, vorzugsweise aus der Gruppe von Sauerstoff, Stickstoff und Kohlenstoffoxiden sowie deren Mischungen und Kombinationen; insbesondere wobei das Reaktionsgas in Kombination mit mindestens einem nichtreaktiven Gas, insbesondere mindestens einem Edelgas, eingesetzt wird.

3. Verfahren nach Anspruch 1 oder 2,

wobei die Umsetzung der Verzinkungsschicht zu Oxiden, Nitriden, Carbonaten und/oder Boriden, vorzugsweise Oxiden, Nitriden und/oder Carbonaten, führt, insbesondere des Zinks sowie gegebenenfalls weiterer in der Verzinkungsschicht vorhandener (Legierungs-)Metalle; und/oder

wobei das im Bereich der Markierung gebildete Umsetzungsprodukt der Verzinkungsschicht ausgewählt ist aus der Gruppe von Oxiden, Nitriden und/oder Carbonaten des Zinks sowie gegebenenfalls weiterer in der Verzinkungsschicht vorhandener (Legierungs-)-Metalle; und/oder

wobei das im Bereich der Markierung gebildete Umsetzungsprodukt der Verzinkungsschicht andersfarbig als die Verzinkungsschicht ausgebildet ist und/oder wobei die Markierung in der Farbgebung verschieden von der Verzinkungsschicht ausgebildet ist und/oder farblich von der Verzinkungsschicht unterscheidbar ist; und/oder

wobei die Reaktion der Verzinkungsschicht im Bereich der anzubringenden Markierung mittels und/oder in Abhängigkeit von der Menge der einwirkenden Laserenergie, insbesondere Laserimpulsleistung, Laserimpulslänge, Laserpulsdauer, Laserimpulsrepetitionsrate und/oder Laserwellenlänge, und/oder mittels und/oder in Abhängigkeit von den Reaktionsbedingungen, insbesondere Druck, Temperatur und/oder Zusammensetzung des Reaktionsgases, gesteuert wird; und/oder

wobei die Reaktion der Verzinkungsschicht bei einer Laserwellenlänge im Bereich von 100 nm bis 11.000 nm, insbesondere im Bereich von 200 nm bis 6.000 nm, vorzugsweise im Bereich von 400 nm bis 3.000 nm, besonders bevorzugt im Bereich von 500 nm bis 2.000 nm, erfolgt; und/oder

wobei die Reaktion der Verzinkungsschicht bei einer Impulslänge der Laserimpulse im Bereich von 0,1 ns bis 2.000 ns, insbesondere im Bereich von 0,1 ns bis 1.000 ns, vorzugsweise im Bereich von 0,2 ns bis 295 ns, besonders bevorzugt im Bereich von 0,5 ns bis 195 ns, erfolgt; und/oder

wobei die Reaktion der Verzinkungsschicht bei einer mittleren Leistung der austretenden Laserstrahlung im Bereich von 5 Watt bis 30.000 Watt, insbesondere im Bereich von 7,5 Watt bis 1.000 Watt, vorzugsweise im Bereich von 10 Watt bis 1.000 Watt, besonders bevorzugt im Bereich von 10 Watt bis 500 Watt, erfolgt; und/oder

wobei die Reaktion der Verzinkungsschicht bei einer Impulsspitzenleistung der austretenden Laserstrahlung im Bereich von 0,1 Kilowatt bis 3.000 Kilowatt, insbesondere im Bereich von 1 Kilowatt bis 2.000 Kilowatt, vorzugsweise im Bereich von 2 Kilowatt bis 1.800 Kilowatt, erfolgt; und/oder

wobei die Reaktion der Verzinkungsschicht bei einer Repetitionsrate der Laserimpulse im Bereich von 1 kHz bis 5.000 kHz, insbesondere im Bereich von 5 kHz bis 4.000 kHz, vorzugsweise im Bereich von 10 kHz bis 3.000 kHz, erfolgt; und/oder

wobei die Reaktion der Verzinkungsschicht mit einem Durchmesser der Laserstrahlung auf der Oberfläche der Verzinkungsschicht im Bereich von 1 $\mu$m bis 10.000 $\mu$m, insbesondere im Bereich von 5 $\mu$m bis 8.000 $\mu$m, vorzugsweise im Bereich von 10 $\mu$m bis 6.000 $\mu$m, besonders bevorzugt im Bereich von 25 $\mu$m bis 4.000 $\mu$m, erfolgt; und/oder

wobei die Reaktion der Verzinkungsschicht mit einer Laserabtastgeschwindigkeit auf der Oberfläche der Verzinkungsschicht im Bereich von 10 mm/s bis 30.000 mm/s, insbesondere im Bereich von 20 mm/s bis 25.000 mm/s, vorzugsweise im Bereich von 25 mm/s bis 22.000 mm/s, besonders bevorzugt im Bereich von 30 mm/s bis 19.000 mm/s, erfolgt; und/oder

wobei die Reaktion der Verzinkungsschicht bei einem Druck im Bereich von 0,001 mbar bis 15 bar, insbesondere im Bereich von 0,005 mbar bis 12 bar, vorzugsweise im Bereich von 0,01 mbar bis 11 bar, besonders bevorzugt im Bereich von 0,1 mbar bis 10 bar, erfolgt; und/oder

wobei die Reaktion der Verzinkungsschicht bei einer Temperatur des Reaktionsgases außerhalb des Laserstrahls im Bereich von -50 °C bis 350 °C, insbesondere im Bereich von -40 °C bis 325 °C, vorzugsweise im Bereich von -30 °C bis 300 °C, besonders bevorzugt im Bereich von -20 °C bis 200 °C, erfolgt.

4. Verfahren nach einem der vorangehenden Ansprüche,

wobei die Verzinkungsschicht eine Dicke von 0,5 bis 300 $\mu$m, insbesondere 1 bis 200 $\mu$m, vorzugsweise 1,5 bis 100 $\mu$m, bevorzugt 2 bis 30 $\mu$m, aufweist; und/oder

wobei die Verzinkungsschicht aus zumindest im Wesentlichen reinem Zink oder aber aus einer Zinklegierung, vorzugsweise aus einer Zinklegierung, gebildet ist; und/oder

wobei die Verzinkungsschicht aus einer Zinklegierung gebildet ist; insbesondere wobei die Verzinkungsschicht Zink sowie als Legierungsmetall Aluminium in einer Menge von 0,0001 bis 25 Gew.-%, insbesondere in einer Menge von 0,001 bis 20 Gew.-%, vorzugsweise in einer Menge von 0,005 bis 17,5 Gew.-%, bevorzugt in einer Menge von 0,01 bis 15 Gew.-%, besonders bevorzugt in einer Menge von 0,02 bis 12,5 Gew.-%, ganz besonders bevorzugt in einer Menge von 0,05 bis 10 Gew.-%, noch mehr bevorzugt in einer Menge von 0,1 bis 8 Gew.-%, bezogen auf die Verzinkungsschicht, aufweist; und/oder

wobei die Verzinkungsschicht aus einer Zinklegierung gebildet ist; insbesondere wobei die Verzinkungsschicht eine aluminiumlegierte Verzinkungsschicht ("Zn/Al-Verzinkungsschicht") ist und/oder insbesondere wobei die Verzinkungsschicht, bezogen auf die Verzinkungsschicht, eine Menge an Zink von mindestens 75 Gew.-%, insbesondere mindestens 80 Gew.-%, vorzugsweise mindestens 85 Gew.-%, bevorzugt mindestens 90 Gew.-%, und eine Menge an Aluminium von bis zu 25 Gew.-%, insbesondere bis zu 20 Gew.-%, vorzugsweise bis zu 15 Gew.-%, bevorzugt bis zu 10 Gew.-%, sowie gegebenenfalls mindestens ein weiteres Metall, insbesondere in Mengen von bis zu 5 Gew.-% und/oder insbesondere ausgewählt aus der Gruppe von Bismut (Bi), Blei (Pb), Zinn (Sn), Nickel (Ni), Silizium (Si), Magnesium (Mg) und deren Kombinationen, aufweist, wobei alle vorstehend genannten Mengenangaben derart auszuwählen sind, dass insgesamt 100 Gew.-% resultieren.

5. Verfahren nach einem der vorangehenden Ansprüche,

wobei die Verzinkungsschicht zumindest im Wesentlichen frei, vorzugsweise vollkommen frei, von Blei (Pb) und/oder Nickel (Ni) ausgebildet ist; und/oder

wobei die Verzinkungsschicht zumindest im Wesentlichen frei, vorzugsweise vollkommen frei, von Schwermetallen aus der Gruppe von Blei (Pb), Nickel (Ni), Cobalt (Co), Mangan (Mn), Zinn (Sn), Bismut (Bi) und Antimon (Sb) ausgebildet ist; und/oder

wobei die Verzinkungsschicht durch Feuerverzinkung erzeugt worden ist.

6. Mit einer Kennzeichnung und/oder Markierung versehenes feuerverzinktes Metallbauteil, insbesondere Stahlbauteil, wobei das verzinkte Metallbauteil ein eisenbasiertes Grundmaterial, vorzugsweise Stahl, und eine auf dem Grundmaterial aufgebrachte Verzinkungsschicht aufweist, wobei das verzinkte Metallbauteil mit einer dauerhaften Markierung versehen ist, wobei die Verzinkungsschicht selektiv nur in einem vorgegebenen Bereich der zu erzeugenden Markierung unter Einwirkung von Laserstrahlung einer chemischen Reaktion mit mindestens einem Reaktionsgas unterzogen worden ist, so dass selektiv nur im Bereich der Markierung eine Umsetzung der Verzinkungsschicht erfolgt ist und das resultierende Umsetzungsprodukt der Verzinkungsschicht die dauerhafte Markierung ausbildet, **dadurch gekennzeichnet, dass**

die Erzeugung oder Anbringung der dauerhaften Markierung und die Umsetzung der Verzinkungsschicht zumindest im Wesentlichen ohne Materialabtrag der Verzinkungsschicht erfolgt ist und wobei die Erzeugung oder Anbringung der dauerhaften Markierung und die Umsetzung der Verzinkungsschicht derart erfolgt ist, dass die Verzinkungsschicht im Bereich der Markierung nicht bis zum unterliegenden Grundmaterial umgesetzt ist,

bei der Erzeugung der dauerhaften Markierung die Verzinkungsschicht selektiv nur in einem vorgegebenen Bereich der zu erzeugenden Markierung mit einem gepulsten Laserstrahl ein- oder mehrmals auf solche Weise abgetastet worden ist, dass benachbarte Lichtflecke des Laserstrahls lückenlos aneinanderstoßen oder sich überlappen und

das im Bereich der Markierung gebildete Umsetzungsprodukt der Verzinkungsschicht ausgewählt ist aus der Gruppe von Oxiden, Nitriden, Carbonaten und/oder Boriden des Zinks sowie gegebenenfalls weiterer in der Verzinkungsschicht vorhandener Metalle.

7. Mit einer Kennzeichnung und/oder Markierung versehenes feuerverzinktes Metallbauteil nach Anspruch 6,

wobei die Erzeugung oder Anbringung der dauerhaften Markierung und/oder die Umsetzung der Verzinkungsschicht derart erfolgt ist, insbesondere mit einer solchen Laserenergie, dass die Verzinkungsschicht im Bereich der Markierung zu höchstens 99 % ihrer Dicke, insbesondere zu höchstens 95 % ihrer Dicke, vorzugsweise zu höchstens 90 % ihrer Dicke, bevorzugt zu höchstens 80 % ihrer Dicke, besonders bevorzugt zu höchstens 70 % ihrer Dicke, ganz besonders bevorzugt zu höchstens 60 % ihrer Dicke, noch mehr bevorzugt zu höchstens 50 % ihrer Dicke, umgesetzt ist; und/oder

wobei das im Bereich der Markierung gebildete Umsetzungsprodukt der Verzinkungsschicht ausgewählt ist aus der Gruppe von Oxiden, Nitriden und/oder Carbonaten des Zinks sowie gegebenenfalls weiterer in der Verzinkungsschicht vorhandener (Legierungs-)Metalle; und/oder

wobei das im Bereich der Markierung gebildete Umsetzungsprodukt der Verzinkungsschicht andersfarbig als die Verzinkungsschicht ausgebildet ist und/oder wobei die Markierung in der Farbgebung verschieden von der Verzinkungsschicht ausgebildet ist und/oder farblich von der Verzinkungsschicht unterscheidbar ist; und/oder

wobei die Verzinkungsschicht eine Dicke von 0,5 bis 300 $\mu$m, insbesondere 1 bis 200 $\mu$m, vorzugsweise 1,5 bis 100 $\mu$m, bevorzugt 2 bis 30 $\mu$m, aufweist; und/oder

wobei die Verzinkungsschicht aus zumindest im Wesentlichen reinem Zink oder aber aus einer Zinklegierung, vorzugsweise aus einer Zinklegierung, gebildet ist; und/oder

wobei die Verzinkungsschicht zumindest im Wesentlichen frei, vorzugsweise vollkommen frei, von Blei (Pb) und/oder Nickel (Ni) ausgebildet ist; und/oder

wobei die Verzinkungsschicht zumindest im Wesentlichen frei, vorzugsweise vollkommen frei, von Schwermetallen aus der Gruppe von Blei (Pb), Nickel (Ni), Cobalt (Co), Mangan (Mn), Zinn (Sn), Bismut (Bi) und Antimon (Sb) ausgebildet ist; und/oder

wobei die Verzinkungsschicht durch Feuerverzinkung erzeugt worden ist.

8. Anlage zur Herstellung eines mit einer Kennzeichnung und/oder Markierung versehenen feuerverzinkten Metallbauteils, insbesondere Stahlbauteils, wobei das feuerverzinkte Metallbauteil ein eisenbasiertes Grundmaterial, vorzugsweise Stahl, und eine auf dem Grundmaterial aufgebrachte Verzinkungsschicht aufweist, wobei das verzinkte Metallbauteil mit einer dauerhaften Markierung versehen ist, wobei die Verzinkungsschicht selektiv nur in einem vorgegebenen Bereich der zu erzeugenden Markierung laserinduziert unter Einwirkung von Laserstrahlung einer chemischen Reaktion mit mindestens einem Reaktionsgas unterzogen worden ist, so dass selektiv nur im Bereich der Markierung eine Umsetzung der Verzinkungsschicht erfolgt ist und das resultierende Umsetzungsprodukt der Verzinkungsschicht die dauerhafte Markierung ausbildet,

wobei die Anlage einerseits eine Vorrichtung zur Kennzeichnung und/oder Markierung eines feuerverzinkten Metallbauteils, insbesondere Stahlbauteils, sowie andererseits, vorgeschaltet zur Vorrichtung und/oder in Prozessrichtung stromaufwärts zur Vorrichtung, eine Feuerverzinkungsvorrichtung zur Herstellung eines feuerverzinkten Metallbauteils, insbesondere Stahlbauteils, umfasst;

wobei die Vorrichtung zur Kennzeichnung und/oder Markierung mittels einer Steuereinrichtung derart ausgebildet ist, dass das verzinkte Metallbauteil mit einer dauerhaften Markierung versehen wird, wobei die Vorrichtung die Verzinkungsschicht selektiv nur in einem vorgegebenen Bereich der zu erzeugenden Markierung laserinduziert unter Einwirkung von Laserstrahlung, einer chemischen Reaktion mit mindestens einem Reaktionsgas aussetzt, so dass selektiv nur im Bereich der Markierung eine Umsetzung der Verzinkungsschicht erfolgt und das resultierende Umsetzungsprodukt der Verzinkungsschicht die dauerhafte Markierung ausbildet,

wobei die Steuereinrichtung zur Erzeugung oder Anbringung der dauerhaften Markierung und zur Umsetzung der Verzinkungsschicht zumindest im Wesentlichen ohne Materialabtrag der Verzinkungsschicht ausgebildet und/oder vorgesehen ist und wobei die Steuereinrichtung zur Erzeugung oder Anbringung der dauerhaften Markierung und zur Umsetzung der Verzinkungsschicht ausgebildet und/oder vorgesehen ist derart, dass die Verzinkungsschicht im Bereich der Markierung nicht bis zum unterliegenden Grundmaterial umgesetzt wird,

wobei die Steuereinrichtung ausgebildet und/oder vorgesehen ist derart, dass bei der Erzeugung der dauerhaften Markierung die Verzinkungsschicht selektiv nur in einem vorgegebenen Bereich der zu erzeugenden Markierung mit einem gepulsten Laserstrahl ein- oder mehrmals auf solche Weise abgetastet wird, dass benachbarte Lichtflecke des Laserstrahls lückenlos aneinanderstoßen oder sich überlappen,

wobei die Steuereinrichtung zur Umsetzung der Verzinkungsschicht zu Oxiden, Nitriden, Carbonaten und/oder Boriden des Zinks sowie gegebenenfalls weiterer in der Verzinkungsschicht vorhandener Metalle ausgebildet und/oder vorgesehen ist und

wobei die Steuereinrichtung ausgebildet und/oder vorgesehen ist derart, dass die Reaktion der Verzinkungsschicht im Bereich der anzubringenden Markierung laserinduziert unter Einwirkung von Laserstrahlung, erfolgt, mit gepulster Laserstrahlung, wobei die folgende Bedingung eingehalten wird:

$$0{,}075 \leq \text{Epsilon} \leq 2.275$$

mit

$$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

worin:

$P_p$: Impulsspitzenleistung der austretenden Laserstrahlung [kW]
$P_m$: mittlere Leistung der austretenden Laserstrahlung [W]
t: Impulslänge der Laserimpulse [ns],
f: Repetitionsrate der Laserimpulse [kHz]
v: Abtastgeschwindigkeit an der Oberfläche der Verzinkungsschicht [mm/s]
d: Durchmesser des Laserstrahls am Werkstück [$\mu$m]
$\alpha$: Absorption der Laserstrahlung der bestrahlten Verzinkungsschicht [%] bei Normalbedingungen
$\lambda$: Wellenlänge der Laserstrahlung [nm],
$T_v$: Siedepunkt der Verzinkungsschicht [K] bei Normaldruck
$c_p$: spezifische Wärmekapazität der Verzinkungsschicht [J/kg·K] bei Normalbedingungen
$\kappa$: spezifische Wärmeleitfähigkeit der Verzinkungsschicht [W/m K] bei Normalbedingungen.

9. Anlage nach Anspruch 8,
wobei die Feuerverzinkungsvorrichtung die folgenden Behandlungseinrichtungen in der nachfolgend aufgeführten Abfolge umfasst:

(A) mindestens eine Entfettungseinrichtung, insbesondere mindestens ein Entfettungsbad, zur vorzugsweise alkalischen Entfettungsbehandlung von Metallbau-teilen; in Prozessrichtung nachgeschaltet oder stromabwärts zu (A)
(B) gegebenenfalls mindestens eine Spüleinrichtung, insbesondere mindestens ein Spülbad, zum Spülen von in der Entfettungseinrichtung (A) entfetteten Metallbauteilen; in Prozessrichtung nachgeschaltet oder stromabwärts zu (B)
(C) mindestens eine Beizeinrichtung, insbesondere mindestens ein Beizbad, zur vorzugsweise sauren Beizbehandlung von in der Entfettungseinrichtung (A) entfetteten und gegebenenfalls in der Spüleinrichtung (B) gespülten Metallbauteilen; in Prozessrichtung nachgeschaltet oder stromabwärts zu (C)
(D) gegebenenfalls mindestens eine Spüleinrichtung, insbesondere mindestens ein Spülbad, zum Spülen von in der Beizeinrichtung (C) gebeizten Metallbauteilen; in Prozessrichtung nachgeschaltet oder stromabwärts zu (D)
(E) mindestens eine Flussmittelbehandlungseinrichtung zur Flussmittelbehandlung von in der Beizeinrichtung (C) gebeizten und gegebenenfalls in der Spüleinrichtung (D) gespülten Metallbauteilen, wobei die Flussmittelbehandlungseinrichtung mindestens ein Flussmittelbad mit einer Flussmittelzusammensetzung aufweist; in Prozessrichtung nachgeschaltet oder stromabwärts zu (E)
(F) gegebenenfalls mindestens eine Trocknungseinrichtung zur Trocknung von in der Flussmittelbehandlungseinrichtung (E) einer Flussmittelbehandlung unterzogenen Metallbauteilen; in Prozessrichtung nachgeschaltet oder stromabwärts zu (F)
(G) mindestens eine Feuerverzinkungseinrichtung zur Feuerverzinkung von in der Flussmittelbehandlungseinrichtung (E) einer Flussmittelbehandlung unterzogenen und gegebenenfalls in der Trocknungseinrichtung (F) getrockneten Metallbauteilen, wobei die Feuerverzinkungseinrichtung mindestens ein eine gegebenenfalls mit mindestens einem weiteren Metall legierte Zinkschmelze enthaltendes Verzinkungsbad, vorzugsweise zum (Ein-)Tauchen von Metallbauteilen in das Verzinkungsbad, aufweist; in Prozessrichtung nachgeschaltet oder stromabwärts zu (G)
(H) gegebenenfalls mindestens Abkühleinrichtung zur Abkühlung der in der Feuerverzinkungseinrichtung (F) feuerverzinkten Metallbauteile, insbesondere in Gegenwart von Luft betreibbar ausgestaltet; in Prozessrichtung nachgeschaltet oder stromabwärts zu (H)
(I) gegebenenfalls mindestens eine Nachbearbeitungs- und/oder Nachbehandlungseinrichtung zur Nachbearbeitung und/oder Nachbehandlung der feuerverzinkten und gegebenenfalls abgekühlten Metallbauteile, wobei die Vorrichtung zur Kennzeichnung und/oder Markierung der feuerverzinkten Metallbauteile in Prozessrichtung nachgeschaltet oder stromabwärts zu (H), aber vorgeschaltet zu (I) angeordnet ist oder aber wobei die Vorrichtung zur Kennzeichnung und/oder Markierung der feuerverzinkten Metallbauteile in Prozessrichtung nachgeschaltet oder stromabwärts zu (I) angeordnet ist.

**10.** Anlage nach Anspruch 8

wobei die Steuereinrichtung zur Erzeugung oder Anbringung der dauerhaften Markierung und/oder zur Umsetzung der Verzinkungsschicht ausgebildet und/oder vorgesehen ist derart, insbesondere in Abhängigkeit von der Laserenergie und/oder in Abhängigkeit von den Reaktions-bedingungen, dass die Verzinkungsschicht im Bereich der Markierung zu höchstens 99 % ihrer Dicke, insbesondere zu höchstens 95 % ihrer Dicke, vorzugsweise zu höchstens 90 % ihrer Dicke, bevorzugt zu höchstens 80 % ihrer Dicke, besonders bevorzugt zu höchstens 70 % ihrer Dicke, ganz besonders bevorzugt zu höchstens 60 % ihrer Dicke, noch mehr bevorzugt zu höchstens 50 % ihrer Dicke, umgesetzt wird; und/oder

wobei die Steuereinrichtung ausgebildet und/oder vorgesehen ist derart, dass das eingesetzte Reaktionsgas ausgewählt werden kann aus der Gruppe von Sauerstoff, Stickstoff, Kohlenstoffoxiden und Boranen sowie deren Mischungen und Kombinationen, vorzugsweise aus der Gruppe von Sauerstoff, Stickstoff und Kohlenstoffoxiden sowie deren Mischungen und Kombinationen, gegebenenfalls in Kombination mit mindestens einem nichtreaktiven Gas, insbesondere mindestens einem Edelgas; und/oder

wobei die Steuereinrichtung zur Umsetzung der Verzinkungsschicht zu Oxiden, Nitriden und/oder Carbonaten des Zinks sowie gegebenenfalls weiterer in der Verzinkungsschicht vorhandener (Legierungs-)Metalle, ausgebildet und/oder vorgesehen ist; und/oder

wobei die Steuereinrichtung ausgebildet und/oder vorgesehen ist derart, dass die Reaktion der Verzinkungsschicht im Bereich der anzubringenden Markierung mittels und/oder in Abhängigkeit von der Menge der einwirkenden Laserenergie, insbesondere Laserimpulsleistung, Laserimpulslänge, Laserpulsdauer, Laserimpulsrepetitionsrate und/oder Laserwellenlänge, und/oder mittels und/oder in Abhängigkeit von den Reaktionsbedingungen, insbesondere Druck, Temperatur und/oder Zusammensetzung des Reaktionsgases, gesteuert werden kann.

**11.** Anlage nach einem der vorangehenden Ansprüche, wobei die Steuereinrichtung ausgebildet und/oder vorgesehen ist derart,

dass die Reaktion der Verzinkungsschicht bei einer Laserwellenlänge im Bereich von 100 nm bis 11.000 nm, insbesondere im Bereich von 200 nm bis 6.000 nm, vorzugsweise im Bereich von 400 nm bis 3.000 nm, besonders bevorzugt im Bereich von 500 nm bis 2.000 nm, erfolgt; und/oder

dass die Reaktion der Verzinkungsschicht bei einer Impulslänge der Laserimpulse im Bereich von 0,1 ns bis 2.000 ns, insbesondere im Bereich von 0,1 ns bis 1.000 ns, vorzugsweise im Bereich von 0,2 ns bis 295 ns, besonders bevorzugt im Bereich von 0,5 ns bis 195 ns, erfolgt; und/oder

dass die Reaktion der Verzinkungsschicht bei einer mittleren Leistung der austretenden Laserstrahlung im Bereich von 5 Watt bis 30.000 Watt, insbesondere im Bereich von 7,5 Watt bis 1.000 Watt, vorzugsweise im Bereich von 10 Watt bis 1.000 Watt, besonders bevorzugt im Bereich von 10 Watt bis 500 Watt, erfolgt; und/oder

dass die Reaktion der Verzinkungsschicht bei einer Impulsspitzenleistung der austretenden Laserstrahlung im Bereich von 0,1 Kilowatt bis 3.000 Kilowatt, insbesondere im Bereich von 1 Kilowatt bis 2.000 Kilowatt, vorzugsweise im Bereich von 2 Kilowatt bis 1.800 Kilowatt, erfolgt; und/oder

dass die Reaktion der Verzinkungsschicht bei einer Repetitionsrate der Laserimpulse im Bereich von 1 kHz bis 5.000 kHz, insbesondere im Bereich von 5 kHz bis 4.000 kHz, vorzugsweise im Bereich von 10 kHz bis 3.000 kHz, erfolgt; und/oder

dass die Reaktion der Verzinkungsschicht mit einem Durchmesser der Laserstrahlung auf der Oberfläche der Verzinkungsschicht im Bereich von 1 $\mu$m bis 10.000 $\mu$m, insbesondere im Bereich von 5 $\mu$m bis 8.000 $\mu$m, vorzugsweise im Bereich von 10 $\mu$m bis 6.000 $\mu$m, besonders bevorzugt im Bereich von 25 $\mu$m bis 4.000 $\mu$m, erfolgt; und/oder

dass die Reaktion der Verzinkungsschicht mit einer Laserabtastgeschwindigkeit auf der Oberfläche der Verzinkungsschicht im Bereich von 10 mm/s bis 30.000 mm/s, insbesondere im Bereich von 20 mm/s bis 25.000 mm/s, vorzugsweise im Bereich von 25 mm/s bis 22.000 mm/s, besonders bevorzugt im Bereich von 30 mm/s bis 19.000 mm/s, erfolgt; und/oder

dass die Reaktion der Verzinkungsschicht bei einem Druck im Bereich von 0,001 mbar bis 15 bar, insbesondere im Bereich von 0,005 mbar bis 12 bar, vorzugsweise im Bereich von 0,01 mbar bis 11 bar, besonders bevorzugt im Bereich von 0,1 mbar bis 10 bar, erfolgt; und/oder

dass die Reaktion der Verzinkungsschicht bei einer Temperatur des Reaktionsgases außerhalb des Laserstrahls im Bereich von -50 °C bis 350 °C, insbesondere im Bereich von -40 °C bis 325 °C, vorzugsweise im Bereich von -30 °C bis 300 °C, besonders bevorzugt im Bereich von -20 °C bis 200 °C, erfolgt.

**EP 3 363 576 B1**

**Claims**

1. A method for marking and/or identifying a hot-dip galvanized metal component, especially a steel component, wherein the hot-dip galvanized metal component has an iron-based base material, preferentially steel, and a galvanizing layer applied to the base material, wherein the galvanized metal component is provided with a permanent marking, wherein the galvanizing layer is selectively subjected to a laser-induced chemical reaction with at least one reaction gas only in a predetermined region of the marking to be produced under the action of laser radiation, so that a conversion of the galvanizing layer takes place selectively only in the region of the marking and the resulting reaction product of the galvanizing layer forms the permanent marking,

   **characterized in**

   **that** the generation of the permanent marking and the conversion of the galvanizing layer is carried out at least substantially without material removal of the galvanizing layer,

   **that**, during the generation of the permanent marking, the galvanizing layer is selectively scanned only in a predetermined area of the marking to be generated with a pulsed laser beam once or several times in such a way that adjacent light spots of the laser beam abut or overlap each other without gaps,

   **that** the generation of the permanent marking and the conversion of the galvanizing layer is carried out in such a way that the galvanizing layer in the area of the marking is not converted down to the underlying base material,

   **that** the reaction product of the zinc coating formed in the region of the marking is selected from the group of oxides, nitrides, carbonates and/or borides of zinc and optionally other metals present in the zinc coating and

   **that** the reaction of the galvanizing layer in the area of the marking to be applied is laser-induced under the influence of laser radiation with pulsed laser radiation and the following condition is met:

   $$0.075 \leq \text{Epsilon} \leq 2{,}275$$

   with

   $$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

   wherein:

   $P_p$: peak pulse power of the outgoing laser radiation [kW]
   $P_m$: average power of the outgoing laser radiation [W]
   t: pulse length of the laser pulses [ns],
   f: repetition rate of the laser pulses [kHz]
   v: scanning speed at the surface of the galvanizing layer [mm/s]
   d: diameter of the laser beam on the workpiece [$\mu$m]
   $\alpha$: absorption of the laser radiation of the irradiated galvanizing layer [ %] at normal conditions
   $\lambda$: wavelength of the laser radiation [nm]
   $T_v$: boiling point of the galvanizing layer [K] at normal pressure
   $c_p$: specific heat capacity of the galvanizing layer [J/kg·K] at normal conditions
   $\kappa$: specific thermal conductivity of the galvanizing layer [W/m·K] at normal conditions.

2. The method according to claim 1,

   wherein the generation or application of the permanent marking and/or the conversion of the galvanizing layer takes place with such laser energy and/or under such reaction conditions that the galvanizing layer in the region of the marking is not converted to the underlying base material; and/or

   wherein the generation or application of the permanent marking and/or the conversion of the galvanizing layer takes place in such a way, especially with such a laser energy, that the galvanizing layer in the region of the marking is converted to at most 99 % of its thickness, especially to at most 95 % of its thickness, preferentially to at most 90 % of its thickness, preferably to at most 80 % of its thickness, more preferably to at most 70 % of its thickness, even more preferably to at most 60 % of its thickness, still more preferably to at most 50 % of its thickness; and/or

30

wherein the reaction gas used is selected from the group of oxygen, nitrogen, carbon oxides and boranes as well as mixtures and combinations thereof, preferentially from the group of oxygen, nitrogen and carbon oxides as well as mixtures and combinations thereof; especially wherein the reaction gas is used in combination with at least one non-reactive gas, especially at least one noble gas.

3. The method according to claim 1 or 2,

wherein the conversion of the galvanizing layer leads to oxides, nitrides, carbonates and/or borides, preferentially oxides, nitrides and/or carbonates, especially of zinc as well as optionally further (alloy) metals present in the galvanizing layer; and/or
wherein the reaction product of the galvanizing layer formed in the region of the marking is selected from the group of oxides, nitrides and/or carbonates of zinc and optionally further (alloy) metals present in the galvanizing layer; and/or
wherein the reaction product of the galvanizing layer formed in the region of the marking is of a different color than the galvanizing layer and/or wherein the marking is of a different color than the galvanizing layer and/or is distinguishable in color from the galvanizing layer; and/or
wherein the reaction of the galvanizing layer in the region of the marking to be applied is controlled by means of and/or as a function of the amount of the acting laser energy, especially laser pulse power, laser pulse length, laser pulse duration, laser pulse repetition rate and/or laser wavelength, and/or by means of and/or as a function of the reaction conditions, especially pressure, temperature and/or composition of the reaction gas; and/or
wherein the reaction of the galvanizing layer takes place at a laser wavelength in the range of from 100 nm to 11,000 nm, especially in the range of from 200 nm to 6,000 nm, preferentially in the range of from 400 nm to 3,000 nm, more preferably in the range of from 500 nm to 2,000 nm; and/or
wherein the reaction of the galvanizing layer takes place at a pulse length of the laser pulses in the range of from 0.1 ns to 2,000 ns, especially in the range of from 0.1 ns to 1,000 ns, preferentially in the range of from 0.2 ns to 295 ns, more preferably in the range of from 0.5 ns to 195 ns; and/or
wherein the reaction of the galvanizing layer takes place at an average power of the emerging laser radiation in the range of from 5 watts to 30,000 watts, especially in the range of from 7.5 watts to 1,000 watts, preferentially in the range of from 10 watts to 1,000 watts, more preferably in the range of from 10 watts to 500 watts; and/or
wherein the reaction of the galvanizing layer takes place at a peak pulse power of the emitted laser radiation in the range of from 0.1 kilowatt to 3,000 kilowatts, especially in the range of from 1 kilowatt to 2,000 kilowatts, preferentially in the range of from 2 kilowatts to 1,800 kilowatts; and/or
wherein the reaction of the galvanizing layer takes place at a repetition rate of the laser pulses in the range of from 1 kHz to 5,000 kHz, especially in the range of from 5 kHz to 4,000 kHz, preferentially in the range of from 10 kHz to 3,000 kHz; and/or
wherein the reaction of the galvanizing layer takes place with a diameter of the laser radiation on the surface of the galvanizing layer in the range of from 1 $\mu$m to 10,000 $\mu$m, especially in the range of from 5 $\mu$m to 8,000 $\mu$m, preferentially in the range of from 10 $\mu$m to 6,000 $\mu$m, more preferably in the range of from 25 $\mu$m to 4,000 $\mu$m; and/or
wherein the reaction of the galvanizing layer takes place with a laser scanning speed on the surface of the galvanizing layer in the range of from 10 mm/s to 30,000 mm/s, especially in the range of from 20 mm/s to 25,000 mm/s, preferentially in the range of from 25 mm/s to 22,000 mm/s, more preferably in the range of from 30 mm/s to 19,000 mm/s; and/or
wherein the reaction of the galvanizing layer takes place at a pressure in the range of from 0.001 mbar to 15 bar, especially in the range of from 0.005 mbar to 12 bar, preferentially in the range of from 0.01 mbar to 11 bar, more preferably in the range of from 0.1 mbar to 10 bar; and/or
wherein the reaction of the galvanizing layer takes place at a temperature of the reaction gas outside the laser beam in the range of from -50 °C to 350 °C, especially in the range of from -40 °C to 325 °C, preferentially in the range of from -30 °C to 300 °C, more preferably in the range of from -20 °C to 200 °C.

4. The method according to any of the preceding claims,

wherein the galvanizing layer has a thickness of 0.5 to 300 $\mu$m, especially 1 to 200 $\mu$m, preferentially 1.5 to 100 $\mu$m, preferably 2 to 30 $\mu$m; and/or
wherein the galvanizing layer is formed of at least substantially pure zinc or else of a zinc alloy, preferentially of a zinc alloy; and/or
wherein the galvanizing layer is formed of a zinc alloy; especially wherein the galvanizing layer comprises zinc and, as alloying metal, aluminum in an amount of 0.0001 to 25 wt. %, especially in an amount of 0.001 to 20 wt. %, preferentially in an amount of 0.005 to 17.5 wt. %, preferably in an amount of 0.01 to 15 wt. %, more preferably in an amount of 0.02 to 12.5 wt. %, even more preferably in an amount of 0.05 to 10 wt. %, still more preferably in an amount of 0.1 to 8 wt. %, based on the galvanizing layer; and/or

wherein the galvanizing layer is formed of a zinc alloy; especially wherein the galvanizing layer is an aluminum alloyed galvanizing layer ("Zn/Al galvanizing layer") and/or especially wherein the galvanizing layer contains, based on the galvanizing layer, an amount of zinc of at least 75 wt. %, especially at least 80 wt. %, preferentially at least 85 wt. %, preferably at least 90 wt. %, and an amount of aluminum of up to 25 wt. %, especially up to 20 wt. %, preferentially up to 15 wt. %, preferably up to 10 wt. %, and optionally at least one further metal, especially in amounts of up to 5 wt. % and/or especially selected from the group consisting of bismuth (Bi), lead (Pb), tin (Sn), nickel (Ni), silicium (Si), magnesium (Mg) and combinations thereof, wherein all above-mentioned amounts are selected such that a total of 100 wt. % results.

5. The method according to any of the preceding claims,

wherein the galvanizing layer is formed at least substantially free, preferentially completely free, of lead (Pb) and/or nickel (Ni); and/or

wherein the galvanizing layer is formed at least substantially free, preferentially completely free, of heavy metals from the group of lead (Pb), nickel (Ni), cobalt (Co), manganese (Mn), tin (Sn), bismuth (Bi) and antimony (Sb); and/or

where the galvanizing layer has been produced by hot-dip galvanizing.

6. A hot-dip galvanized metal component, especially a steel component, provided with an identification and/or marking, wherein the galvanized metal component comprises an iron-based base material, preferentially steel, and a galvanizing layer applied to the base material, wherein the galvanized metal component is provided with a permanent marking, wherein the galvanizing layer has been selectively subjected to a chemical reaction with at least one reaction gas only in a predetermined region of the marking to be produced under the action of laser radiation, so that a conversion of the galvanizing layer has selectively taken place only in the region of the marking and the resulting reaction product of the galvanizing layer forms the permanent marking,
**characterized in**

**that** generating or applying the permanent marking and the conversion of the galvanizing layer took place at least substantially without removal of material from the galvanizing layer and wherein generating or applying the permanent marking and the conversion of the galvanizing layer took place in such a way that the galvanizing layer in the region of the marking is not converted down to the underlying base material,

**that**, during the generating the permanent marking, the galvanizing layer has been selectively scanned only in a predetermined area of the marking to be generated with a pulsed laser beam once or several times in such a way that adjacent light spots of the laser beam abut or overlap each other without gaps and

**that** the reaction product of the galvanizing layer formed in the region of the marking is selected from the group of oxides, nitrides, carbonates and/or borides of zinc and optionally other metals present in the galvanizing layer.

7. The hot-dip galvanized metal component provided with an identification and/or marking according to claim 6,

wherein the generation or application of the permanent marking and/or the conversion of the galvanizing layer has been effected in such a way, especially with such a laser energy, that the galvanizing layer in the region of the marking is converted to at most 99 % of its thickness, especially to at most 95 % of its thickness, preferentially to at most 90 % of its thickness, preferably to at most 80 % of its thickness, more preferably to at most 70 % of its thickness, even more preferably to at most 60 % of its thickness, still more preferably to at most 50 % of its thickness; and/or

wherein the reaction product of the galvanizing layer formed in the region of the marking is selected from the group of oxides, nitrides and/or carbonates of zinc and optionally further (alloy) metals present in the galvanizing layer; and/or

wherein the reaction product of the galvanizing layer formed in the region of the marking is of a different color than the galvanizing layer and/or wherein the marking is of a different color than the galvanizing layer and/or is distinguishable in color from the galvanizing layer; and/or

wherein the galvanizing layer has a thickness of 0.5 to 300 $\mu$m, especially 1 to 200 $\mu$m, preferentially 1.5 to 100 $\mu$m, preferably 2 to 30 $\mu$m; and/or

wherein the galvanizing layer is formed of at least substantially pure zinc or else of a zinc alloy, preferably of a zinc alloy; and/or

wherein the galvanizing layer is formed at least substantially free, preferably completely free, of lead (Pb) and/or nickel (Ni); and/or

wherein the galvanizing layer is formed at least substantially free, preferably completely free, of heavy metals from the group of lead (Pb), nickel (Ni), cobalt (Co), manganese (Mn), tin (Sn), bismuth (Bi) and antimony (Sb); and/or

where the galvanizing layer has been produced by hot-dip galvanizing.

8. A plant for producing a hot-dip galvanized metal component, especially a steel component, provided with an identification and/or marking, wherein the hot-dip galvanized metal component has an iron-based base material, preferentially steel, and a galvanizing layer applied to the base material, wherein the galvanized metal component is provided with a permanent marking, wherein the galvanizing layer has been selectively subjected to a laser-induced chemical reaction with at least one reaction gas under the action of laser radiation only in a predetermined region of the marking to be produced, so that a conversion of the galvanizing layer has selectively taken place only in the region of the marking and the resulting reaction product of the galvanizing layer forms the permanent marking,

wherein the plant comprises on the one hand a device for identifying and/or marking a hot-dip galvanized metal component, especially a steel component, and on the other hand, upstream of the device and/or in the process direction upstream of the device, a hot-dip galvanizing device for producing a hot-dip galvanized metal component, especially a steel component;

wherein the device for identifying and/or marking is designed by means of a control means in such a way that the galvanized metal component is provided with a permanent marking, wherein the device exposes the galvanizing layer selectively only in a predetermined region of the marking to be produced to a laser-induced chemical reaction with at least one reaction gas under the action of laser radiation, so that a conversion of the galvanizing layer takes place selectively only in the region of the marking and the resulting reaction product of the galvanizing layer forms the permanent marking,

wherein the control means for generating or applying the permanent marking and for converting the galvanizing layer is designed and/or provided at least substantially without material removal of the galvanizing layer and wherein the control means for generating or applying the permanent marking and for converting the galvanizing layer is designed and/or provided in such a way that the galvanizing layer in the region of the marking is not converted down to the underlying base material,

wherein the control means is designed and/or provided in such a way that, during the generation of the permanent marking, the galvanizing layer is selectively scanned only in a predetermined region of the marking to be generated with a pulsed laser beam once or several times in such a way that adjacent light spots of the laser beam abut or overlap each other without gaps,

wherein the control means is designed and/or provided for the conversion of the galvanizing layer to oxides, nitrides, carbonates and/or borides of the zinc and optionally further metals present in the galvanizing layer, and wherein the control means is designed and/or provided in such a way that the reaction of the galvanizing layer in the region of the marking to be applied is laser-induced under the action of laser radiation, especially with pulsed laser radiation, wherein the following condition is met:

$$0.075 \leq \text{Epsilon} \leq 2{,}275$$

with

$$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

wherein:

$P_p$: peak pulse power of the outgoing laser radiation [kW]
$P_m$: average power of the outgoing laser radiation [W]
t: pulse length of the laser pulses [ns],
f: repetition rate of the laser pulses [kHz]
v: scanning speed at the surface of the galvanizing layer [mm/s]
d: diameter of the laser beam on the workpiece [$\mu$m]

$\alpha$: absorption of the laser radiation of the irradiated galvanizing layer [ %] at normal conditions
$\lambda$: wavelength of the laser radiation [nm]
$T_v$: boiling point of the galvanizing layer [K] at normal pressure
$c_p$: specific heat capacity of the galvanizing layer [J/kg·K] at normal conditions
$\kappa$: specific thermal conductivity of the galvanizing layer [W/m·K] at normal conditions.

9. The plant according to claim 8,
wherein the hot-dip galvanizing device comprises the following treatment means in the sequence listed below:

(A) at least one degreasing means, especially at least one degreasing bath, for the preferentially alkaline degreasing treatment of metal components; downstream in the process direction or downstream of (A)
(B) optionally at least one rinsing means, especially at least one rinsing bath, for rinsing metal components degreased in the degreasing means (A); downstream in the process direction or downstream of (B)
(C) at least one pickling means, especially at least one pickling bath, for the preferentially acid pickling treatment of metal components degreased in the degreasing means (A) and optionally rinsed in the rinsing means (B); downstream in the process direction or downstream of (C)
(D) optionally at least one rinsing means, especially at least one rinsing bath, for rinsing metal components pickled in the pickling means (C); downstream in the process direction or downstream of (D)
(E) at least one flux treatment means for the flux treatment of metal components pickled in the pickling means (C) and optionally rinsed in the rinsing means (D), wherein the flux treatment means comprise at least one flux bath with a flux composition; downstream in the process direction or downstream of (E)
(F) optionally at least one drying means for drying metal components subjected to flux treatment in the flux treatment means (E); downstream in the process direction or downstream of (F)
(G) at least one hot-dip galvanizing means for hot-dip galvanizing of metal components which have been subjected to a flux treatment in the flux treatment means (E) and, optionally dried in the drying means (F), wherein the hot-dip galvanizing device has at least one galvanizing bath containing a zinc melt which is optionally alloyed with at least one further metal, preferentially for (in)dipping of metal components into the galvanizing bath; downstream in the process direction or downstream of (G)
(H) optionally at least a cooling means for cooling the metal components hot-dip galvanized in the hot-dip galvanizing means (F), especially designed to operate in the presence of air; arranged downstream in the process direction or downstream of (H)
(I) optionally at least one post-processing and/or post-treatment means for post-processing and/or post-treatment of the hot-dip galvanized and optionally cooled metal components, wherein the device for identifying and/or marking the hot-dip galvanized metal components is arranged downstream in the process direction or downstream of (H), but upstream of (I), or else wherein the device for identifying and/or marking the hot-dip galvanized metal components is arranged downstream in the process direction or downstream of (I).

10. The plant according to claim 8

wherein the control means for generating or applying the permanent marking and/or for converting the galvanizing layer is designed and/or provided in such a way, especially as a function of the laser energy and/or as a function of the reaction conditions, that the galvanizing layer in the region of the marking is converted to at most 99 % of its thickness, especially to at most 95 % of its thickness, preferentially to at most 90 % of its thickness, preferably to at most 80 % of its thickness, more preferably to at most 70 % of its thickness, even more particularly preferably to at most 60 % of its thickness, still more preferably to at most 50 % of its thickness; and/or
wherein the control means is designed and/or provided in such a way that the reaction gas used can be selected from the group of oxygen, nitrogen, carbon oxides and boranes as well as mixtures and combinations thereof, preferentially from the group of oxygen, nitrogen and carbon oxides as well as mixtures and combinations thereof, optionally in combination with at least one non-reactive gas, especially at least one noble gas; and/or
wherein the control means is designed and/or provided for the conversion of the galvanizing layer to oxides, nitrides and/or carbonates of the zinc and optionally further (alloy) metals present in the galvanizing layer; and/or
wherein the control means is designed and/or provided in such a way that the reaction of the galvanizing layer in the region of the marking to be applied can be controlled by means of and/or as a function of the amount of the acting laser energy, especially laser pulse power, laser pulse length, laser pulse duration, laser pulse repetition rate and/or laser wavelength, and/or by means of and/or as a function of the reaction conditions, especially pressure, temperature and/or composition of the reaction gas.

11. The plant according to any of the preceding claims, wherein the control means is designed and/or provided such,

that the reaction of the galvanizing layer takes place at a laser wavelength in the range of from 100 nm to 11,000 nm, especially in the range of from 200 nm to 6,000 nm, preferentially in the range of from 400 nm to 3,000 nm, more preferably in the range of from 500 nm to 2,000 nm; and/or

that the reaction of the galvanizing layer takes place at a pulse length of the laser pulses in the range of from 0.1 ns to 2,000 ns, especially in the range of from 0.1 ns to 1,000 ns, preferentially in the range of from 0.2 ns to 295 ns, more preferably in the range of from 0.5 ns to 195 ns; and/or

that the reaction of the galvanizing layer takes place at an average power of the emerging laser radiation in the range of from 5 watts to 30,000 watts, especially in the range of from 7.5 watts to 1,000 watts, preferentially in the range of from 10 watts to 1,000 watts, more preferably in the range of from 10 watts to 500 watts; and/or

that the reaction of the galvanizing layer takes place at a peak pulse power of the emerging laser radiation in the range of from 0.1 kilowatt to 3,000 kilowatts, especially in the range of from 1 kilowatt to 2,000 kilowatts, preferentially in the range of from 2 kilowatts to 1,800 kilowatts; and/or

that the reaction of the galvanizing layer takes place at a repetition rate of the laser pulses in the range of from 1 kHz to 5,000 kHz, especially in the range of from 5 kHz to 4,000 kHz, preferentially in the range of from 10 kHz to 3,000 kHz; and/or

that the reaction of the galvanizing layer takes place with a diameter of the laser radiation on the surface of the galvanizing layer in the range of from 1 $\mu$m to 10,000 $\mu$m, especially in the range of from 5 $\mu$m to 8,000 $\mu$m, preferentially in the range of from 10 $\mu$m to 6,000 $\mu$m, more preferably in the range of from 25 $\mu$m to 4,000 $\mu$m; and/or

that the reaction of the galvanizing layer takes place at a laser scanning speed on the surface of the galvanizing layer in the range of from 10 mm/s to 30,000 mm/s, especially in the range of from 20 mm/s to 25,000 mm/s, preferentially in the range of from 25 mm/s to 22,000 mm/s, more preferably in the range of from 30 mm/s to 19,000 mm/s; and/or

that the reaction of the galvanizing layer takes place at a pressure in the range of from 0.001 mbar to 15 bar, especially in the range of from 0.005 mbar to 12 bar, preferentially in the range of from 0.01 mbar to 11 bar, more preferably in the range of from 0.1 mbar to 10 bar; and/or

that the reaction of the galvanizing layer takes place at a temperature of the reaction gas outside the laser beam in the range of from -50°C to 350°C, especially in the range of from -40°C to 325°C, preferentially in the range of from -30°C to 300°C, more preferably in the range of from -20°C to 200°C.

## Revendications

1. Procédé d'identification et/ou de marquage d'un élément métallique galvanisé à chaud, en particulier un élément en acier, l'élément métallique galvanisé à chaud présentant un matériau de base à base de fer, de préférence de l'acier, et une couche de galvanisation appliquée sur le matériau de base, l'élément métallique galvanisé étant pourvu d'un marquage durable, la couche de galvanisation étant soumise sélectivement à une réaction chimique avec au moins un gaz de réaction, induite par laser, sous l'effet d'un rayonnement laser, uniquement dans une zone prédéterminée du marquage à produire, de sorte qu'une transformation de la couche de galvanisation a lieu sélectivement uniquement dans la zone du marquage et que le produit de transformation résultant de la couche de galvanisation forme le marquage durable, **caractérisé en ce**

    **que** la production du marquage permanent et la transposition de la couche de galvanisation s'effectuent au moins essentiellement sans enlèvement de matière de la couche de galvanisation,

    **que**, lors de la production du marquage permanent, la couche de galvanisation n'est balayée sélectivement que dans une zone prédéfinie du marquage à produire, une ou plusieurs fois, avec un faisceau laser pulsé, de telle manière que des taches lumineuses voisines du faisceau laser se rejoignent sans espace ou se chevauchent,

    **que** la production du marquage durable et le transfert de la couche de galvanisation s'effectuent de telle sorte que la couche de galvanisation n'est pas transférée jusqu'au matériau de base sous-jacent dans la zone du marquage,

    **que** le produit de réaction de la couche de galvanisation formé dans la zone du marquage est choisi parmi le groupe des oxydes, nitrures, carbonates et/ou borures du zinc ainsi que, le cas échéant, d'autres métaux présents dans la couche de galvanisation et

    **que** la réaction de la couche de galvanisation dans la zone du marquage à apposer est induite par laser sous l'effet d'un rayonnement laser avec un rayonnement laser pulsé et que la condition suivante est respectée :

$$0,075 \leq \text{Epsilon} \leq 2.275$$

avec

$$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

où:

$P_p$: puissance de crête de l'impulsion du rayonnement laser sortant [kW]
$P_m$: puissance moyenne du rayonnement laser sortant [W]
t: longueur d'impulsion des impulsions laser [ns],
f: taux de répétition des impulsions laser [kHz]
v: vitesse de balayage à la surface de la couche de galvanisation [mm/s]
d: diamètre du faisceau laser sur la pièce [$\mu$m]
$\alpha$: absorption du rayonnement laser de la couche de galvanisation irradiée [%] dans des conditions normales
$\lambda$: longueur d'onde du rayonnement laser [nm]
$T_v$: point d'ébullition de la couche de galvanisation [K] à pression normale
$c_p$: capacité thermique spécifique de la couche de galvanisation [J/kg K] dans des conditions normales
$\kappa$: conductivité thermique spécifique de la couche de galvanisation [W/m K] dans des conditions normales.

2. Procédé selon la revendication 1,

où la production ou l'application du marquage permanent et/ou la transformation de la couche de galvanisation s'effectuent avec une énergie laser telle et/ou dans des conditions de réaction telles que la couche de galvanisation ne soit pas transformée dans la zone du marquage jusqu'au matériau de base sous-jacent; et/ou
où la production ou l'application du marquage permanent et/ou la transformation de la couche de galvanisation s'effectuent de telle manière, en particulier avec une énergie laser telle que la couche de galvanisation est transformée dans la zone du marquage à 99 % au maximum de son épaisseur, en particulier à 95 % au maximum de son épaisseur, de préférence à 90 % au maximum de son épaisseur, de préférence à 80 % au maximum de son épaisseur, de manière particulièrement préférée à 70 % au maximum de son épaisseur, de manière tout particulièrement préférée à 60 % au maximum de son épaisseur, de manière encore plus préférée à 50 % au maximum de son épaisseur; et/ou
où le gaz de réaction utilisé est choisi parmi le groupe de l'oxygène, de l'azote, des oxydes de carbone et des boranes ainsi que de leurs mélanges et combinaisons, de préférence parmi le groupe de l'oxygène, de l'azote et des oxydes de carbone ainsi que de leurs mélanges et combinaisons; en particulier où le gaz de réaction est utilisé en combinaison avec au moins un gaz non-réactif, en particulier au moins un gaz rare.

3. Procédé selon la revendication 1 ou 2,

où la réaction de la couche de galvanisation conduise à des oxydes, des nitrures, des carbonates et/ou des borures, de préférence des oxydes, des nitrures et/ou des carbonates, en particulier du zinc ainsi que, le cas échéant, d'autres métaux (d'alliage) présents dans la couche de galvanisation; et/ou
où le produit de réaction de la couche de galvanisation formé dans la zone du marquage est choisi parmi le groupe des oxydes, nitrures et/ou carbonates de zinc ainsi que, le cas échéant, d'autres métaux (d'alliage) présents dans la couche de galvanisation; et/ou
où le produit de réaction de la couche de galvanisation formé dans la zone du marquage est de couleur différente de celle de la couche de galvanisation et/ou le marquage est de couleur différente de celle de la couche de galvanisation et/ou pouvant être distingué de la couche de galvanisation par sa couleur; et/ou
où la réaction de la couche de galvanisation dans la zone du marquage à appliquer est commandée au moyen et/ou en fonction de la quantité d'énergie laser agissant, en particulier la puissance d'impulsion laser, la longueur d'impulsion laser, la durée d'impulsion laser, le taux de répétition d'impulsion laser et/ou la longueur d'onde laser, et/ou au moyen et/ou en fonction des conditions de réaction, en particulier la pression, la température et/ou la composition du gaz de réaction; et/ou
où la réaction de la couche de galvanisation s'effectue à une longueur d'onde laser dans la plage de 100 nm à 11 000 nm, en particulier dans la plage de 200 nm à 6000 nm, de préférence dans la plage de 400 nm à 3000 nm, de manière particulièrement préférée dans la plage de 500 nm à 2000 nm; et/ou

où la réaction de la couche de galvanisation s'effectue pour une longueur d'impulsion des impulsions laser dans la plage de 0,1 ns à 2000 ns, en particulier dans la plage de 0,1 ns à 1000 ns, de préférence dans la plage de 0,2 ns à 295 ns, de manière particulièrement préférée dans la plage de 0,5 ns à 195 ns; et/ou

où la réaction de la couche de galvanisation s'effectue à une puissance moyenne du rayonnement laser sortant dans la plage de 5 watts à 30000 watts, en particulier dans la plage de 7,5 watts à 1000 watts, de préférence dans la plage de 10 watts à 1000 watts, de manière particulièrement préférée dans la plage de 10 watts à 500 watts; et/ou

où la réaction de la couche de galvanisation s'effectue à une puissance de crête d'impulsion du rayonnement laser sortant dans la plage de 0,1 kilowatt à 3000 kilowatts, en particulier dans la plage de 1 kilowatt à 2000 kilowatts, de préférence dans la plage de 2 kilowatts à 1800 kilowatts; et/ou

où la réaction de la couche de galvanisation s'effectue à un taux de répétition des impulsions laser dans la plage de 1 kHz à 5000 kHz, en particulier dans la plage de 5 kHz à 4000 kHz, de préférence dans la plage de 10 kHz à 3000 kHz; et/ou

où la réaction de la couche de galvanisation a lieu avec un diamètre du rayonnement laser sur la surface de la couche de galvanisation dans la plage de 1 $\mu$m à 10000 $\mu$m, en particulier dans la plage de 5 $\mu$m à 8000 $\mu$m, de préférence dans la plage de 10 $\mu$m à 6000 $\mu$m, de manière particulièrement préférée dans la plage de 25 $\mu$m à 4000 $\mu$m; et/ou

où la réaction de la couche de galvanisation s'effectue avec une vitesse de balayage laser sur la surface de la couche de galvanisation dans la plage de 10 mm/s à 30000 mm/s, en particulier dans la plage de 20 mm/s à 25000 mm/s, de préférence dans la plage de 25 mm/s à 22000 mm/s, de manière particulièrement préférée dans la plage de 30 mm/s à 19000 mm/s; et/ou

où la réaction de la couche de galvanisation s'effectue à une pression de l'ordre de 0,001 mbar à 15 bars, en particulier de l'ordre de 0,005 mbar à 12 bars, de préférence de l'ordre de 0,01 mbar à 11 bars, de manière particulièrement préférée de l'ordre de 0,1 mbar à 10 bars; et/ou

où la réaction de la couche de galvanisation s'effectue à une température du gaz de réaction à l'extérieur du faisceau laser dans la plage de -50°C à 350°C, en particulier dans la plage de -40°C à 325°C, de préférence dans la plage de -30°C à 300°C, de manière particulièrement préférée dans la plage de -20°C à 200°C.

4. Procédé selon l'une quelconque des revendications précédentes,

où la couche de galvanisation a une épaisseur de 0,5 à 300 $\mu$m, en particulier de 1 à 200 $\mu$m, de préférence de 1,5 à 100 $\mu$m, de préférence de 2 à 30 $\mu$m; et/ou

où la couche de galvanisation est formée de zinc au moins sensiblement pur ou d'un alliage de zinc, de préférence d'un alliage de zinc; et/ou

où la couche de galvanisation est formée d'un alliage de zinc; en particulier, la couche de galvanisation contenant du zinc ainsi que, comme métal d'alliage, de l'aluminium en une quantité de 0,0001 à 25 % en poids, en particulier en une quantité de 0,001 à 20 % en poids, de préférence en une quantité de 0,005 à 17,5 % en poids, de préférence en une quantité de 0,01 à 15 % en poids, de manière particulièrement préférée en une quantité de 0,02 à 12,5 % en poids, de manière tout à fait préférée en une quantité de 0,05 à 10 % en poids, de manière encore plus préférée en une quantité de 0,1 à 8 % en poids, par rapport à la couche de galvanisation; et/ou

où la couche de galvanisation est formée d'un alliage de zinc; en particulier où la couche de galvanisation est une couche de galvanisation alliée à l'aluminium ("couche de galvanisation Zn/Al") et/ou en particulier où la couche de galvanisation contient, par rapport à la couche de galvanisation, une quantité de zinc d'au moins 75 % en poids, en particulier d'au moins 80 % en poids, de préférence d'au moins 85 % en poids, de préférence d'au moins 90 % en poids, et une quantité d'aluminium allant jusqu'à 25 % en poids, de préférence jusqu'à 10 % en poids, en particulier jusqu'à 20 % en poids, de préférence jusqu'à 15 % en poids, de préférence jusqu'à 10 % en poids, ainsi que, le cas échéant, au moins un autre métal, en particulier en quantités allant jusqu'à 5 % en poids et/ou en particulier choisi parmi le groupe du bismuth (Bi), du plomb (Pb), de l'étain (Sn), du nickel (Ni), du silicium (Si), du magnésium (Mg) et de leurs combinaisons, toutes les indications de quantité mentionnées ci-dessus devant être choisies de telle sorte qu'il en résulte au total 100 % en poids.

5. Procédé selon l'une quelconque des revendications précédentes,

où la couche de galvanisation éesttant au moins essentiellement exempte, de préférence totalement exempte, de plomb (Pb) et/ou de nickel (Ni); et/ou

où la couche de galvanisation est au moins essentiellement exempte, de préférence totalement exempte, de métaux lourds choisis parmi le groupe constitué par le plomb (Pb), le nickel (Ni), le cobalt (Co), le manganèse (Mn), l'étain (Sn), le bismuth (Bi) et l'antimoine (Sb); et/ou

où la couche de galvanisation a été produite par galvanisation à chaud.

6. Élément métallique galvanisé à chaud pourvu d'une identification et/ou d'un marquage, en particulier élément en acier, le élément métallique galvanisé présentant un matériau de base à base de fer, de préférence de l'acier, et une couche de galvanisation appliquée sur le matériau de base, l'élément métallique galvanisé étant pourvu d'un marquage durable, la couche de galvanisation ayant été soumise sélectivement à une réaction chimique avec au moins un gaz de réaction uniquement dans une zone prédéfinie du marquage à produire sous l'effet d'un rayonnement laser, de sorte qu'une transformation de la couche de galvanisation n'a eu lieu sélectivement que dans la zone du marquage et que le produit de transformation résultant de la couche de galvanisation forme le marquage durable, **caractérisé en ce**

**que** la production ou l'application du marquage permanent et la transformation de la couche de galvanisation ont été effectuées au moins essentiellement sans enlèvement de matière de la couche de galvanisation et que la production ou l'application du marquage permanent et la transformation de la couche de galvanisation ont été effectuées de telle sorte que la couche de galvanisation n'a pas été transformée jusqu'au matériau de base sous-jacent dans la zone du marquage,

**que**, lors de la production du marquage permanent, la couche de galvanisation a été balayée sélectivement une ou plusieurs fois avec un faisceau laser pulsé uniquement dans une zone prédéfinie du marquage à produire, de telle sorte que des taches lumineuses voisines du faisceau laser se rejoignent ou se chevauchent sans espace, et

**que** le produit de réaction de la couche de galvanisation formé dans la zone du marquage est choisi parmi le groupe des oxydes, nitrures, carbonates et/ou borures du zinc ainsi que, le cas échéant, d'autres métaux présents dans la couche de galvanisation.

7. Élément métallique galvanisé à chaud pourvu d'une identification et/ou d'un marquage selon la revendication 6,

où la production ou l'application du marquage permanent et/ou la transformation de la couche de galvanisation ont été effectuées, en particulier avec une énergie laser telle que la couche de galvanisation est transformée dans la zone du marquage à 99 % au maximum de son épaisseur, en particulier à 95 % au maximum de son épaisseur, de préférence à 90 % au maximum de son épaisseur, de préférence à 80 % au maximum de son épaisseur, de manière particulièrement préférée à 70 % au maximum de son épaisseur, de manière tout particulièrement préférée à 60 % au maximum de son épaisseur, de manière encore plus préférée à 50 % au maximum de son épaisseur; et/ou

où le produit de réaction de la couche de galvanisation formé dans la zone du marquage est choisi parmi le groupe d'oxydes, de nitrures et/ou de carbonates du zinc ainsi que le cas échéant d'autres métaux (d'alliage) présents dans la couche de galvanisation; et/ou

où le produit de réaction de la couche de galvanisation formé dans la zone du marquage est de couleur différente de celle de la couche de galvanisation et/ou où le marquage est de couleur différente de celle de la couche de galvanisation et/ou pouvant être distingué de la couche de galvanisation par sa couleur; et/ou

où la couche de galvanisation a une épaisseur de 0,5 à 300 $\mu$m, en particulier de 1 à 200 $\mu$m, de préférence de 1,5 à 100 $\mu$m, de préférence de 2 à 30 $\mu$m; et/ou

où la couche de galvanisation est formée de zinc au moins sensiblement pur ou d'un alliage de zinc, de préférence d'un alliage de zinc; et/ou

où la couche de galvanisation est au moins essentiellement exempte, de préférence totalement exempte, de plomb (Pb) et/ou de nickel (Ni); et/ou

où la couche de galvanisation est au moins essentiellement exempte, de préférence totalement exempte, de métaux lourds choisis parmi le groupe constitué par le plomb (Pb), le nickel (Ni), le cobalt (Co), le manganèse (Mn), l'étain (Sn), le bismuth (Bi) et l'antimoine (Sb); et/ou

où la couche de galvanisation a été produite par galvanisation à chaud.

8. Installation pour la fabrication d'un élément métallique galvanisé à chaud, en particulier un élément en acier, pourvu d'une identification et/ou d'un marquage, l'élément métallique galvanisé à chaud présentant un matériau de base à base de fer, de préférence de l'acier, et une couche de galvanisation appliquée sur le matériau de base, l'élément métallique galvanisé étant pourvu d'un marquage durable, la couche de galvanisation ayant été soumise sélectivement à une réaction chimique avec au moins un gaz de réaction, induite par laser, sous l'effet d'un rayonnement laser, uniquement dans une zone prédéfinie du marquage à produire, de sorte qu'une réaction de la couche de galvanisation n'a eu lieu sélectivement que dans la zone du marquage et que le produit de réaction résultant de la couche de galvanisation forme le marquage durable,

où l'installation comprend d'une part un dispositif de marquage et/ou d'identification d'une pièce métallique galvanisée à chaud, en particulier d'une pièce en acier, ainsi que d'autre part, en amont du dispositif et/ou en amont du dispositif dans le sens du processus, un dispositif de galvanisation à chaud pour la fabrication d'une pièce métallique galvanisée à chaud, en particulier d'une pièce en acier;

où le dispositif d'identification et/ou de marquage est réalisé au moyen d'un dispositif de commande de telle sorte que la pièce métallique galvanisée soit pourvue d'un marquage durable, le dispositif exposant la couche de galvanisation sélectivement seulement dans une zone prédéfinie du marquage à produire, de manière induite par laser, sous l'effet d'un rayonnement laser, à une réaction chimique avec au moins un gaz de réaction, de telle sorte qu'une transformation de la couche de galvanisation ait lieu sélectivement seulement dans la zone du marquage et que le produit de transformation résultant de la couche de galvanisation forme le marquage durable,

où le dispositif de commande est conçu et/ou prévu pour produire ou appliquer le marquage permanent et pour transformer la couche de galvanisation au moins essentiellement sans enlèvement de matière de la couche de galvanisation et le dispositif de commande est conçu et/ou prévu pour produire ou appliquer le marquage permanent et pour transformer la couche de galvanisation de telle sorte que la couche de galvanisation ne soit pas transformée dans la zone du marquage jusqu'au matériau de base sous-jacent,

où le dispositif de commande est conçu et/ou prévu de telle sorte que, lors de la production du marquage permanent, la couche de galvanisation est balayée sélectivement une ou plusieurs fois avec un faisceau laser pulsé uniquement dans une zone prédéfinie du marquage à produire, de telle sorte que des taches lumineuses voisines du faisceau laser s'entrechoquent ou se chevauchent sans espace,

où le dispositif de commande est conçu et/ou prévu pour la transformation de la couche de galvanisation en oxydes, nitrures, carbonates et/ou borures du zinc ainsi que, le cas échéant, d'autres métaux présents dans la couche de galvanisation et

où le dispositif de commande est conçu et/ou prévu de telle sorte que la réaction de la couche de galvanisation dans la zone du marquage à apposer s'effectue par induction laser sous l'effet d'un rayonnement laser avec un rayonnement laser pulsé, la condition suivante étant respectée:

$$0{,}075 \leq \text{Epsilon} \leq 2.275$$

avec

$$\text{Epsilon} = 10^3 \bullet \frac{[\,(P_p)^2 \bullet (\sqrt{P_m}) \bullet f \bullet \alpha \bullet (\sqrt{t}) \bullet (\sqrt{\kappa})\,]}{[\,d^2 \bullet (\sqrt{v}) \bullet (\sqrt{T_v}) \bullet (\sqrt{c_p}) \bullet (\sqrt{\lambda})\,]}$$

où :

$P_p$: Puissance de crête de l'impulsion du rayonnement laser sortant [kW]
$P_m$: puissance moyenne du rayonnement laser sortant [W]
$t$: longueur d'impulsion des impulsions laser [ns]
$f$: taux de répétition des impulsions laser [kHz]
$v$: vitesse de balayage à la surface de la couche de galvanisation [mm/s]
$d$: diamètre du faisceau laser sur la pièce [$\mu$m]
$\alpha$: absorption du rayonnement laser de la couche de galvanisation irradiée [%] dans des conditions normales
$\lambda$: longueur d'onde du rayonnement laser [nm]
$T_v$: point d'ébullition de la couche de galvanisation [K] à pression normale
$c_p$: capacité thermique spécifique de la couche de galvanisation [J/kg K] dans des conditions normales
$\kappa$: conductivité thermique spécifique de la couche de galvanisation [W/m K] dans des conditions normales.

9. Installation selon la revendication 8,
où l'appareil de galvanisation à chaud comprenant les dispositifs de traitement suivants dans l'ordre indiqué ci-dessous:

(A) au moins un dispositif de dégraissage, en particulier au moins un bain de dégraissage, pour le traitement de dégraissage, de préférence alcalin, de pièces métalliques ; en aval de (A) dans le sens du processus ou en aval de (A)

(B) le cas échéant, au moins un dispositif de rinçage, en particulier au moins un bain de rinçage, pour le rinçage de composants métalliques dégraissés dans le dispositif de dégraissage (A); en aval ou en aval de (B) dans le sens du processus

(C) au moins un dispositif de décapage, en particulier au moins un bain de décapage, pour le traitement de décapage, de préférence acide, de composants métalliques dégraissés dans le dispositif de dégraissage (A) et éventuellement rincés dans le dispositif de rinçage (B); en aval ou en aval de (C) dans le sens du processus

(D) le cas échéant, au moins un dispositif de rinçage, en particulier au moins un bain de rinçage, pour le rinçage de composants métalliques décapés dans le dispositif de décapage (C); en aval dans le sens du processus ou en aval de (D)

(E) au moins un dispositif de traitement de flux pour le traitement de flux de composants métalliques décapés dans le dispositif de décapage (C) et éventuellement rincés dans le dispositif de rinçage (D), le dispositif de traitement de flux présentant au moins un bain de flux avec une composition de flux; en aval dans le sens du processus ou en aval de (E)

(F) le cas échéant, au moins un dispositif de séchage pour sécher des composants métalliques soumis à un traitement par flux dans le dispositif de traitement par flux (E); en aval ou en aval de (F) dans le sens du processus

(G) au moins un dispositif de galvanisation à chaud pour la galvanisation à chaud de composants métalliques soumis à un traitement par flux dans le dispositif de traitement par flux (E) et éventuellement séchés dans le dispositif de séchage (F), le dispositif de galvanisation à chaud présentant au moins un bain de galvanisation contenant une masse fondue de zinc éventuellement alliée à au moins un autre métal, de préférence pour (immerger) des composants métalliques dans le bain de galvanisation; en aval ou en aval de (G) dans le sens du processus

(H) le cas échéant, au moins un dispositif de refroidissement pour refroidir les composants métalliques galvanisés à chaud dans le dispositif de galvanisation à chaud (F), en particulier en présence d'air; en aval de (H) dans le sens du processus ou en aval de (H)

(I) le cas échéant, au moins un dispositif de traitement ultérieur et/ou de post-traitement pour le traitement ultérieur et/ou le post-traitement des composants métalliques galvanisés à chaud et le cas échéant refroidis, le dispositif d'identification et/ou de marquage des composants métalliques galvanisés à chaud étant disposé en aval de (H) dans le sens du processus ou en aval de (H), mais en amont de (I), ou bien le dispositif d'identification et/ou de marquage des composants métalliques galvanisés à chaud étant disposé en aval de (I) dans le sens du processus ou en aval de (I).

**10.** Installation selon la revendication 8

où le dispositif de commande pour la production ou l'application du marquage durable et/ou pour la transformation de la couche de galvanisation est conçu et/ou prévu de telle sorte, en particulier en fonction de l'énergie laser et/ou en fonction des conditions de réaction, que la couche de galvanisation est transformée dans la zone du marquage à 99 % au maximum de son épaisseur, en particulier à 95 % au maximum de son épaisseur, de préférence à 90 % au maximum de son épaisseur, de préférence à 80 % au maximum de son épaisseur, de manière particulièrement préférée à 70 % au maximum de son épaisseur, de manière tout particulièrement préférée à 60 % au maximum de son épaisseur, de manière encore plus préférée à 50 % au maximum de son épaisseur; et/ou

où le dispositif de commande est conçu et/ou prévu de telle sorte que le gaz de réaction utilisé puisse être choisi parmi le groupe de l'oxygène, de l'azote, des oxydes de carbone et des boranes ainsi que de leurs mélanges et combinaisons, de préférence parmi le groupe de l'oxygène, de l'azote et des oxydes de carbone ainsi que de leurs mélanges et combinaisons, éventuellement en combinaison avec au moins un gaz non réactif, en particulier au moins un gaz rare; et/ou

où le dispositif de commande est conçu et/ou prévu pour la transformation de la couche de galvanisation en oxydes, nitrures et/ou carbonates de zinc ainsi que, le cas échéant, en d'autres métaux (d'alliage) présents dans la couche de galvanisation; et/ou

où le dispositif de commande est conçu et/ou prévu de telle sorte que la réaction de la couche de galvanisation dans la zone du marquage à appliquer peut être commandée au moyen et/ou en fonction de la quantité d'énergie laser agissant, en particulier la puissance d'impulsion laser, la longueur d'impulsion laser, la durée d'impulsion laser, le taux de répétition d'impulsion laser et/ou la longueur d'onde laser, et/ou au moyen et/ou en fonction des conditions de réaction, en particulier la pression, la température et/ou la composition du gaz de réaction.

**11.** Installation selon l'une quelconque des revendications précédentes, où le dispositif de commande est conçu et/ou prévu de telle manière,

en ce que la réaction de la couche de galvanisation a lieu à une longueur d'onde de laser dans la plage de 100 nm à 11000 nm, en particulier dans la plage de 200 nm à 6000 nm, de préférence dans la plage de 400 nm à 3000 nm, de manière particulièrement préférée dans la plage de 500 nm à 2000 nm; et/ou

en ce que la réaction de la couche de galvanisation a lieu pour une longueur d'impulsion des impulsions laser dans la plage de 0,1 ns à 2000 ns, en particulier dans la plage de 0,1 ns à 1000 ns, de préférence dans la plage de 0,2 ns à 295 ns, de manière particulièrement préférée dans la plage de 0,5 ns à 195 ns; et/ou

en ce que la réaction de la couche de galvanisation a lieu à une puissance moyenne du rayonnement laser sortant dans la plage de 5 watts à 30000 watts, en particulier dans la plage de 7,5 watts à 1000 watts, de préférence dans la plage de 10 watts à 1000 watts, de manière particulièrement préférée dans la plage de 10 watts à 500 watts; et/ou

en ce que la réaction de la couche de galvanisation a lieu pour une puissance de crête d'impulsion du rayonnement laser sortant dans la plage de 0,1 kilowatt à 3000 kilowatts, en particulier dans la plage de 1 kilowatt à 2000 kilowatts, de préférence dans la plage de 2 kilowatts à 1800 kilowatts; et/ou

en ce que la réaction de la couche de galvanisation a lieu à un taux de répétition des impulsions laser dans la plage de 1 kHz à 5000 kHz, en particulier dans la plage de 5 kHz à 4000 kHz, de préférence dans la plage de 10 kHz à 3000 kHz; et/ou

en ce que la réaction de la couche de galvanisation a lieu avec un diamètre du rayonnement laser sur la surface de la couche de galvanisation dans la plage de 1 $\mu$m à 10000 $\mu$m, en particulier dans la plage de 5 $\mu$m à 8000 $\mu$m, de préférence dans la plage de 10 $\mu$m à 6000 $\mu$m, de manière particulièrement préférée dans la plage de 25 $\mu$m à 4000 $\mu$m; et/ou

en ce que la réaction de la couche de galvanisation s'effectue avec une vitesse de balayage laser sur la surface de la couche de galvanisation dans la plage de 10 mm/s à 30000 mm/s, en particulier dans la plage de 20 mm/s à 25000 mm/s, de préférence dans la plage de 25 mm/s à 22000 mm/s, de manière particulièrement préférée dans la plage de 30 mm/s à 19000 mm/s; et/ou

en ce que la réaction de la couche de galvanisation s'effectue à une pression de l'ordre de 0,001 mbar à 15 bar, en particulier de l'ordre de 0,005 mbar à 12 bar, de préférence de l'ordre de 0,01 mbar à 11 bar, de manière particulièrement préférée de l'ordre de 0,1 mbar à 10 bar; et/ou

que la réaction de la couche de galvanisation a lieu à une température du gaz de réaction à l'extérieur du faisceau laser dans la plage de -50 °C à 350 °C, en particulier dans la plage de -40 °C à 325 °C, de préférence dans la plage de -30 °C à 300 °C, de manière particulièrement préférée dans la plage de -20 °C à 200 °C.

Entfettung → Spülen → Beizen → Spülen → Flussmittel-behandlung → Trocknung

Schritt a) | Schritt b) | Schritt c) | Schritt d) | Schritt e) | Schritt f)

Feuer-verzinkung

Schritt g)

Abkühlen

Schritt h)

Nachbearbeitung/ Nachbehandlung

Schritt i)

Fig. 1

Fig. 2

Fig. 3A

Fig. 3B

Fig. 3C

EP 3 363 576 B1

Fig. 4A

Fig. 4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2829757 A1
- EP 1975340 A2
- CA 2379397 A1
- US 2016201184 A1
- EP 1209245 A1
- DE 202014101805 U1
- US 2015049593 A1
- US 5860204 A
- WO 2002042512 A1
- EP 1352100 B1
- DE 60124767 T2
- US 20030219543 A1
- WO 2014170551 A1
- US 20160144457 A1